(19) Europäisches Patentamt / European Patent Office / Office européen des brevets

(11) **EP 4 268 601 A1**

(12) **EUROPEAN PATENT APPLICATION**
published in accordance with Art. 153(4) EPC

(43) Date of publication:
**01.11.2023 Bulletin 2023/44**

(21) Application number: **21915340.0**

(22) Date of filing: **28.12.2021**

(51) International Patent Classification (IPC):
**A23F 3/16** (2006.01)    **A23L 27/00** (2016.01)
**A23L 2/60** (2006.01)    **A23L 2/00** (2006.01)
**A23L 2/02** (2006.01)    **A23L 2/52** (2006.01)

(52) Cooperative Patent Classification (CPC):
**A23F 3/16; A23L 2/00; A23L 2/02; A23L 2/52;
A23L 2/60; A23L 27/00**

(86) International application number:
**PCT/JP2021/048992**

(87) International publication number:
**WO 2022/145482 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 28.12.2020 JP 2020218723
03.09.2021 JP 2021144349

(71) Applicant: **Suntory Holdings Limited
Osaka 530-8203 (JP)**

(72) Inventors:
• **YOSHIDA, Junki
Kawasaki-shi, Kanagawa 211-0067 (JP)**

• **OHKURI, Tadahiro
Kawasaki-shi, Kanagawa 211-0067 (JP)**
• **TERAMOTO, Yuki
Kawasaki-shi, Kanagawa 211-0067 (JP)**
• **YAMASHITA, Jumpei
Kawasaki-shi, Kanagawa 211-0067 (JP)**
• **NAGAO, Koji
Kawasaki-shi, Kanagawa 211-0067 (JP)**
• **YOKOO, Yoshiaki
Kawasaki-shi, Kanagawa 211-0067 (JP)**

(74) Representative: **Mewburn Ellis LLP
Aurora Building
Counterslip
Bristol BS1 6BX (GB)**

(54) **ORAL COMPOSITION HAVING INCREASED SWEETNESS**

(57)    Provided is an oral composition comprising (a) a high-intensity sweetener in an amount corresponding to a sweetness intensity X1, (b) 60 mg/100 mL or less of sodium, and (c) a phospholipid in an amount less than a taste recognition threshold, wherein the oral composition has a sweetness of a sweetness intensity X2 exhibited by the components (a) to (c), respectively, and 0.1 < X1 < X2 is satisfied.

**Description**

TECHNICAL FIELD

The present invention relates to an oral composition with an enhanced sweetness, a method for producing such an oral composition, a method for enhancing the sweetness of an oral composition, a concentrate for providing an oral composition, etc.

BACKGROUND ART

Humans have five sensory systems, and the sense of taste is one of the sensory systems of humans. The taste receptor organ to receive tastes is called taste buds, which exist on the fungiform papillae existing over a wide area, mainly on the tip of the tongue, on the vallate papillae existing on a limited area of the back of the tongue, and on the foliate papillae. The taste buds are a cell assembly composed of elongate cells, called taste cells, and basal cells. The taste cells protrude microvilli toward the tongue surface, and form synapses at bottom of the cells with taste nerve fibers entering the taste buds. Tastes we usually sense are transmitted as taste information via the taste nerves to the brain, where the tastes are perceived. Known taste receptors of sweetness include T1R2 and T1R3. T1R2 and T1R3 are reported to form heterodimers (Non-patent Literatures 1 to 3).

Although various studies have been made on the sense of taste, little has been revealed yet in this field. We usually experience various tastes of foods. Foods that seem to be tasty have appropriately mixed and well-harmonized tastes. The taste of foods may be tasted as a single taste in some cases, but is often tasted as a mixed taste of various tastes, which are associated with one another.

Meanwhile, foods have been required to have lower calories in addition to a good taste in recent years. This relates to a fact that lifestyle-related diseases such as obesity and diabetes are regarded as a problem. However, to produce lower-calorie foods, their sugar concentration has to be maintained low. This is an obstruction in the case of providing foods that exhibit low calories and a good taste. In order to overcome such a problem, attempts have been made to increase a sweetness provided by a sweetener (Patent Literatures 1 to 11).

CITATION LIST

PATENT LITERATURE

Patent Literature 1: WO 2018/225817
Patent Literature 2: WO 2020/116624
Patent Literature 3: WO 2020/116626
Patent Literature 4: WO 2020/116627
Patent Literature 5: WO 2020/116628
Patent Literature 6: WO 2020/116633
Patent Literature 7: WO 2020/116634
Patent Literature 8: WO 2020/116637
Patent Literature 9: WO 2020/116638
Patent Literature 10: WO 2020/116639
Patent Literature 11: WO 2020/116641

NON-PATENT LITERATURE

Non-Patent Literature 1: Zhao G. Q., Zhang Y., Hoon M. A., Chandrashekar J., Erlenbach I., Ryba N. J. P., and Zuker1 C. S., Cell, 2003, Vol. 115, 255-266
Non-Patent Literature 2: Li X, Staszewski L, Xu H, Durick K, Zoller M, Adler E., Proc Natl Acad Sci USA. 2002,99(7), 4692-4696.
Non-Patent Literature 3: Fernstrom J. D., Munger S. D., Sclafani A., de Araujo 1. E., Roberts A., and Molinary S., J. Nutr. 2012. Vol. 142: 11345-11415

SUMMARY OF INVENTION

TECHNICAL PROBLEM

Under the above circumstances, the development of a further method capable of enhancing a sweetness of a sweetener has been much awaited.

MEANS FOR SOLVING THE PROBLEMS

The present inventors succeeded for the first time in enhancing a sweetness of a high-intensity sweetener by containing sodium and a phospholipid in a concentration so low as to not be detectable by the human.
That is, the present invention comprises inventions of the following embodiments.

[1] An oral composition comprising:

(a) a high-intensity sweetener in an amount corresponding to a sweetness intensity X1,
(b) 60 mg/100 mL or less of sodium, and
(c) a phospholipid in an amount less than a taste recognition threshold,

wherein the oral composition has a sweetness of a sweetness intensity X2 exhibited by the components (a) to (c), and $0.1 < X1 < X2$ is satisfied.
[2] The oral composition according to [1], wherein the phospholipid has a fatty acid having 14 or more carbon atoms.
[3] The oral composition according to [1] or [2], having a sweetness of a sweetness intensity X3 exhibited by the components (a) and (b), wherein $0.1 < X1 < X3 < X2$ is satisfied.
[4] The oral composition according to any one of [1] to [3], further comprising a low-intensity sweetener.
[5] The oral composition according to any one of [1] to [4], wherein the high-intensity sweetener comprises a high-intensity sweetener selected from a stevia extract, a Luo han guo extract, a steviol glycoside, a mogroside, and a combination thereof.
[6] The oral composition according to [4] or [5], wherein the low-intensity sweetener comprises a low-intensity sweetener selected from glucose, sucrose, fructose, maltose, a high-fructose corn syrup, lactose, psicose, allose, tagatose, xylose, ribose, and a combination thereof.
[7] The oral composition according to any one of [1] to [6], which is a beverage.
[7-1] The oral composition according to [7], wherein the beverage is selected from a fruit- and vegetable-based beverage, a flavored water, a tea-based beverage, and a carbonated beverage.
[8] A method for producing the oral composition according to any one of [1] to [7] and [7-1] comprising:

(a) adding the high-intensity sweetener in an amount corresponding to a sweetness intensity X1,
(b) adding the sodium to obtain a sodium content in the composition of 60 mg/100 mL or less, and
(c) adding the phospholipid in an amount less than a taste recognition threshold.

[9] A method for enhancing a sweetness of an oral composition provided by a high-intensity sweetener, the method comprising, in a production of an oral composition:

(a) adding a high-intensity sweetener in an amount of a taste recognition threshold or more,
(b) adding sodium to obtain a sodium content in the composition of 60 mg/100 mL or less, and
(c) adding a phospholipid in an amount less than a taste recognition threshold.

[10] An oral composition comprising:

(a) about 20 to about 600 ppm of a high-intensity sweetener,
(b) 60 mg/100 mL or less of sodium, and
(c) less than about 250 $\mu$g/mL of a phospholipid.

ADVANTAGEOUS EFFECTS OF INVENTION

The present invention provides an oral composition having, not a plain sweetness obtained by an additional amount of a high-intensity sweetener used, but an enhanced sweetness and texture.

BRIEF DESCRIPTION OF DRAWINGS

FIG. 1 illustrates graphs of the concentration of free fatty acid in respective lipid samples.
FIG. 2 illustrates graphs of normalized peak area values of LPC in the respective lipid samples.
FIG. 3 illustrates graphs of normalized peak area values of PC in the respective lipid samples.
FIG. 4 is a diagram illustrating increase of texture of sweet beverages containing rebaudioside D caused by phospholipids respectively from soybean (A), oil palm (B), rapeseed (C), and sunflower (D), and sodium.
FIG. 5 is a diagram illustrating increase of texture of sweet beverages containing mogroside V caused by phospholipids from soybean and sodium.
FIG. 6 is a diagram illustrating increase of texture of sweet beverages containing rebaudioside D caused by phospholipids from soybean.

DESCRIPTION OF EMBODIMENTS

Hereinafter, the present invention will be described in detail. The following embodiments are examples to describe the present invention and do not intend to limit the present invention only to these embodiments. The present invention can be carried out in various embodiments without departing from the spirit of the present invention.

Note that all of the literatures, laid-open publications, patent publications, and other patent literatures cited herein are deemed to be incorporated by reference into the present description. The present specification incorporates the contents of the specifications and the drawings of Japanese Patent Applications No. 2020-218723 filed on December 28, 2020, and Japanese Patent Applications No. 2021-144349, filed on September 3, 2021, from which the present application claims priority.

As used herein, for example, the designation "content of a component A is X mg/100 mL" regarding a beverage means that "X mg of a component A is contained in 100 mL of a beverage". A specific gravity of a beverage is approximately 1, and thus "mg/100 g" in a beverage is considered to be the same as "mg/100 mL". When it is not suitable to use the volume as the denominator of the unit, such as in case of a solid composition, the denominator shall be replaced by the mass (for example, "mg/100 mL" shall be replaced by "mg/100 g"). For example, the designation "content of a component B is Y ppm" regarding a beverage means that "Y ppm of a component B is contained with respect to the total amount (100 mass%) of a beverage".

1. Oral composition in which sweetness exhibited by high-intensity sweetener is increased

The present invention provides the following oral composition (hereinafter referred to as "the oral composition of the present invention") as the first embodiment.

An oral composition comprising:

(a) a high-intensity sweetener in an amount corresponding to a sweetness intensity X1,
(b) 60 mg/100 mL or less of sodium, and
(c) a phospholipid in an amount less than a taste recognition threshold,

wherein the oral composition has a sweetness of a sweetness intensity X2 exhibited by the components (a) to (c), and $0.1 < X1 < X2$ is satisfied.

In other words, in the oral composition of the present invention, the component having a sweetness is (a) a sweetener having a high-intensity sweetness in an amount corresponding to a sweetness intensity X1, and the sweetness of the oral composition of the present invention is supposed to be a sweetness intensity X1 when calculated. However, the presence of (b) sodium of less than or equal to 60 mg/100 mL and (c) a phospholipid in an amount less than a taste recognition threshold, in the oral composition even in low concentrations enhances the sweetness of (a) a sweetener having a high-intensity sweetness in an amount corresponding to a sweetness intensity X1 to a sweetness intensity X2 ($0.1 < X1 < X2$ is satisfied herein). The present invention can comprise, in addition to these components (a) to (c), additional components such as a sweetener other than the component (a), an acidulant, a flavor, a vitamin, pigments, an antioxidant, a preservative, a seasoning, an extract, a pH adjuster, and a quality stabilizer. The oral composition of an embodiment of the present invention does not contain a sweet component as a sweetener in addition to (a) a high-intensity sweetener in an amount corresponding to a sweetness intensity X1. The oral composition of another embodiment of the present invention may contain a sweet component as a sweetener in addition to (a) a high-intensity sweetener in an amount corresponding to a sweetness intensity X1.

[Oral composition]

As used herein, the "oral composition" is a solid, a fluid, a liquid, or a mixture of these, and a general term for any orally eatable compositions. The oral composition of the present invention encompasses foods and the foods encompass beverages. Examples of the oral composition of the present invention include general foods, nutritionally supplementary foods, health foods, functional foods, foods for toddler, and foods for the aged. The oral composition may be a semisolid or a semifluid.

The nutritionally supplementary foods refer to foods with a fortified specific nutritional component. The health foods refer to foods considered to be healthy or beneficial to health and include nutritionally supplementary foods, natural foods, and diet foods. The functional foods refer to foods to supply nutritional components serving regulatory functions of the body and have the same definition as food for specified health use. The foods for toddler refer to foods to feed children aged up to about 6 years old. The foods for the aged refer to foods treated for easier digestion and absorption when compared with untreated foods.

The form of the oral composition is not particularly limited and can be in various forms. Examples of the form include beverages, snacks, and supplements. The beverage can be an alcoholic beverage or non-alcoholic beverage. Examples of the non-alcoholic beverage include non-alcoholic beers, malt beverages, probiotic beverages, cocoas, isotonic beverages, nutrient beverages, tea-based beverages, coffee beverages, carbonated beverages, functional beverages, fruit- and vegetable-based beverages, milk-based beverages, and flavored waters, but not limited thereto.

The non-alcoholic beers as used herein mean carbonated beverages having a beer-like flavor and are non-fermented non-alcoholic type substantially free of alcohols. The non-alcoholic beers herein do not exclude beverages containing alcohol in a so extremely small amount that cannot be detected.

The tea-based beverage includes a processed product that is produced using raw leaves harvested from a tea plant (scientific name: Camellia sinensis) as a raw material. Examples thereof include green tea, powdered green tea, oolong tea, English tea and pu-erh tea. Alternatively, the tea-based beverage also includes a processed product that is produced using a collected raw material other than the tea plant, and called non-tea plant-derived tea such as barley tea, hydrangea tea, bitter gourd tea, coca tea, rooibos tea, silver vine tea, Gynostemma pentaphyllum tea, Coix lacryma-jobi var. mayuen tea, Yuzu tea, honeybush tea, citrus fruit peel tea, doku-dami tea, kuma bamboo grass tea, bamboo tea, herb tea, kelp tea, plum kelp tea, mate tea, buckwheat tea, senna tea, Chinese blackberry tea, perilla tea, luo han tea or shiitake mushroom tea.

Preferably, the tea-based beverage is a processed product that is produced using raw leaves harvested from a tea plant (scientific name: Camellia sinensis) as a raw material. The raw leaves that can be used in the present invention are not limited by their cultivar, area of production, cultivation method, tea-picking season and the like as long as they are leaves of the tea plant. Examples of the cultivar of the tea plant can include Yabukita, Yutakamidori, Okumidori, Sayamakaori, Kanayamidori, Saemidori and Asatsuyu. Examples of the area of production include, Shizuoka, Kagoshima, Mie, Kumamoto, Fulwoka, Kyoto, Miyazaki and Saitama, Japan. Examples of the cultivation method can include open culture, cover culture and Gyokuro tea culture. Examples of the tea-picking season can include the first picked tea, the second picked tea, the third picked tea, the fourth picked tea, winter, spring, and autumn Bancha (coarse green tea), and Kariban (late bud picking).

The tea beverage that is produced using leaves of the tea plant involves the step of heating freshly picked raw leaves with steam, followed by drying to obtain crude tea; the step of subjecting the crude tea to operations such as firing and sorting to obtain refined tea; an extraction step of extracting the refined tea with warmed water or the like; a coarse filtration step of removing an extraction residue from the liquid extract; a cooling step of cooling the liquid extract; a filtration step of removing a fine solid content from the liquid extract; a preparation step of obtaining a preparation by adding water, a green tea extract, an antioxidant, a pH adjuster and the like to the liquid extract; and a sterilization step of sterilizing the preparation. However, these steps are mere examples and are not limited thereto. For example, the order of the steps can be changed, another step can be added thereto, or some of the steps can be omitted. Examples of the step to be added include the step of milling refined tea in a mortar or the like when the tea beverage is a powdered green tea beverage.

An oolong tea beverage can be produced by using semifermented tea leaves obtained by semifermenting raw leaves. An English tea beverage can be produced by using fermented tea leaves. A black tea beverage such as pu-erh tea can be produced by using tea leaves obtained by fermenting green tea which is nonfermented tea with a microbe such as mold. A general tea plant cultivar can be used in such production.

Tea leaves derived from leaves of the tea plant and tea leaves for non-tea plant-derived teas can be mixed for use.

The produced green tea, oolong tea, English tea, black tea, or the like can be used alone as a tea beverage or can be appropriately mixed at a preferable ratio to prepare a mixed tea beverage. Further, a liquid extract of a cereal, an herb or the like can be added to a tea beverage produced from a tea leaf liquid extract thereof to prepare a tea beverage.

The tea-based beverage preferably contains polyphenol. The polyphenol includes polyphenol derived from a raw material such as tea leaves, leaves of non-tea plant-derived tea, a cereal or an herb, or polyphenol that is optionally added as a food additive. Examples thereof include anthocyanin, resveratrol, isoflavone, lignan, hesperidin, curcumin, catechin, tannin, proanthocyanin, rutin, chlorogenic acid, ellagic acid, coumarin, and procyanidin. The content of polyphenol is preferably 200 to 600 ppm, and particularly 300 to 500 ppm with respect to the total amount (100 mass%) of the tea beverage. The polyphenol content can be measured by any generally known method, but is preferably measured by a Folin-Denis method. The content of a catechin as polyphenol is preferably 200 to 600 ppm, and particularly 300 to 500 ppm with respect to the total amount (100 mass%) of the tea beverage. The catechin is preferably catechin, epicatechin, gallocatechin, epigallocatechin, epigallocatechin gallate, gallocatechin gallate, epicatechin gallate and catechin gallate. High-performance liquid chromatography is preferable as a method for measuring the catechin.

When the composition of the present invention is a tea-based beverage, it is preferable to be an English tea-based beverage or a sugar-free tea beverage. Examples of the sugar-free tea beverage include green tea beverages, oolong tea beverages, roasted barley tea beverages, roasted brown rice tea beverages, tear grass tea beverages, and sugar-free English tea beverages. The coffee beverages can be either packed-in-container coffees or liquid coffees

The carbonated beverage is a beverage containing a carbon dioxide gas. A carbon dioxide gas encompasses a carbon dioxide gas separately injected into the beverage, and a carbon dioxide gas generated by fermentation of some of raw materials. The carbonated beverage is not particularly limited, and examples thereof include soft beverages, non-alcoholic beverages, and alcoholic beverages. Specific examples include sparkly beverages, colas, diet colas, cola-flavored beverages, clear carbonated beverages, ginger ales, ciders, carbonated beverages containing milk, sugar-free carbonated beverages, fruit juice-based carbonated beverages, fruit juice flavor carbonated beverages, and carbonated water to which fruit juice flavors are imparted, but not limited thereto.

The gas pressure of the carbonated beverage is not particularly limited, and can be 2.2 to 4.0 $kgf/cm^2$, 2.2 to 3.5 $kgf/cm^2$, 2.2 to 3.3 $kgf/cm^2$, 2.2 to 3.2 $kgf/cm^2$, 2.3 to 4.0 $kgf/cm^2$, 2.3 to 3.5 $kgf/cm^2$, 2.3 to 3.2 $kgf/cm^2$, 3.0 to 4.0 $kgf/cm^2$, or 3.0 to 3.5 $kgf/cm^2$. The content of gas in the carbonated beverage can be determined by the gas pressure. As used herein, the "gas pressure" refers to, unless particularly noted, the gas pressure of a carbon dioxide gas in the carbonated beverage in a container. The gas pressure can be measured by fixing the beverage at a liquid temperature of 20°C, to a gas internal pressure meter, once draining a carbon dioxide gas in a headspace by atmospheric relief with opening of a stopper cock of the gas internal pressure meter and then closing again the stopper cock, and reading a value at which an indicator reaches a certain position during shaking and moving of the gas internal pressure meter. The gas pressure of the carbonated beverage is herein measured with the above method, unless particularly described.

The flavor of the carbonated beverage is not particularly limited, and may be adjusted to various flavors. For example, the carbonated beverage may be an orange-flavored, lemon-flavored, lime-flavored, grape-flavored, ginger ale-flavored, energy drink-flavored, blackcurrant-flavored, or cola-flavored beverage. The flavor of the carbonated beverage can be adjusted by adding a component which is approved as a food additive such as a fruit juice, an acidulant, a flavor, a plant extract, a milk content, and other flavor, or which, even if not approved, has been eaten since early times and is commonly recognized to be safe. In an embodiment, the carbonated beverage is not a beer taste beverage. The carbonated beverage may be a jelly beverage. The form of the carbonated beverage is not limited, and may be, for example, a carbonated beverage form packed in a container, which is contained and packed in a container such as a can, a bottle, or a PET bottle.

It is preferable for the form of carbonated beverages to be cola-flavored beverages, clear carbonated beverages, ginger ales, fruit juice-based carbonated beverages, or carbonated beverages containing milk or sugar-free carbonated beverage. The functional beverages include isotonic beverages, energy beverages, health support dinks and jelly beverages in pouch.

Examples of the fruit- and vegetable-based beverage include 100% fruit juice beverages, beverages containing fruits, soft beverages containing a low concentration of a fruit juice, fruit grains-containing fruit beverages, and beverages with flesh of fruits. The milk-based beverages include probiotic beverages, soft beverages containing milk, and the like. Specific examples of the fruit- and vegetable-based beverage include "fruit beverages" defined in "the Fair Competition Codes concerning labelling of fruit beverages" implemented in 2018, and "fruit juices", "fruit-mixed juices", "fruit grain-containing fruit juices", "fruit-vegetable-mixed juices", "fruit juice-containing beverages" and "fruit juice-containing jelly beverages" defined in "Ordinance for Enforcement of the Fair Competition Codes concerning labelling of fruit beverages" implemented in 2016.

A beverage in which a proportion of use of a fruit juice is less than 10%, classified into "other beverages" in the Codes, is also encompassed in the fruit- and vegetable-based beverage of the present invention as long as it is a beverage containing a fruit or vegetable juice.

A fruit juice contained in the fruit- and vegetable-based beverage of the present invention is not particularly limited, and is, for example, from one or more selected from orange, tangerine, lemon, grapefruit, lime, pineapple, strawberry, raspberry, blueberry, blackcurrant, cranberry, blueberry, guava, banana, acerola, papaya, passion fruit, mango, apple, grape, peach, ume, pear, apricot, plum, melon, kiwifruit, and quince. A straight fruit juice, a concentrated fruit juice, or the like can be used for the fruit juice, regardless of a production method. The concentrated fruit juice may be prepared by any of a heating concentration method and a cooling concentration method.

A fruit juice percentage of the fruit- and vegetable-based beverage can be, depending on an embodiment, 1 to 100%, 5 to 100%, 10 to 100%, 15 to 100%, 20 to 100%, 25 to 100%, 30 to 100%, 35 to 100%, 40 to 100%, 45 to 100%, 50 to 100%, 55 to 100%, 60 to 100%, 65 to 100%, 70 to 100%, 1 to 95%, 4 to 95%, 5 to 95%, 10 to 95%, 15 to 95%, 20 to 95%, 25 to 95%, 30 to 95%, 35 to 95%, 40 to 95%, 45 to 95%, 50 to 95%, 55 to 95%, 60 to 95%, 65 to 95%, 70 to 95%, 1 to 90%, 5 to 90%, 10 to 90%, 15 to 90%, 20 to 90%, 25 to 90%, 30 to 90%, 35 to 90%, 40 to 90%, 45 to 90%, 50 to 90%, 55 to 90%, 60 to 90%, 65 to 90%, 70 to 90%, 1 to 85%, 5 to 85%, 10 to 85%, 15 to 85%, 20 to 85%, 25 to 85%, 30 to 85%, 35 to 85%, 40 to 85%, 45 to 85%, 50 to 85%, 55 to 85%, 60 to 85%, 65 to 85%, 70 to 85%, 1 to 80%, 5 to 80%, 10 to 80%, 15 to 80%, 20 to 80%, 25 to 80%, 30 to 80%, 35 to 80%, 40 to 80%, 45 to 80%, 50 to 80%, 55 to 80%, 60 to 80%, 65 to 80%, 70 to 80%, 1 to 75%, 5 to 75%, 10 to 75%, 15 to 75%, 20 to 75%, 25 to 75%, 30 to 75%, 35 to 75%, 40 to 75%, 45 to 75%, 50 to 75%, 55 to 75%, 60 to 75%, 65 to 75%, 1 to 70%, 5 to 70%, 10 to 70%, 15 to 70%, 20 to 70%, 25 to 70%, 30 to 70%, 35 to 70%, 40 to 70%, 45 to 70%, 50 to 70%, 55 to 70%, 60 to 70%, 1 to 65%, 5 to 65%, 10 to 65%, 15 to 65%, 20 to 65%, 25 to 65%, 30 to 65%, 35 to 65%, 40 to 65%, 45 to 65%, 50 to 65%, 55 to 65%, 1 to 60%, 5 to 60%, 10 to 60%, 15 to 60%, 20 to 60%, 25 to 60%, 30 to 60%, 35 to 60%, 40 to 60%, 45 to 60%, 50 to 60%, 1 to 55%, 5 to 55%, 10 to 55%, 15 to 55%, 20 to 55%, 25 to 55%, 30 to 55%, 35 to 55%, 40 to 55%, 45 to 55%, 1 to 50%, 5 to 50%, 10 to 50%, 15 to 50%, 20 to 50%, 25 to 50%, 30 to 50%, 35 to 50%, 40 to 50%, 1 to 45%, 5 to 45%, 10 to 45%, 15 to 45%, 20 to 45%, 25 to 45%, 30 to 45%, 35 to 45%, 1 to 40%, 5 to 40%, 10 to 40%, 15 to 40%, 20 to 40%, 25 to 40%, 30 to 40%, 1 to 35%, 5 to 35%, 10 to 35%, 15 to 35%, 20 to 35%, 25 to 35%, 1 to 30%, 5 to 30%, 10 to 30%, 15 to 30%, 20 to 30%, 1 to 25%, 5 to 25%, 10 to 25%, 15 to 25%, 1 to 20%, 5 to 20%, 10 to 20%, 1 to 15% or 5 to 15%. In an embodiment of the present invention, a fruit juice percentage of the fruit- and vegetable-based beverage may be 1 to 100%, 4 to 95%, 5 to 80%, 5 to 50% or 5 to 30%.

As used herein, the fruit juice percentage is a relative concentration based on a straight fruit juice obtained by squeezing a fruit of 100%, and can be obtained by conversion based on the standard (°Bx) of the sugar refractometer index or the standard (%) of the degree of acid shown in JAS standards (Japan Agricultural Standards of fruit beverages).

The values of the standards (unit: °Bx) of sugar refractometer indexes of representative fruits are as follows: orange: 11, tangerine: 9, grapefruit: 9, pineapple: 11, cranberry: 7, blueberry, guava: 8, banana: 23, papaya: 9, passion fruit: 14, mango: 13, apple: 10, grape: 11, peach: 8, Japanese pear: 8, pear: 11, apricot: 7, plum: 6, melon, kiwifruit: 10. The standards (unit: %) of the degrees of acid of representative fruits are as follows: lemon: 4.5, lime: 6, ume: 3.5, Citrus sphaerocarpa: 3.5.

Specifically, the fruit juice percentage can be calculated from a content (g) of the fruit juice contained in 100 mL of the fruit juice beverage and a concentration rate of the fruit juice, calculated from the standard (°Bx) of the sugar refractometer index or the standard (%) of the degree of acid, according to the following conversion expression.

$$[\text{Fruit juice percentage (\%)}] = [\text{Content (g) of fruit juice}] \times [\text{Concentration rate}]/100 \text{ mL} \times 100$$

For example, an orange fruit juice has a Bx11° according to the JAS standards, and thus when 6.0 wt% of an orange fruit juice having a Bx55° is contained in a beverage, a fruit juice percentage of 30% is obtained. When a fruit juice percentage of a fruit juice is converted based on a sugar refractometer index according to the JAS standards, sugar refractometer indexes of sugars, honeys, and the like added to the fruit juice are here excluded.

The form of the fruit- and vegetable-based beverage is not limited, and may be, for example, a beverage form where a concentrated fruit juice extract is dissolved, or a fruit- and vegetable-based beverage form packed in a container, which is incorporated and packed in a container such as a can or a PET bottle.

The flavored water is a beverage obtained by adding a flavor, a fruit juice, an extract, or the like to water such as mineral water (including natural mineral water), and is a beverage which is also called near water and which has an appearance like that of water. In general, the flavored water not only is colorless and clear like water, but also has a flavor, a sweetness, and a sourness of a fruit or the like. The flavored water has a clean taste so as to be capable of being drunk instead of water, and has the property of being drunk easily at the same level as water, or more easily than water.

The flavor which can be included in the flavored water is not particularly limited, and examples thereof include fruit-based flavors, citrus-based flavors, mint-based flavors, coffee flavors, cocoa flavors, and tea flavors (including English tea flavors). In particular, examples of the fruit-based flavor include one or more selected from valencene as a flavor contained in essential oil of orange or the like, linalool as a flavor contained in essential oil of rosewood, lavender, bergamot, coriander or the like, and nootkatone having grapefruit-like aroma, such as d-nootkatone.

The fruit juice which can be included in the flavored water is not particularly limited, and examples thereof include fruit juices of one or more selected from orange, tangerine, lemon, grapefruit, lime, pineapple, strawberry, raspberry, blueberry, blackcurrant, cranberry, blueberry, guava, banana, acerola, papaya, passion fruit, mango, apple, grape, peach, ume, pear, apricot, plum, melon, kiwifruit, and quince. A straight fruit juice, a concentrated fruit juice, or the like can be herein used for the fruit juice, regardless of a production method. The concentrated fruit juice may be prepared by any of a heating concentration method and a freezing concentration method. In a case where the fruit juice is here used, a clear fruit juice subjected to a clearing treatment in consideration of the influence on a liquid color of the beverage is preferably used. The fruit juice may be subjected to a decoloration treatment. The content of a clear fruit juice is preferably 5.0 mass% or less, more preferably 2.0 mass% or less, further preferably 1.5 mass% or less, and still further preferably 1.0 mass% or less with reference to the total amount (100 mass%) of the flavored water from the viewpoint that the liquid color is kept colorless and clear and from the viewpoint that the liquid color is kept colorless and clear during long storage.

The extract which can be included in the flavored water is not particularly limited, and examples thereof include one or more selected from an algae extract, a dried fish extract, a mushroom extract, a grain extract, a tea extract, a vegetable extract, a fruit extract, an herb extract, a mesophyll extract, a bean extract, nut and seed extracts, a yeast extract, and the like.

The absorbance at a wavelength of 660 nm of the flavored water is preferably 0.06 or less, more preferably 0.02 or less, and further preferably 0.01 or less. The absorbance at a wavelength of 660 nm serves as an index of clearness, and flavored water having an absorbance of 0.06 or less can be said to be a clear beverage. The lower limit of the absorbance at a wavelength of 660 nm of the flavored water of the present invention is 0.

The absorbance at a wavelength of 660 nm can be herein measured with an ultraviolet-visible spectrophotometer UV-1600, UV-1800, UV-1850 (each manufactured by Shimadzu Corporation), or the like.

The ∆E value of transmitted light of the flavored water may be 3.5 or less. Flavored water exhibiting a ∆E value of transmitted light of 3.5 or less can be said to be a colorless beverage. The lower limit of the ∆E value of transmitted light of the flavored water of the present invention is 0.

As used herein, the ∆E value of transmitted light is a value measured according to JIS Z 8722, and can be measured with an ultraviolet-visible spectrophotometer such as ZE2000 (manufactured by Nippon Denshoku Industries Co., Ltd.).

The flavored water of the present invention may be a carbonated beverage, or may be an uncarbonated beverage or a jelly beverage. The carbon dioxide pressure at 20°C of the flavored water as a carbonated beverage may be 1.0 to 5.0 kgf/cm$^2$, 1.0 to 4.5 kgf/cm$^2$, 1.0 to 4.0 kgf/cm$^2$, 1.0 to 3.5 kgf/cm$^2$, 1.0 to 3.0 kgf/cm$^2$, 1.0 to 2.5 kgf/cm$^2$, 1.0 to 2.0 kgf/cm$^2$, 1.2 to 5.0 kgf/cm$^2$, 1.2 to 4.5 kgf/cm$^2$, 1.2 to 4.0 kgf/cm$^2$, 1.2 to 3.5 kgf/cm$^2$, 1.2 to 3.0 kgf/cm$^2$, 1.2 to 2.5 kgf/cm$^2$, 1.2 to 2.0 kgf/cm$^2$, 1.5 to 5.0 kgf/cm$^2$, 1.5 to 4.5 kgf/cm$^2$, 1.5 to 4.0 kgf/cm$^2$, 1.5 to 3.5 kgf/cm$^2$, 1.5 to 3.0 kgf/cm$^2$, 1.5 to 2.5 kgf/cm$^2$.

The carbon dioxide pressure at 20°C of the flavored water as an uncarbonated beverage may be less than 1.0 kgf/cm$^2$, 0 to 0.9 kgf/cm$^2$, 0 to 0.8 kgf/cm$^2$, 0 to 0.7 kgf/cm$^2$, 0 to 0.6 kgf/cm$^2$, 0 to 0.5 kgf/cm$^2$, 0 to 0.4 kgf/cm$^2$, 0 to 0.3 kgf/cm$^2$, 0.1 to 0.9 kgf/cm$^2$, 0.1 to 0.8 kgf/cm$^2$, 0.1 to 0.7 kgf/cm$^2$, 0.1 to 0.6 kgf/cm$^2$, 0.1 to 0.5 kgf/cm$^2$, 0.1 to 0.4 kgf/cm$^2$, 0.1 to 0.3 kgf/cm$^2$, 0.2 to 0.9 kgf/cm$^2$, 0.2 to 0.8 kgf/cm$^2$, 0.2 to 0.7 kgf/cm$^2$, 0.2 to 0.6 kgf/cm$^2$, 0.2 to 0.5 kgf/cm$^2$, 0.2 to 0.4 kgf/cm$^2$, or 0.2 to 0.3 kgf/cm$^2$.

The carbon dioxide pressure can be herein measured with a gas volume measurement apparatus such as GVA-500A from Kyoto Electronics Manufacturing Co., Ltd. For example, the carbon dioxide pressure can be measured after setting of a sample temperature to 20°C, degassing (snifting) in air in a container in the gas volume measurement apparatus, and shaking.

The alcoholic beverages refer to beverages containing an alcohol raw material. The alcoholic beverage may be shochu highball, or chuhai. Examples of the alcohol raw material include brewed liquors, distilled liquors, and mixed liquors. Examples of the brewed liquor include wines and beers. Example of the distilled liquor include spirits (for example, gins, vodkas, rums, tequilas and new spirits, and material alcohols), liquors, whiskies (for example, whiskies and brandies), and shochus. The alcoholic beverages herein can be any beverages containing detectable alcohol and, for examples, contain alcohol of 1 vol% or more, 2 vol% or more, 3 vol% or more, 4 vol% or more, and 5 vol% or more. The alcoholic beverages may be, for example, the aforementioned fruit- and vegetable-based beverages, flavored water, carbonated beverages, or the like to which alcohol is added. The alcohol content is expressed by a percentage based on volume/volume (v/v%), and the alcohol content in the beverage can be measured by any known method, such as a measurement by an oscillating densitometer.

Examples of the processed food include processed foods of grains, seafoods and meats (breads, noodles, tortillas, pastas, hams, bacons, sausages, kamaboko, ageten, and hanpen).

Examples of the snack include candies, jams, chewing gums, ice creams, snack confectionary, cookies, biscuits, cakes, wafers, sweet breads, chocolates, Japanese sweets, but not limited thereto.

The oral composition of the present invention can be in a form of a pharmaceutical product or a quasi-drug such as fine granules, tablets, granules, powders, capsules (including soft capsules and hard capsules), chewable tablets, syrups, mouthwashes, tooth pastes, oral ointments, gurgles, or sprays for throat, or in a processed form such as natural liquid meals, polymeric formulae, or component nutritional meals, health tonics, enteral nutrients in which the composition of the present invention is contained in proteins, saccharides, fats, trace elements, vitamins, emulsifiers, and flavors. The oral composition of the present invention may be in form of semiliquid meals or semisolid meals. Thus, the present invention also provides oral products such as pharmaceutical products, quasi-drugs, natural liquid meals, semi-liquid meals, semi-solid meals, polymeric formulae, component nutritional meals, health tonics, and enteral nutrients comprising the components (a) to (c) wherein an amount of the component (b) is less than a taste recognition threshold, and an amount of the component (c) is 60 mg/100 mL or less as an amount of sodium. Note that the oral product is a general term for any products introduced into the mouth whether or not ingested.

Further, the oral composition of the present invention can be sterilized while packed in a container.

[Sweetness intensity]

As used herein, the "sweetness intensity" means an intensity of sweetness of a substance. For example, when the sweetness intensity of sucrose per unit concentration Brix 1 is defined as a degree of sweetness of 1, a degree of sweetness of glucose is 0.6 to 0.7 (median value 0.65). A numerical value obtained by multiplying this degree of sweetness by a concentration Brix value of glucose is the sweetness intensity of glucose. Thus, when a concentration of glucose is Brix 1.5, the sweetness intensity of glucose is $0.65 \times 1.5 = 0.975$.

Table 1

| Sugar (D-form) | Degree of sweetness |
| --- | --- |
| Sucrose | 1 |
| Glucose | 0.6 to 0.7 |
| Fructose | 1.3 to 1.7 |
| Maltose | 0.4 |
| Fructooligosaccharide | 0.6 |
| Maltooligosaccharide | 0.3 |
| Isomaltooligosaccharide | 0.4 to 0.5 |
| Galactooligosaccharide | 0.7 |
| High-fructose corn syrup | 0.8 to 0.9 |
| Lactose | 0.2 to 0.3 |
| Psicose | 0.7 |
| Allose | 0.8 |
| Tagatose | 0.9 |

The oral composition of the present invention contains, as described above, a high-intensity sweetener having a good taste quality in an amount corresponding to a sweetness intensity X1 and has a sweetness having a sweetness intensity X2 exhibited by the components (a) to (c) and 0.1 < X1 < X2 is satisfied. When the high-intensity sweetener of the component (a) comprises a combination of a plurality of sweet substances, the amount of the high-intensity sweetener in the component (a) corresponds to the combined amount of all these sweet substances.

X1 in the "sweetness intensity X1" may be more than 0.1 and 0.5 or less, more than 0.1 and 1.0 or less, more than 0.1 and 1.5 or less, more than 0.1 and 2.0 or less, more than 0.1 and 2.5 or less, more than 0.1 and 3.0 or less, more than 0.1 and 3.5 or less, more than 0.1 and 4.0 or less, more than 0.1 and 4.5 or less, more than 0. 1 and 5.0 or less, more than 0.1 and 5.5 or less, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.5 to 7.0, 2.5 to 7.5, 2.5 to 6.0, 2.5 to 6.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 10.0, 3.5 to 10.5, 3.5 to 11.0, 3.5 to 11.5, or 4.0 to 11.5.

X1 may also be more than 0.1 and 6.0 or less, more than 0.1 and 6.5 or less, more than 0.1 and 7.0 or less, more than 0.1 and 7.5 or less, more than 0.1 and 8.0 or less, more than 0.1 and 8.5 or less, more than 0.1 and 9.0 or less, more than 0.1 and 9.5 or less, more than 0.1 and 10.0 or less, more than 0.1 and 10.5 or less, more than 0.1 and 11.0 or less, more than 0.1 and 11.5 or less, more than 0.1 and 12.0 or less, more than 0.1 and 13.0 or less, more than 0.1 and 14.0 or less, more than 0.1 and 15.0 or less, more than 0.1 and 16.0 or less, more than 0.1 and 17.0 or less, more than 0.1 and 18.0 or less, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1. 0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11. 0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3. 5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4. 0 to 15.0, 4.0 to 16.0, 4.0 to 17.0, or 4.0 to 18.0.

The amount corresponding to a sweetness intensity X1 of a high-intensity sweetener refers to an amount which provides a sweetness of a sweetness intensity X1 under the conditions when the high-intensity sweetener is dissolved in water having the same volume as the oral composition of the present invention at 20°C.

Further, the amount of a high-intensity sweetener may be Pa ppm and Pa ppm herein refers to an amount corresponding to a sweetness intensity X1. The Pa herein can be a value of about 1 to about 800, about 5 to about 800, about 10 to about 800, about 15 to about 800, about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, or about 55 to about 490.

The Pa may also be a value of 1 to 1500, 1 to 1200, 5 to 1200, 1 to 1000, 5 to 1000, 10 to 1000, 1 to 900, 5 to 900, 10 to 900, 15 to 900, 20 to 900, 25 to 900, 30 to 900, 35 to 900, 40 to 900, 45 to 900, 50 to 900, 55 to 900, 1 to 800, 5 to 800, 10 to 800, 15 to 800, 20 to 800, 25 to 800, 30 to 800, 35 to 800, 40 to 800, 45 to 800, 50 to 800, 55 to 800, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495, or 15 to 490.

The Pa may also be a value of about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 200 to about 500, about 200 to about 450, about 200 to about 400, about 200 to about 350, about 200 to about 300, or about 200 to about 250.

X2 is not particularly limited as long as it is greater than X1, and may be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15 or 10.5 to 12.5.

X2 may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16 or 10.5 to 15.5.

Further, the oral composition in an embodiment of the present invention has a sweetness of a sweetness intensity X3 exhibited by the components (a) and (b) and $0.1 < X1 < X3 < X2$ is satisfied. That is, a sweetness is more enhanced by the addition of the component (c): a phospholipid, to the component (a): a high-intensity sweetener and the component (b): sodium than the combination of the component (a) and the component (b).

X3 is not particularly limited as long as it is greater than X1 and smaller than X2, and may be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 19, 3.0 to 14, 3.0 to 11.5, 3.0 to 9, 3.5 to 19, 3.5 to 14, 3.5 to 11.5, 3.5 to 9, 4.0 to 19, 4.0 to 14, 4.0 to 11.5, 4.0 to 9, 4.5 to 19, 4.5 to 14, 4.5 to 11.5, 4.5 to 9, 5.0 to 19, 5.0 to 14, 5.0 to 11.5, 5.0 to 9, 6.5 to 20, 5.5 to 14, 5.5 to 11.5, 5.5 to 9, 6.019, 6.0 to 14, 6.0 to 11.5, 6.0 to 9, 6.5 to 19, 6.5 to 14, 6.5 to 11.5, 6.5 to 9, 6.5 to 8, 6.5 to 7, 7.0 to 19, 7.0 to 19, 7.0 to 14, 7.0 to 11.5, 7.0 to 9, 7.5 to 19, 7.5 to 14, 7.5 to 11.5, 7.5 to 9, 8.0 to 19, 8.0 to 14, 8.0 to 11.5, 8.0 to 9, 8.5 to 19, 98.5 to 14, 8.5 to 11.5, 8.5 to 9, 9.0 to 19, 9.0 to 14, 9.0 to 11.5, 9.5 to 19, 9.5 to 14 or 9.5 to 11.5.

X3 may also be 3.0 to 17, 3.0 to 15, 3.0 to 14.5, 3.0 to 13, 3.5 to 17, 3.5 to 15, 3.5 to 14.5, 3.5 to 13, 4.0 to 17, 4.0 to 15, 4.0 to 14.5, 4.0 to 13, 4.5 to 17, 4.5 to 15, 4.5 to 14.5, 4.5 to 13, 5.0 to 17, 5.0 to 15, 5.0 to 14.5, 5.0 to 13, 5.5 to 17, 5.5 to 15, 5.5 to 14.5, 5.5 to 13, 6.0 to 17, 6.0 to 15, 6.0 to 14.5, 6.0 to 13, 6.5 to 17, 6.5 to 15, 6.5 to 14.5, 6.5 to 13, 6.5 to 8, 6.5 to 7, 7.0 to 17, 7.0 to 16, 7.0 to 15, 7.0 to 14.5, 7.0 to 13, 7.5 to 17, 7.5 to 15, 7.5 to 14.5, 7.5 to 13, 8.0 to 17, 8.0 to 15, 8.0 to 14.5, 8.0 to 13, 8.5 to 17, 8.5 to 15, 8.5 to 14.5, 8.5 to 13, 9.0 to 17, 9.0 to 15, 90 to 14.5, 9.5 to 17, 9.5 to 15 or 9.5 to 14.5.

Further, the oral composition in an embodiment of the present invention has a sweetness of a sweetness intensity X4 exhibited by the components (a) and (c) and $0.1 < X1 < X4 < X2$ is satisfied. That is, a sweetness is more enhanced by the addition of the component (b): sodium, to the component (a): a high-intensity sweetener and the component (c): a phospholipid than the combination of the component (a) and the component (c).

X4 is not particularly limited as long as it is greater than X1 and smaller than X2, and may be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 19, 3.0 to 14, 3.0 to 11.5, 3.0 to 9, 3.5 to 19, 3.5 to 14, 3.5 to 11.5, 3.5 to 9, 4.0 to 19, 4.0 to 14, 4.0 to 11.5, 4.0 to 9, 4.5 to 19, 4.5 to 14, 4.5 to 11.5, 4.5 to 9, 5.0 to 19, 5.0 to 14, 5.0 to 11.5, 5.0 to 9, 6.5 to 20, 5.5 to 14, 5.5 to 11.5, 5.5 to 9, 6.019, 6.0 to 14, 6.0 to 11.5, 6.0 to 9, 6.5 to 19, 6.5 to 14, 6.5 to 11.5, 6.5 to 9, 6.5 to 8, 6.5 to 7, 7.0 to 19, 7.0 to 19, 7.0 to 14, 7.0 to 11.5, 7.0 to 9, 7.5 to 19, 7.5 to 14, 7.5 to 11.5, 7.5 to 9, 8.0 to 19, 8.0 to 14, 8.0 to 11.5, 8.0 to 9, 8.5 to 19, 98.5 to 14, 8.5 to 11.5, 8.5 to 9, 9.0 to 19, 9.0 to 14, 9.0 to 11.5, 9.5 to 19, 9.5 to 14 or 9.5 to 11.5.

X4 may also be 3.0 to 17, 3.0 to 15, 3.0 to 14.5, 3.0 to 13, 3.5 to 17, 3.5 to 15, 3.5 to 14.5, 3.5 to 13, 4.0 to 17, 4.0 to 15, 4.0 to 14.5, 4.0 to 13, 4.5 to 17, 4.5 to 15, 4.5 to 14.5, 4.5 to 13, 5.0 to 17, 5.0 to 15, 5.0 to 14.5, 5.0 to 13, 5.5 to 17, 5.5 to 15, 5.5 to 14.5, 5.5 to 13, 6.0 to 17, 6.0 to 15, 6.0 to 14.5, 6.0 to 13, 6.5 to 17, 6.5 to 15, 6.5 to 14.5, 6.5 to 13, 6.5 to 8, 6.5 to 7, 7.0 to 17, 7.0 to 16, 7.0 to 15, 7.0 to 14.5, 7.0 to 13, 7.5 to 17, 7.5 to 15, 7.5 to 14.5, 7.5 to 13, 8.0 to 17, 8.0 to 15, 8.0 to 14.5, 8.0 to 13, 8.5 to 17, 8.5 to 15, 8.5 to 14.5, 8.5 to 13, 9.0 to 17, 9.0 to 15, 90 to 14.5, 9.5 to 17, 9.5 to 15 or 9.5 to 14.5.

The oral composition of the present invention has an enhanced sweetness as having been already mentioned. Whether or not the sweetness of the oral composition of the present invention is enhanced can be evaluated by panelists who received sensory trainings. Further, for the sweetness intensity of the oral composition of the present invention, standard oral compositions (for example, beverages) to be the sweetness standards are prepared with sucrose concentrations assigned as sweetness intensities 1, 2, 3, 4, 5, 6, 7, 8, 9, 10, 11, 12, 13, 14, and 15 and panelists compare the sweetness of the oral composition of the present invention with the sweetness of these standard oral compositions thereby to measure the sweetness of the oral composition of the present invention. Note that the standard oral compositions (for example, beverages) having a sweetness intensity of 1, 2, ... 15 are prepared by adding sucrose in such a way that a sucrose content is 1 g/100 g, 2 g/100 g, ... 15 g/100 g to the oral composition to which sucrose is not added.

Furthermore, of the standard oral compositions having a lower sweetness than the oral composition of the present invention in the above measurement, the standard oral composition having the closest sweetness to that of the oral composition of the present invention is selected and adjusted in such a way as to have the same sweetness as that of the oral composition of the present invention by adding sucrose to the selected standard oral composition, during which a sweetness intensity of the oral composition of the present invention can also be measured from a sucrose content in the adjusted standard oral composition.

Other examples of the method for measuring a sweetness of the oral composition of the present invention include a sweetness intensity rating using Visual Analogue Scale (VAS method). For the VAS method, literatures such as "The journal of Japanese Society of Stomatognathic Function (2014) 20 pp. 115-129 ("Construction of a Screening Test for Gustatory Function in Four Basic Tastes" by Toyota et al.)" can be referred. Specifically, in the measurement of sweetness intensity by the VAS method, for example, evaluators define sweetness intensities as "not sweet at all" at the lower end and "nothing is sweeter than this" at the upper end and, using a piece of paper on which a straight line indicating the intensities of sweetness on the straight line, assess a sweetness intensity sensed at that time by showing a position on the straight line.

Besides, whether a sweetness intensity is higher or lower can be determined, without quantitating the sweetness intensity of a test oral composition, by a three-alternative forced choice method (3-AFC) in which whether it is sweeter than, not sweeter than, or sweet equivalently to a reference oral composition is chosen by a sensory evaluation, by a two-alternative forced choice method (2-AFC) in which whether it is sweeter than, or not sweeter than a reference oral composition is chosen by a sensory evaluation, or the like. The sensory evaluation may be carried out by a plurality of panelists who have received sensory trainings, and when at least one panelist evaluates it as "sweet", the test oral composition can be evaluated to have a higher sweetness intensity than the reference oral composition. For example, when about 10% or more, about 20% or more, about 25% or more, about 30% or more, about 33% or more, about 40% or more, about 50% or more, about 60% or more, about 67% or more, about 70% or more, about 75% or more, about 80% or more, or about 90% or more of panelists evaluate the test oral composition as "sweeter" than the reference oral composition, the test oral composition can be evaluated to have a higher sweetness intensity than the reference oral composition. It is preferable that more panelists evaluate it as "sweeter". In a preferable embodiment, about 25% or more, about 33% or more, about 50% or more, about 67% or more, about 75% or more, about 80% or more, or about 90% or more of panelists evaluate the test oral composition as "sweeter" than the reference oral composition. In a particularly preferable embodiment, about 50% or more, about 67% or more, about 75% or more, about 80% or more, or about 90% or more of panelists evaluate the test oral composition as "sweeter" than the reference oral composition.

The sweetness intensity of the oral composition of the present invention is not particularly limited as long as it is acceptable as a food and can be, in terms of the degree of sweetness, for example, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, 10.5 to 12.5. The sweetness intensity of the oral composition is provided by the above components (a) to (c) and optional additional components.

An energy (total energy) of the oral composition of the present invention can be, depending on an embodiment, 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml, 24 to 30 Kcal/100 ml.

Further, an energy (total energy, TE) of the oral composition of the present invention can be, depending on an embodiment (for example, an embodiment containing a caloric sweetener), $0 < TE \leq 50$ Kcal/100 ml, $0 < TE \leq 45$ Kcal/100 ml, $0 < TE \leq 40$ Kcal/100 ml, $0 < TE \leq 35$ Kcal/100 ml, $0 < TE \leq 30$ Kcal/100 ml, $0 < TE \leq 24$ Kcal/100 ml, $0 < TE \leq 22$ Kcal/100 ml, $0 < TE \leq 20$ Kcal/100 ml, $0 < TE \leq 15$ Kcal/100 ml, $0 < TE \leq 10$ Kcal/100 ml, $0 < TE \leq 5$ Kcal/100 ml (that is, it never is completely 0).

The components (a) to (c) can be in any combinations. As shown in examples to be described later, the addition of the component (b) and the component (c) to the component (a) enables to provide a sweetness intensity X2, which is higher than the sweetness intensity X1 of the component (a) alone. That is, the sweetness of the component (a) can be enhanced by the components (b) and (c). For this reason, oral compositions such as foods can be produced without using or with a reduced amount of highly caloric sucrose while maintaining the sweetness equal to an oral composition containing sucrose. Thus, the design of new low-caloric sweet foods is enabled. In the case of designing a zero-calorie sweet food, a high-intensity sweetener having particularly good-taste quality such as rebaudioside D and rebaudioside M is used for the component (a) and D-allulose or erythritol is used as an additional sweet substance thereby to improve a sweetness with a low-concentration phospholipid and a low-concentration sodium. In the case of adjusting a food to be not zero calorie but low calorie, a caloric sweetener such as sucrose, glucose, fructose, or sorbitol can be contained as an additional sweet substance.

[Texture]

In an embodiment, texture is increased in the oral composition of the present invention owing to the components (b) and (c). The texture of the oral composition is a factor related to physical properties of good taste of the oral composition such as mouthfeel, thickness, body, mildness, feeling on the tongue, smoothness, smooth feeling going down, chewiness, crispness, and sensation when eating. The texture can be evaluated by a sensory test or with a texture measuring device (Tensipresser). A liquid oral composition such as a beverage is evaluated preferably by a sensory test. Whether or not the texture is increased by the components (b) and (c) can be evaluated, for example, by comparing, in an item related to the texture, the oral composition of the present invention with an oral composition having the same composition as the oral composition of the present invention except that the components (b) and (c) are not contained (hereinafter, also referred to as the "control composition") by panelists who received sensory trainings.

An example of a comparing method in a sensory test includes one employing a VAS method. Specifically, in the comparison of the texture by the VAS method, for example, an evaluator uses a sheet of paper on which a straight line indicating the degree of an item related to the texture is drawn, and assesses the degree of the item sensed at that time by showing a position on the straight line. For example, regarding an evaluation item such as "thickness", "body", or "mildness", with one end of the straight line defined as an intensity of "not sensed at all" and the other end defined as an intensity of "sensed greatly", the item sensed at the time of the test is shown as a position on the straight line, and the item is scored for quantification in accordance with contribution to increase of the texture corresponding to the position. For example, regarding the "thickness", "body", and "mildness", the texture is sensed to increase as these senses are stronger, and therefore, by giving the lowest score to "not sensed at all" and the highest score to "sensed greatly", the increase of the texture can be quantified. Besides, regarding "mouthfeel", in a case of a beverage, the texture is sensed to increase when the beverage is syrupy as compared with when it is watery, and hence the increase of the texture can be quantified by giving the lowest score to "watery" and the highest score to "syrupy".

Whether or not the texture is increased may be evaluated by comparing the respective items thus quantified, or may be evaluated by simultaneously comparing a plurality of items using a radar chart or the like. The evaluation with a radar chart can be carried out by evaluation of a complete picture (a shape of the like), or evaluation through comparison of a radar chart area. In the evaluation with a radar chart area, the increase of the texture can be evaluated when the area of a radar chart obtained from an oral composition containing the components (b) and (c) is larger than the area of a radar chart obtained from an oral composition not containing the components (b) and (c). In an embodiment, in the oral composition of the present invention, at least one of the evaluation items related to the texture is increased as compared with that in the control composition. In some embodiments, in the oral composition of the present invention, at least one of the evaluation items selected from "mouthfeel", "thickness", "body", and "mildness" is increased as compared with that in the control composition.

In a specific embodiment, "mouthfeel" of the oral composition of the present invention may be scored as 0.10 or more, 0.15 or more, 0.20 or more, 0.25 or more, 0.30 or more, 0.35 or more, 0.40 or more, 0.45 or more, 0.50 or more, 0.55 or more, 0.60 or more, 0.65 or more, 0.70 or more, 0.75 or more, 0.80 or more, 0.85 or more, 0.90 or more, 0.95 or more, 1.00 or more, 1.05 or more, 1.10 or more, 1.15 or more, 1.20 or more, 1.25 or more, 1.30 or more, 1.35 or more, 1.40 or more, 1.45 or more, 1.50 or more, 1.55 or more, 1.60 or more, 1.65 or more, 1.70 or more, 1.75 or more, 1.80 or more, 1.85 or more, 1.90 or more, 1.95 or more or 2.00 or more when evaluated by a VAS method in which "mouthfeel" of a control oral composition is scored as 0, a composition more "watery" than the control composition is scored as -3, and a composition more "syrupy" is scored as 3.

In a specific embodiment, "thickness" of the oral composition of the present invention may be scored as 0.10 or more, 0.15 or more, 0.20 or more, 0.25 or more, 0.30 or more, 0.35 or more, 0.40 or more, 0.45 or more, 0.50 or more, 0.55 or more, 0.60 or more, 0.65 or more, 0.70 or more, 0.75 or more, 0.80 or more, 0.85 or more, 0.90 or more, 0.95 or more, 1.00 or more, 1.05 or more, 1.10 or more, 1.15 or more, 1.20 or more, 1.25 or more, 1.30 or more, 1.35 or more, 1.40 or more, 1.45 or more, 1.50 or more, 1.55 or more, 1.60 or more, 1.65 or more, 1.70 or more, 1.75 or more, 1.80 or more, 1.85 or more, 1.90 or more, 1.95 or more or 2.00 or more when evaluated by a VAS method in which "thickness" of a control oral composition is scored as 0, a composition with "thickness not sensed at all" as compared with the control composition is scored as -3, and a composition with "thickness sensed greatly" is scored as 3.

In a specific embodiment, "body" of the oral composition of the present invention may be scored as 0.10 or more, 0.15 or more, 0.20 or more, 0.25 or more, 0.30 or more, 0.35 or more, 0.40 or more, 0.45 or more, 0.50 or more, 0.55 or more, 0.60 or more, 0.65 or more, 0.70 or more, 0.75 or more, 0.80 or more, 0.85 or more, 0.90 or more, 0.95 or more, 1.00 or more, 1.05 or more, 1.10 or more, 1.15 or more, 1.20 or more, 1.25 or more, 1.30 or more, 1.35 or more, 1.40 or more, 1.45 or more, 1.50 or more, 1.55 or more, 1.60 or more, 1.65 or more, 1.70 or more, 1.75 or more, 1.80 or more, 1.85 or more, 1.90 or more, 1.95 or more or 2.00 or more when evaluated by a VAS method in which "body" of a control oral composition is scored as 0, a composition with "body not sensed at all" as compared with the control composition is scored as -3, and a composition with "body sensed greatly" is scored as 3.

In a specific embodiment, "mildness" of the oral composition of the present invention may be scored as 0.10 or more, 0.15 or more, 0.20 or more, 0.25 or more, 0.30 or more, 0.35 or more, 0.40 or more, 0.45 or more, 0.50 or more, 0.55 or more, 0.60 or more, 0.65 or more, 0.70 or more, 0.75 or more, 0.80 or more, 0.85 or more, 0.90 or more, 0.95 or more, 1.00 or more, 1.05 or more, 1.10 or more, 1.15 or more, 1.20 or more, 1.25 or more, 1.30 or more, 1.35 or more, 1.40 or more, 1.45 or more, 1.50 or more, 1.55 or more, 1.60 or more, 1.65 or more, 1.70 or more, 1.75 or more, 1.80 or more, 1.85 or more, 1.90 or more, 1.95 or more or 2.00 or more when evaluated by a VAS method in which "mildness" of a control oral composition is scored as 0, a composition with "mildness not sensed at all" as compared with the control composition is scored as -3, and a composition with "mildness sensed greatly" is scored as 3.

In a specific embodiment, a radar chart area of an evaluation item related to the texture (such as "mouthfeel", "thickness/body", or "mildness") of the oral composition of the present invention may be larger than a radar chart area of a control composition by about 1.1 times, about 1.2 times, about 1.3 times, about 1.4 times, about 1.5 times, about 1.6 times, about 1.7 times, about 1.8 times, about 1.9 times, about 2 times, about 2.1 times, about 2.2 times, about 2.3 times, about 2.4 times, about 2.5 times, about 2.6 times, about 2.7 times, about 2.8 times, about 2.9 times, about 3 times, about 3.1 times, about 3.2 times, about 3.3 times, about 3.4 times, about 3.5 times, about 3.6 times, about 3.7 times, about 3.8 times, about 3.9 times, about 4 times, about 4.1 times, about 4.2 times, about 4.3 times, about 4.4 times, about 4.5 times, about 4.6 times, about 4.7 times, about 4.8 times, about 4.9 times or about 5 times.

[High-intensity sweetener]

The high-intensity sweetener (hereinafter, sometimes abbreviated as the "sweetener (a)" or "component (a)") means a compound having a more intense sweetness than sucrose and encompasses naturally occurring compounds, synthetic compounds, and combinations of naturally occurring compounds and synthetic compounds. The high-intensity sweetener has, in the same amount as sucrose, a sweetness 5 times or more, 10 times or more, 50 times or more, 100 times or more, 500 times or more, 1,000 times or more, 5,000 times or more, 10,000 times or more, 50,000 times or more or 100,000 times or more, of that of sucrose.

Specific examples of the high-intensity sweetener include peptide-based sweeteners such as aspartame, neotame, and advantame, for example, sucrose derivatives such as sucralose, for example, synthetic sweeteners such as acesulfame K, saccharine, saccharin sodium, sodium cyclamate, dulcin, disodium glycyrrhizin, trisodium glycyrrhizin, and neohesperidin dihydrochalcone (including those naturally occurring but also those whose synthetic products are mostly distributed such as neohesperidin dihydrochalcone), for example, sweeteners extracted from plants such as thaumatin, monellin, curculin, mabinlin, brazzein, pentagin, hernandulcin, 4β-hydroxyhernandulcin, miraculin, glycyrrhizin, rubusoside, and phyllodulcin, and plant extracts containing a high-intensity sweetener component, for example, Stevia rebaudiana extract, Luo han guo extract, Glycyrrhiza glabra extract, Rubus suavissimus S. Lee extract, Hydrangea macrophylla var. thunbergii extract, Sclerochiton ilicifolius extract, Thaumataococcus daniellii Benth extract, Dioscoreophyllum volkensii (serendipity berry) extract, Curculigo latifolia extract, Richadella dulcifica (miracle fruit) extract, Pentadiplandra brazzeana (West African fruit) extract, Capparis masaikai (Mabinlang) extract, Lippia dulcis (Aztec sweet herb) extract, sweet components in these extracts, for example, steviol glycosides such as stevia derivatives like enzymatically-treated stevia in which a stevia extract and stevia are treated with an enzyme and glucose is added thereto, mogrosides obtained by treating Luo han guo and a Luo han guo extract, glycosides obtained from plant extracts such as phyllodulcin glycosides, Glycyrrhiza glabra plant-containing sweet components (for example, triterpene glycosides such as glycyrrhizin), Rubus suavissimus S. Lee plant-containing sweet components (for example, diterpene glycosides such as rubusoside), Hydrangea macrophylla var. thunbergii plant-containing sweet components (for example, dihydroisocoumarin such as phyllodulcin), Sclerochiton ilicifolius plant-containing sweet components (for example, amino acids such as monatin), Thaumataococcus daniellii Benth plant-containing sweet components (for example, proteins such as thaumatin), Dioscoreophyllum volkensii plant-containing sweet components (for example, proteins such as monellin), Curculigo latifolia plant-containing sweet components (for example, proteins such as curculin), Richadella dulcifica plant-containing sweet components (for example, proteins such as miraculin), Pentadiplandra brazzeana plant-containing sweet components (for example, proteins such as brazzein and pentagin), Capparis masaikai plant-containing sweet components (for example, proteins such as mabinlin), and Lippia dulcis plant-containing sweet components (for example, sesquiterpenes such as hernandulcin and 4(3-hydroxyhernandulcin).

Examples of the steviol glycoside include rebaudioside A (hereinafter, "rebaudioside" may be abbreviated as "Reb"), RebB, RebC, RebD, RebE, RebF, RebI, RebJ, RebK, RebM, RebN, RebO, RebQ, RebR, dulcoside A, dulcoside C, rubusoside, steviol, steviol monoside, steviol bioside and stevioside. Examples of the mogroside include mogroside IV (hereinafter, "mogroside " may be abbreviated as "Mog") and MogV.

The Glycyrrhiza extract refers to those obtained from roots or rhizomes of Glycyrrhiza uralensis Fisher, Glycyrrhiza inflata Batalin, and Glycyrrhiza glabra Linne and having glycyrrhizic acid as the main component. Examples of the Glycyrrhiza extract include Glycyrrhiza extracts, Glycyrrhizin, and licorice extracts.

The sucrose derivative includes, for example, those obtained by substituting the OH group or the H group of sucrose with other substituents and examples thereof include halogen derivatives of sucrose (sucralose), oxathiazinonedioxide derivatives.

In a preferable embodiment of the present invention, the high-intensity sweetener is selected from a high-intensity sweetener having a good taste quality. As used herein, the "high-intensity sweetener having a good taste quality" means a high-intensity sweet substance having one or more taste qualities selected from, when compared with RebA, (1) less astringent taste, (2) less metallic taste, (3) less aftertaste of sweetness, and (4) less bitterness. Whether or not a certain sweet substance has the above taste quality is already known or can be determined based on a sensory evaluation. Nonrestrictive examples of the high-intensity sweetener having a good taste include RebD, RebM, neohesperidin dihydrochalcone, glycyrrhizin, thaumatin, monellin, mogroside, rubusoside, curculin, mabinlin, brazzein, pentagin, phyllodulcin, hernandulcin, miraculin, good-taste quality Stevia rebaudiana plant-containing sweet components, Siraitia grosvenorii plant-containing sweet components, Glycyrrhiza glabra plant-containing sweet components, Rubus suavissimus S. Lee plant-containing sweet components, Hydrangea macrophylla var. thunbergii plant-containing sweet components, Sclerochiton ilicifolius plant-containing sweet components, Thaumataococcus daniellii Benth plant-containing sweet components, Dioscoreophyllum volkensii plant-containing sweet components, Curculigo latifolia plant-containing sweet components, Richardella dulcifica plant-containing sweet components, Pentadiplandra brazzeana plant-containing sweet components, Capparis masaikai plant-containing sweet components, Lippia dulcis plant-containing sweet components, and derivatives thereof, and combinations thereof. The high-intensity sweetener having a good taste quality does not contain major components of Stevia sweeteners such as Reb A and stevioside. In a specific embodiment, the high-intensity sweetener having a good taste quality comprises RebD, RebM, a mogroside (for example, MogV), thaumatin, brazzein or a combination thereof. In another specific embodiment, the sweetener (a) contains RebD, RebM, a mogroside (for example, MogV), thaumatin, or a combination thereof. In a preferable embodiment of the present invention, a high-intensity sweetener having a good taste quality contains RebD, RebM, MogV, a Luo han guo extract, and a combination thereof.

In an embodiment of the present invention, the high-intensity sweetener can be those naturally occurring in plants and the like or those artificially produced (for example, bioconversion or chemosynthesis), but is preferably a naturally occurring sweetener. As used herein, the "naturally occurring" does not mean that a high-intensity sweet substance contained in the oral composition of the present invention is a natural product but a high-intensity sweet substance contained in the oral composition of the present invention can be a product artificially (for example, by bioconversion) produced (non-naturally occurring product) as long as the same substance naturally occurs.

Nonrestrictive examples of the sweetener (a) include RebA, RebD, RebM, neohesperidin dihydrochalcone, glycyrrhizin, thaumatin, monellin, mogroside, rubusoside, curculin, mabinlin, brazzein, pentagin, phyllodulcin, hernandulcin, miraculin, Stevia rebaudiana plant-containing sweet components, Siraitia grosvenorii plant-containing sweet components, Glycyrrhiza glabra plant-containing sweet components, Rubus suavissimus S. Lee plant-containing sweet components, Hydrangea macrophylla var. thunbergii plant-containing sweet components, Sclerochiton ilicifolius plant-containing sweet components, Thaumataococcus daniellii Benth plant-containing sweet components, Dioscoreophyllum volkensii plant-containing sweet components, Curculigo latifolia plant-containing sweet components, Richardella dulcifica plant-containing sweet components, Pentadiplandra brazzeana plant-containing sweet components, Capparis masaikai plant-containing sweet components, Lippia dulcis plant-containing sweet components and derivatives thereof, and combinations thereof. In a specific embodiment, the sweetener (a) contains RebA, RebD, RebM, a mogroside (for example, MogV) or a combination thereof. In another specific embodiment, the sweetener (a) contains RebA, RebD, RebM, a mogroside (for example, MogV), thaumatin or a combination thereof. In a preferable embodiment of the present invention, a high-intensity sweetener contains at least one selected from the group consisting of RebA, RebD, RebM, MogV, a luo han guo extract, and a combination thereof. In an embodiment of the present invention, the sweetener (a) is substantially made up of a sweetener other than major components of Stevia sweeteners such as RebA and stevioside. As used herein, the "substantially made up of ... " means that the sweetener used in the present invention can contain major component(s) of Stevia sweeteners as long as the effects of the invention are not affected. For example, preferably 90% or more, more preferably 95% or more, or further preferably 98% or more of the sweetener (a) for use in the present invention is made up of a sweetener other than RebA and stevioside.

RebA, RebD and RebM can be directly extracted from Stevia, or can be obtained by adding glucose to a compound having another structure, contained in a Stevia extract.

The Luo han guo extract as a sweetener is an extract of Luo han guo containing a sweet substance from Luo han guo, approved in various countries including Japan as a food additive and commercially available. Examples of the sweet substance from Luo han guo include MogV, MogIV, 11-oxo-MogV, and Siamenoside I.

MogV is a kind of the major mogrol glycosides contained in Luo han guo and documented to have a good-quality sweetness property close to sucrose when compared with RebA. MogV can be obtained from a luo han guo extract (for example, an alcohol extract of Luo han guo) by purification with chromatography or the like. Alternatively, MogV can be obtained by adding glucose to a compound having another structure, contained in a luo han guo extract.

The luo han guo extract preferably contains MogV and the ratio thereof is not limited and can be 10 wt% or more, 15 wt% or more, 20 wt% or more, 25 wt% or more, 30 wt% or more, 35 wt% or more, 40 wt% or more, 45 wt% or more, 50 wt% or more, 55 wt% or more, 60 wt% or more, 65 wt% or more, 70 wt% or more or 75 wt% or more, of the total dry weight of a luo han guo extract. The content of MogV can be determined by a known technique such as liquid chromatography. The luo han guo extract can be obtained by extracting a fruit of Luo han guo (Siraitia grosvenorii) with a suitable solvent (for example, an aqueous solvent such as water, an alcohol solvent such as ethanol or methanol, or a mixed solvent of an aqueous solvent and an alcohol solvent such as water-containing ethanol or water-containing methanol), and then optionally carrying out a treatment such as degreasing, purification, concentration, and drying.

MogV can be one having a high purity, and can be, for example, one having a purity of 80% or more, 85% or more, 90% or more, 91% or more, 92% or more, 93% or more, 94% or more, 95% or more, 96% or more, 97% or more or 98% or more. MogV obtained by purification of a luo han guo extract, of course, has a smaller amount of incorporation of a luo han guo extract component other than MogV, as it has a higher purity.

In other embodiments of the present invention, MogV can also be one having a lower purity, and can be, for example, one having a purity of 50% or more, 55% or more, 60% or more, 65% or more, 70% or more or 75% or more. For example, when the sweetness intensity of sucrose per unit concentration Brix 1 is defined as a degree of sweetness of 1, the calculated value of the degree of sweetness of Mog V having a purity of about 65% is about 175. In other embodiments of the present invention, a luo han guo extract containing about 30 wt% of Mog V can be used as the high-intensity sweetener, and, when the sweetness intensity of sucrose per unit concentration Brix 1 is defined as a degree of sweetness of 1, the calculated value of the degree of sweetness of the luo han guo extract is about 100.

The high-intensity sweetener is contained in an amount corresponding to a sweetness intensity X1, as described above. When the sweetness intensity of sucrose per unit concentration Brix 1 is defined as a degree of sweetness of 1, a degree of sweetness of RebD is about 225, a degree of sweetness of RebM is about 230, a degree of sweetness of RebB is about 325, a degree of sweetness of RebA is 200 to 300 (median value 250), a degree of sweetness of RebN is 200 to 250 (median value 225), a degree of sweetness of RebO is 200 to 250 (median value 225), a degree of sweetness of RebE is 70 to 80 (median value 75), a degree of sweetness of a luo han guo extract (containing 40% of Mog V) is about 130, a degree of sweetness of MogV is about 270, a degree of sweetness of thaumatin is 2,000, and a degree of sweetness of brazzein is 500 to 2000 (median value 1250). The numerical value obtained by multiplying these degrees of sweetness by a concentration (w/v% (considered to be the same as w/w% in the case of a beverage)) of the high-intensity sweetener in the oral composition is a sweetness intensity of the high-intensity sweetener. When X1 of such a sweetener is herein determined, the above degree of sweetness (median value when a numerical value range is shown) is used. A relative ratio of a degree of sweetness of each sweetener to a degree of sweetness of 1 of sucrose can be determined from, for example, a known sugar sweetness conversion table (for example, information "Beverage term dictionary", page 11, Beverage Japan, Inc.). When a numerical range of a degree of sweetness is herein shown, a median value is adopted. Herein, in the case of a sweetener whose degree of sweetness is different with respect to each literature, a relative ratio of a degree of sweetness to a degree of sweetness of 1 of sucrose can be determined by a sensory test. Examples of such a sensory test include a method involving preparing samples where sucrose is added to pure water so that Brix is 3.0 to 5.0 by 0.5, and selecting a sample where sucrose is added, having a sweetness intensity equal to that of an aqueous solution having a predetermined concentration of a sweetener, among such samples.

In an embodiment of the present invention, the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof. In a preferable embodiment of the present invention, the high-intensity sweetener comprises at least one selected from the group consisting of RebA, RebB, RebC, RebD, RebE, RebF, RebI, RebJ, RebK, RebM, RebN, RebO, RebQ, RebR, Dulcoside A, Dulcoside C, rubusoside, steviol monoside, steviol bioside, stevioside, a luo han guo extract, MogV, thaumatin, brazzein, aspartame, acesulfame K, sucralose, a Glycyrrhiza extract, saccharine, and a combination thereof.

In some embodiments, the sweetener (a) contains the following combination: RebA and RebM, RebA and RebD, RebD and RebM, RebA and RebD and RebM, RebA and MogV, RebD and MogV, RebM and MogV, RebA and RebM and MogV, RebA and RebD and MogV, RebD and RebM and MogV, RebA and neohesperidin dihydrochalcone, RebD and neohesperidin dihydrochalcone, RebM and neohesperidin dihydrochalcone, RebA and RebM and neohesperidin dihydrochalcone, RebA and RebD and neohesperidin dihydrochalcone, RebD and RebM and neohesperidin dihydrochalcone, MogV and neohesperidin dihydrochalcone, RebD and RebM and MogV and neohesperidin dihydrochalcone, RebA and brazzein, RebD and brazzein, RebM and brazzein, MogV and brazzein, neohesperidin dihydrochalcone and brazzein, RebM and RebD and brazzein, RebM and RebD and brazzein and MogV, RebM and RebD and brazzein and neohesperidin dihydrochalcone, or RebM and RebD and brazzein and MogV and neohesperidin dihydrochalcone.

In another embodiment, the sweetener (a) contains the following combination: RebA and thaumatin, RebD and thaumatin, RebM and thaumatin, MogV and thaumatin, RebA and RebM and thaumatin, RebA and RebD and thaumatin, RebD and RebM and thaumatin, RebA and MogV and thaumatin, RebD and MogV and thaumatin, RebM and MogV and thaumatin, or RebD and RebM and MogV and thaumatin.

In an embodiment of the present invention, the sweetener (a) can contain one or more high-intensity sweeteners selected from RebA, RebD, RebM, MogV, a luo han guo extract, and a combination thereof, preferably one or more high-intensity sweeteners selected from RebD, RebM, and a combination thereof.

The amount of the sweetener (a) contained in the oral composition in an embodiment of the present invention is, in the case when the sweetener (a) contains a combination of a plurality of sweet substances, an amount of all of these sweet substances combined. When an amount of the sweetener (a) is Pa (ppm), Pa can be a value of, for example, about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, about 55 to about 490, about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 20 to about 200, about 200 to about 500, about 200 to about 450, about 200 to about 400, about 200 to about 350, about 200 to about 300 or about 200 to about 250.

In an embodiment of the present invention, an amount Pa ppm of the high-intensity sweetener can be about 20 to about 600 ppm, about 30 to about 550 ppm, about 55 to about 490 ppm, about 20 to about 200 ppm, about 100 to about 500 ppm or about 150 to about 350 ppm.

[Sodium]

The oral composition of the present invention comprises (b) 60 mg/100 mL or less of sodium, and it is meant that a content of sodium atom is 60 mg/100 mL or less. The content of sodium may be, depending on an embodiment, in the range of 0.1 to 60 mg/100 mL, 0.1 to 55 mg/100 mL, 0.1 to 50 mg/100 mL, 0.1 to 45 mg/100 mL, 0.1 to 40 mg/100 mL, 0.1 to 35 mg/100 mL, 0.1 to 30 mg/100 mL, 0.1 to 25 mg/100 mL, 0.1 to 20 mg/100 mL, 0.1 to 19 mg/100 mL, 0.1 to 18 mg/100 mL, 0.1 to 17 mg/100 mL, 0.1 to 16 mg/100 mL, 0.1 to 15 mg/100 mL, 0.1 to 14 mg/100 mL, 0.1 to 13 mg/100 mL, 0.1 to 12 mg/100 mL, 0.1 to 11 mg/100 mL, 0.1 to 10 mg/100 mL, 1 to 60 mg/100 mL, 1 to 55 mg/100 mL, 1 to 50 mg/100 mL, 1 to 45 mg/100 mL, 1 to 40 mg/100 mL, 1 to 35 mg/100 mL, 1 to 30 mg/100 mL, 1 to 25 mg/100 mL, 1 to 20 mg/100 mL, 1 to 19 mg/100 mL, 1 to 18 mg/100 mL, 1 to 17 mg/100 mL, 1 to 16 mg/100 mL, 1 to 15 mg/100 mL, 1 to 14 mg/100 mL, 1 to 13 mg/100 mL, 1 to 12 mg/100 mL, 1 to 11 mg/100 mL, 1 to 10 mg/100 mL, 5 to 60 mg/100 mL, 5 to 55 mg/100 mL, 5 to 50 mg/100 mL, 5 to 45 mg/100 mL, 5 to 40 mg/100 mL, 5 to 35 mg/100 mL, 5 to 30 mg/100 mL, 5 to 25 mg/100 mL, 5 to 20 mg/100 mL, 5 to 19 mg/100 mL, 5 to 18 mg/100 mL, 5 to 17 mg/100 mL, 5 to 16 mg/100 mL, 5 to 15 mg/100 mL, 5 to 14 mg/100 mL, 5 to 13 mg/100 mL, 5 to 12 mg/100 mL, 5 to 11 mg/100 mL, 5 to 10 mg/100 mL, 7 to 60 mg/100 mL, 7 to 55 mg/100 mL, 7 to 50 mg/100 mL, 7 to 45 mg/100 mL, 7 to 40 mg/100 mL, 7 to 35 mg/100 mL, 7 to 30 mg/100 mL, 7 to 25 mg/100 mL, 7 to 20 mg/100 mL, 7 to 19 mg/100 mL, 7 to 18 mg/100 mL, 7 to 17 mg/100 mL, 7 to 16 mg/100 mL, 7 to 15 mg/100 mL, 10 to 60 mg/100 mL, 10 to 55 mg/100 mL, 10 to 50 mg/100 mL, 10 to 45 mg/100 mL, 10 to 40 mg/100 mL, 10 to 35 mg/100 mL, 10 to 30 mg/100 mL, 10 to 25 mg/100 mL, 10 to 20 mg/100 mL, 10 to 19 mg/100 mL, 10 to 18 mg/100 mL, 10 to 17 mg/100 mL, 10 to 16 mg/100 mL, 10 to 15 mg/100 mL, 15 to 60 mg/100 mL, 15 to 55 mg/100 mL, 15 to 50 mg/100 mL, 15 to 45 mg/100 mL, 15 to 40 mg/100 mL, 15 to 35 mg/100 mL, 15 to 30 mg/100 mL, 15 to 25 mg/100 mL, 15 to 20 mg/100 mL, 20 to 60 mg/100 mL, 20 to 55 mg/100 mL, 20 to 50 mg/100 mL, 20 to 45 mg/100 mL, 20 to 40 mg/100 mL, 20 to 35 mg/100 mL, 20 to 30 mg/100 mL, 20 to 25 mg/100 mL, 25 to 60 mg/100 mL, 25 to 55 mg/100 mL, 25 to 50 mg/100 mL, 25 to 45 mg/100 mL, 25 to 40 mg/100 mL, 25 to 35 mg/100 mL, 25 to 30 mg/100 mL, 30 to 60 mg/100 mL, 30 to 55 mg/100 mL, 30 to 50 mg/100 mL, 30 to 45 mg/100 mL, 30 to 40 mg/100 mL, 30 to 35 mg/100 mL, 35 to 60 mg/100 mL, 35 to 55 mg/100 mL, 35 to 50 mg/100 mL, 35 to 45 mg/100 mL, 35 to 40 mg/100 mL, 40 to 60 mg/100 mL, 40 to 55 mg/100 mL, 40 to 50 mg/100 mL, 40 to 45 mg/100 mL, 45 to 60 mg/100 mL, 45 to 55 mg/100 mL, 45 to 50 mg/100 mL, 50 to 60 mg/100 mL, 50 to 55 mg/100 mL or 55 to 60 mg/100 mL

Further, the content of sodium may be, depending on an embodiment, in the range of 0.1 to 22 mg/100 mL, 0.1 to 21 mg/100 mL , 1 to 22 mg/100 mL , 1 to 21 mg/100 mL, 4 to 40 mg/100 mL , 4 to 35 mg/100 mL, 4 to 34 mg/100 mL, 4 to 33 mg/100 mL , 4 to 32 mg/100 mL , 4 to 31 mg/100 mL, 4 to 30 mg/100 mL, 4 to 29 mg/100 mL, 4 to 26 mg/100 mL, 4 to 25 mg/100 mL, 4 to 22 mg/100 mL , 4 to 21 mg/100 mL, 4 to 20 mg/100 mL, 4 to 19 mg/100 mL, 4 to 18 mg/100 mL, 4 to 17 mg/100 mL, 4 to 16 mg/100 mL, 4 to 15 mg/100 mL, 4 to 14 mg/100 mL, 4 to 13 mg/100 mL, 4 to 12 mg/100 mL, 4 to 11 mg/100 mL, 4 to 10 mg/100 mL, 5 to 34 mg/100 mL , 5 to 33 mg/100 mL, 5 to 32 mg/100 mL, 5 to 31 mg/100 mL, 5 to 29 mg/100 mL , 5 to 22 mg/100 mL , 5 to 21 mg/100 mL, 10 to 34 mg/100 mL, 10 to 33 mg/100 mL, 10 to 32 mg/100 mL, 10 to 31 mg/100 mL, 10 to 29 mg/100 mL , 10 to 22 mg/100 mL , 10 to 21 mg/100 mL , 11.5 to 34 mg/100 mL, 11.5 to 33 mg/100 mL , 11.5 to 32 mg/100 mL , 11.5 to 31 mg/100 mL , 11.5 to 30 mg/100 mL , 11.5 to 29 mg/100 mL , 11.5 to 22 mg/100 mL , 11.5 to 21 mg/100 mL , 11.5 to 20 mg/100 mL , 11.5 to 19 mg/100 mL , 11.5 to 18 mg/100 mL, 11.5 to 17 mg/100 mL , 11.5 to 16 mg/100 mL , 11.5 to 15 mg/100 mL, 11.5 to 14 mg/100 mL , 11.5 to 13 mg/100 mL , 11.5 to 12 mg/100 mL , 5.75 to 34.5 mg/100 mL, 5.75 to 28.75 mg/100 mL, 5.75 to 23 mg/100 mL, 5.75 to 17.25 mg/100 mL, 5.75 to 11.5 mg/100 mL, 11.5 to 34.5 mg/100 mL, 11.5 to 28.75 mg/100 mL, 11.5 to 23 mg/100 mL , 11.5 to 17.25 mg/100 mL, 17.25 to 34.5 mg/100 mL, 17.25 to 28.75 mg/100 mL, 17.25 to 23 mg/100 mL, 23 to 34.5 mg/100 mL, 23 to 28.75 mg/100 mL, or 28.75 to 34.5 mg/100 mL.

The sodium is not particularly limited in terms of the form thereof as long as it is contained in an ingestible form in the oral composition of the present invention, and can be, for example, in the form of at least one selected from the group consisting of sodium chloride, sodium hydroxide, sodium malate, sodium sulfate, sodium citrate (monosodium citrate, disodium citrate, trisodium citrate), sodium phosphate, sodium carbonate, sodium hydrogen carbonate, sodium disulfide, sodium bicarbonate, sodium alginate, sodium arginate, sodium glucoheptanoate, sodium gluconate, monosodium glutamate, sodium tartrate, monosodium aspartate, sodium lactate, sodium caseinate, sodium ascorbate, and a mixture thereof.

In an embodiment of the present invention, sodium from a sodium component (for example, sodium benzoate, sodium sulfite, sodium hyposulfite, sodium dehydroacetate, sodium pyrosulfite, and sodium propionate) used as a preservative is not substantially included in the component (c).

The content of sodium in the beverage can be herein measured by an atomic absorption spectrometry, X-ray fluorescence analysis, and the like. Note that, when an amount of a sodium-containing compound contained in the beverage is known, a value calculated from the contained amount can also be adopted.

In an embodiment of the present invention, an amount of sodium contained in the oral composition can be defined by an amount of sodium source. The "sodium source" means a compound which generates sodium ions when the oral composition is put in the mouth. The amount of the sodium source can be less than 26 mM when the compound contains one sodium atom. In other embodiments of the present invention, the amount of the sodium source is about 25mM or less, about 24mM or less, about 23mM or less, about 22mM or less, about 21mM or less, about 20mM or less, about 19mM or less, about 18mM or less, about 17mM or less, about 16mM or less, about 15mM or less, about 14mM or less, about 13mM or less, about 12mM or less, about 11mM or less, about 10mM or less, about 9.0mM or less, about 8.5mM or less, about 8.0mM or less, about 8.5mM or less, about 7.0mM or less, about 7.5mM or less, about 6.0mM or less, about 5.5mM or less, about 5.0mM or less, about 4.5mM or less, about 4.0mM or less, about 3.5mM or less, about 2.0mM or less, about 1.5mM or less, about 1.0mM or less or about 0.5mM or less. In other embodiments, the amount of the sodium source may be in the range of about 0.1 to about 25mM, about 0.5 to about 25mM, about 1.0 to about 25mM, about 1.5 to about 25mM, about 2.0 to about 25mM, about 2.5 to about 25mM, about 3.0 to about 25mM, about 3.5 to about 25mM, about 4.0 to about 25mM, about 4.5 to about 25mM, about 5.0 to about 25mM, about 5.5 to about 25mM, about 6.0 to about 25mM, about 6.5 to about 25mM, about 7.0 to about 25mM, about 7.5 to about 25mM, about 8.0 to about 25mM, about 8.5 to about 25mM, about 9.0 to about 25mM, about 9.5 to about 25mM, about 0.1 to about 19mM, about 0.5 to about 19mM, about 1.0 to about 19mM, about 1.5 to about 19mM, about 2.0 to about 19mM, about 2.5 to about 19mM, about 3.0 to about 19mM, about 3.5 to about 19mM, about 4.0 to about 19mM, about 4.5 to about 19mM, about 5.0 to about 19mM, about 5.5 to about 19mM, about 6.0 to about 19mM, about 6.5 to about 19mM, about 7.0 to about 19mM, about 7.5 to about 19mM, about 8.0 to about 19mM, about 8.5 to about 19mM, about 9.0 to about 19mM, about 9.5 to about 19mM, about 0.1 to about 15mM, about 0.5 to about 15mM, about 1.0 to about 15mM, about 1.5 to about 15mM, about 2.0 to about 15mM, about 2.5 to about 15mM, about 3.0 to about 15mM, about 3.5 to about 15mM, about 4.0 to about 15mM, about 4.5 to about 15mM, about 5.0 to about 15mM, about 5.5 to about 15mM, about 6.0 to about 15mM, about 6.5 to about 15mM, about 7.0 to about 15mM, about 7.5 to about 15mM, about 8.0 to about 15mM, about 8.5 to about 15mM, about 9.0 to about 15mM, about 9.5 to about 15mM, about 0.1 to about 9.9mM, about 0.5 to about 9.9mM, about 1.0 to about 9.9mM, about 1.5 to about 9.9mM, about 2.0 to about 9.9mM, about 2.5 to about 9.9mM, about 3.0 to about 9.9mM, about 3.5 to about 9.9mM, about 4.0 to about 9.9mM, about 4.5 to about 9.9mM, about 5.0 to about 9.9mM, about 5.5 to about 9.9mM, about 6.0 to about 9.9mM, about 6.5 to about 9.9mM, about 7.0 to about 9.9mM, about 7.5 to about 9.9mM, about 8.0 to about 9.9mM, about 8.5 to about 9.9mM, about 9.0 to about 9.9mM, about 9.5 to about 9.9mM, about 0.1 to about 9.5mM, about 0.1 to about 9.0mM, about 0.1 to about 8.5mM, about 0.1 to about 8.0mM, about 0.1 to about 7.5mM, about 0.1 to about 7.0mM, about 0.1 to about 6.5mM, about 0.1 to about 6.0mM, about 0.1 to about 5.5mM, about 0.1 to about 5.0mM, about 0.1 to about 4.5mM, about 0.1 to about 4.0mM, about 0.1 to about 3.5mM, about 0.1 to about 3.0mM, about 0.1 to about 2.5mM, about 0.1 to about 2.0mM, about 0.1 to about 1.5mM, about 0.1 to about 1.0mM, about 0.1 to about 0.5mM, about 0.5 to about 9.5mM, about 0.5 to about 9.5mM, about 0.5 to about 9.0mM, about 0.5 to about 8.5mM, about 0.5 to about 8.0mM, about 0.5 to about 7.5mM, about 0.5 to about 7.0mM, about 0.5 to about 6.5mM, about 0.5 to about 6.0mM, about 0.5 to about 5.5mM, about 0.5 to about 5.0mM, about 0.5 to about 4.5mM, about 0.5 to about 4.0mM, about 0.5 to about 3.5mM, about 0.5 to about 3.0mM, about 0.5 to about 2.5mM, about 0.5 to about 2.0mM, about 0.5 to about 1.5mM, about 0.5 to about 1.0mM, about 1.0 to about 9.5mM, about 1.0 to about 9.0mM, about 1.0 to about 8.5mM, about 1.0 to about 8.0mM, about 1.0 to about 7.5mM, about 1.0 to about 7.0mM, about 1.0 to about 6.5mM, about 1.0 to about 6.0mM, about 1.0 to about 5.5mM, about 1.0 to about 5.0mM, about 1.0 to about 4.5mM, about 1.0 to about 4.0mM, about 1.0 to about 3.5mM, about 1.0 to about 3.0mM, about 1.0 to about 2.5mM, about 1.0 to about 2.0mM, about 1.0 to about 1.5mM, about 1.5 to about 9.5mM, about 1.5 to about 9.0mM, about 1.5 to about 8.5mM, about 1.5 to about 8.0mM, about 1.5 to about 7.5mM, about 1.5 to about 7.0mM, about 1.5 to about 6.5mM, about 1.5 to about 6.0mM, about 1.5 to about 5.5mM, about 1.5 to about 5.0mM, about 1.5 to about 4.5mM, about 1.5 to about 4.0mM, about 1.5 to about 3.5mM, about 1.5 to about 3.0mM, about 1.5 to about 2.5mM, about 1.5 to about 2.0mM, about 2.0 to about 9.5mM, about 2.0 to about 9.0mM, about 2.0 to about 8.5mM, about 2.0 to about 8.0mM, about 2.0 to about 7.5mM, about 2.0 to about 7.0mM, about 2.0 to about 6.5mM, about 2.0 to about 6.0mM, about 2.0 to about 5.5mM, about 2.0 to about 5.0mM, about 2.0 to about 4.5mM, about 2.0 to about 4.0mM, about 2.0 to about 3.5mM, about 2.0 to about 3.0mM, about 2.0 to about 2.5mM, about 2.5 to about 9.5mM, about 2.5 to about 9.0mM, about 2.5 to about 8.5mM, about 2.5 to about 8.0mM, about 2.5 to about 7.5mM, about 2.5 to about 7.0mM, about 2.5 to about 6.5mM, about 2.5 to about 6.0mM, about 2.5 to about 5.5mM, about 2.5 to about 5.0mM, about 2.5 to about 4.5mM, about 2.5 to about 4.0mM, about 2.5 to about 3.5mM, about 2.5 to about 3.0mM, about 3.0 to about 9.5mM, about 3.0 to about 9.0mM, about 3.0 to about 8.5mM, about 3.0 to about 8.0mM, about 3.0 to about 7.5mM, about 3.0 to about 7.0mM, about 3.0 to about 6.5mM, about 3.0 to about 6.0mM, about 3.0 to about 5.5mM, about 3.0 to about 5.0mM, about 3.0 to about 4.5mM, about 3.0 to about 4.0mM, about 3.0 to about 3.5mM, about 3.5 to about 9.5mM, about 3.5 to about 9.0mM, about 3.5 to about 8.5mM, about 3.5 to about 8.0mM, about 3.5 to about 7.5mM, about 3.5 to about 7.0mM, about 3.5 to about 6.5mM, about 3.5 to about 6.0mM, about 3.5 to about 5.5mM, about 3.5 to about 5.0mM, about 3.5 to about 4.5mM, about 3.5 to about 4.0mM, about 4.0 to about 9.5mM, about 4.0 to about 9.0mM, about 4.0 to about 8.5mM, about 4.0 to about 8.0mM, about 4.0 to about 7.5mM, about 4.0 to about 7.0mM, about 4.0 to about 6.5mM, about 4.0 to about 6.0mM, about 4.0 to about 5.5mM, about 4.0 to about 5.0mM, about 4.0 to about 4.5mM, about 4.5 to about 9.5mM, about 4.5 to about 9.0mM, about 4.5 to about 8.5mM, about 4.5 to about 8.0mM, about 4.5 to about 7.5mM, about 4.5 to about 7.0mM, about 4.5 to about 6.5mM, about 4.5 to about 6.0mM, about 4.5 to about 5.5mM, about 4.5 to about 5.0mM, about 5.0 to about 9.5mM, about 5.0 to about 9.0mM, about 5.0 to about 8.5mM, about 5.0 to about 8.0mM, about 5.0 to about 7.5mM, about 5.0 to about 7.0mM, about 5.0 to about 6.5mM, about 5.0 to about 6.0mM, about 5.0 to about 5.5mM, about 5.5 to about 9.5mM, about 5.5 to about 9.0mM, about 5.5 to about 8.5mM, about 5.5 to about 8.0mM, about 5.5 to about 7.5mM, about 5.5 to about 7.0mM, about 5.5 to about 6.5mM, about 5.5 to about 6.0mM, about 6.0 to about 9.5mM, about 6.0 to about 9.0mM, about 6.0 to about 8.5mM, about 6.0 to about 8.0mM, about 6.0 to about 7.5mM, about 6.0 to about 7.0mM, about 6.0 to about 6.5mM, about 6.5 to about 9.5mM, about 6.5 to about 9.0mM, about 6.5 to about 8.5mM, about 6.5 to about 8.0mM, about 6.5 to about 7.5mM, about 6.5 to about 7.0mM, about 7.0 to about 9.5mM, about 7.0 to about 9.0mM, about 7.0 to about 8.5mM, about 7.0 to about 8.0mM or about 7.0 to about 7.5mM.

[Phospholipid]

The oral composition of the present invention comprises (c) phospholipid in an amount less than a taste recognition threshold. A phospholipid used in the present invention is an amphipathic lipid having, in the structure, a phosphorus atom in the form of a phosphoric acid ester. The phospholipid encompasses a glycerophospholipid using glycerin as a skeleton, and a sphingophospholipid using sphingosine as a skeleton. The glycerophospholipid representatively has a structure in which fatty acid is ester-bonded in the 1- and 2-positions, and phosphoric acid is ester-bonded in the 3-position of glycerin, and an alcohol such as choline, ethanolamine, serine, or inositol is ester-bonded to a phosphoric acid group. A polar (hydrophilic) portion including the glycerin, the phosphoric acid group and the alcohol ester is designated as a head, and a nonpolar (hydrophobic) fatty acid is designated as a tail. Besides, a partial structure including the glycerin, the fatty acid, and the phosphoric acid is designated as phosphatidic acid. Non-restrictive examples of the glycerophospholipid include phosphatidylcholine (PC), phosphatidylethanolamine (PE), phosphatidylinositol (PI), phosphatidylserine (PS), phosphatidylglycerol (PG), and cardiolipin. A non-restrictive example of the sphingophospholipid includes sphingomyelin (SM). In a usual phospholipid, two fatty acids are bonded to the basic skeleton of glycerin or sphingosine, and a phospholipid in which merely one fatty acid is bonded is designated as lysophospholipid. Non-restrictive examples of the lysophospholipid include lysoglycerophospholipids such as lysophosphatidylcholine (LPC), lysophosphatidylethanolamine (LPE), lysophosphatidylinositol (LPI), lysophosphatidylserine (LPS), and lysophosphatidylglycerol (LPG), and lysosphingophospholipid such as lysosphingomyelin (LSM). In a lysoglycerophospholipid, fatty acid is bonded to the 1- or 2-position of glycerin. In an embodiment, the phospholipid encompasses lysophospholipids. In an embodiment, the phospholipid encompasses zwitterionic phospholipids. A zwitterionic phospholipid is a lipid having, in a molecule, both a positive charge and a negative charge. Non-restrictive examples of the zwitterionic phospholipid include PC, PE, LPC, and LPE. In a specific embodiment, the phospholipid encompasses zwitterionic lysophospholipids (such as LPC, and LPE).

A fatty acid contained in the phospholipid may be a saturated fatty acid or an unsaturated fatty acid. A phospholipid containing two fatty acids, such as a glycerophospholipid, may have a saturated fatty acid in the 1-position and an unsaturated fatty acid in the 2-position of glycerin, or may have an unsaturated fatty acid in the 1-position and a saturated fatty acid in the 2-position, or alternatively, both of the two may be saturated fatty acids or both of the two may be unsaturated fatty acids. The fatty acid may have various lengths, and the number of carbon atoms contained in the fatty acid is not limited but may be, for example, 8 or more, 10 or more, 12 or more, 14 or more, 15 or more, 16 or more, 8 to 30, 10 to 28, 12 to 26, 14 to 24, 15 to 23, 16 to 22, 8, 9, 10, 12, 14, 15, 16, 17, 18, 20, 22, 24, 26, 28 or 30. A phospholipid containing two fatty acids can contain an optional combination of fatty acids respectively having the numbers of carbon atoms described above. In an embodiment, the number of carbon atoms contained in the fatty acid is 14, 15, 16, 17, 18, 20, 22 or 23. In an embodiment of a phospholipid containing two fatty acids, a combination of the numbers of carbon atoms of the fatty acids is selected from (14, 18), (16, 16), (15, 18), (16, 18), (17, 18), (18, 18), (18, 20), (18, 22) and (18, 23). In an embodiment, molecular species of the fatty acid contained in the phospholipid is selected from (14:0), (15:0), (16:0), (16:1), (17:0), (17:1), (18:0), (18:1), (18:2), (18:3), (20:0), (20:1), (22:0) and (23:0). Here, a numerical value before the colon in parentheses indicates the number of carbon atoms of the fatty acid, and a numerical value after the colon indicates the number of double bonds contained in the fatty acid. For example, (16:1) denotes a fatty acid containing one double bond, and having 16 carbon atoms. In an embodiment, a combination of molecular species of fatty acids contained in a phospholipid containing two fatty acids is selected from (14:0, 18:2), (14:0, 18:1), (16:0, 16:0), (15:0, 18:2), (16:1, 18:2), (16:0, 18:2), (16:0, 18:1), (17:1, 18:2), (17:0, 18:1), (18:3, 18:3), (18:2, 18:3), (18:2, 18:2), (18:1, 18:2), (18:1, 18:1), (18:2, 20:1), (18:2, 20:0), (18:2, 22:0) and (18:2, 23:0).

In a specific embodiment, the phospholipid is selected from LPC(14:0), 2-LPC(16:0), 1-LPC(16:0), LPC(17:0), 2-LPC(18:3), 1-LPC(18:3), LPC(18:2), 2-LPC(18:1), 1-LPC(18:1), LPC(18:0), LPC(20:0), LPC(22:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0) and PC(18:2, 23:0). Here, LPC indicates lysophosphatidylcholine, 1-LPC indicates lysophosphatidylcholine in which a fatty acid is confirmed to be bonded to the 1-position of glycerin, 2-LPC indicates lysophosphatidylcholine in which a fatty acid is confirmed to be bonded to the 2-position of glycerin, and PC indicates phosphatidylcholine.

The phospholipid may be one purified from a living thing. In an exemplary embodiment, the phospholipid can be from plants (particularly, plants containing fats/oils) such as soybean, rapeseed, sunflower, oil palm, sesame, corn, peanut, olive, cotton, and linum, or egg yolk or the like. In a specific embodiment, the phospholipid is from a plant selected from soybean, rapeseed, sunflower, and oil palm.

The phospholipid may be purified from a living thing, or a commercially available product may be used. The phospholipid can be purified by any of known optional methods. Representatively, a phospholipid can be obtained by squeezing an oil content from a raw material, adding hot water to the oil content to hydrate a phospholipid, collecting a gummy substance, and drying and filtering the resultant. Examples of the commercially available product include Lecion® P, Lecion® LP-1, and Lecimal® EL manufactured by Riken Vitamin Co., Ltd., and SLP-paste, SLP-white, SLP-PC35, SLP-PC70, SLP-PI powder A, SLP-paste lyso, SLP-white lyso, and SLP-LPC70 manufactured by Tsuji Oil Mills Co., Ltd. A phospholipid product for foods is preferred. A product containing a phospholipid is designated as lecithin in some cases.

The oral composition of the present invention may contain one or more phospholipids. The oral composition of the present invention may contain, for example, a mixture of two or more of the above-described phospholipids. A phospholipid purified from a living thing contains a plurality of molecular species in many cases. In a specific embodiment, the phospholipid contains a combination of molecular species selected from Table 2 below.

Table 2 Exemplary combination of molecular species

| | Combination of molecular species |
|---|---|
| 1 | 1-LPC(16:0), 1-LPC(18:3), LPC(18:2), 2-LPC(18:1), 1-LPC(I 8: 1), LPC(18:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0) |
| 2 | 2-LPC(16:0), 1-LPC(16:0), LPC(18:2), 2-LPC(18:1), 1-LPC(18:1), LPC(18:0), LPC(22:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |
| 3 | PC(16:0, 18:2), PC(16:0, 18:1), PC(18:2, 18:3), PC(18:2, 18:2), PC(18:1, 18:2), PC(18:1, 18:1) |
| 4 | LPC(14:0), 2-LPC(16:0), 1-LPC(16:0), LPC(17:0), 2-LPC(18:3), 1-LPC(18:3), LPC(18:2), 2-LPC(18:1), 1-LPC(18:1), LPC(18:0), LPC(20:0), LPC(22:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |
| 5 | 2-LPC(16:0), 1-LPC(16:0), LPC(17:0), 2-LPC(18:3), 1-LPC(18:3), LPC(18:2), 2-LPC(18:1), 1-LPC(18:1), LPC(18:0), LPC(20:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |

(continued)

| | Combination of molecular species |
|---|---|
| 6 | 2-LPC(16:0), 1-LPC(16:0), 2-LPC(18:3), 1-LPC(18:3), LPC(18:2), 2-LPC(18:1), 1-LPC(18:1), LPC(18:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |

As used herein, the threshold of phospholipids, high-intensity sweeteners, and the like means a detection threshold or a taste recognition threshold. The detection threshold means a minimum concentration at which the difference from water can be clearly identified but a type of the taste (for example, bitterness, sourness, and sweetness) does not have to be always recognized, and the taste recognition threshold means a minimum concentration at which a taste can be recognized (for example, Eur J Clin Nutr (2004) 58, 629-636). Additionally, the taste recognition threshold is known to be about 1.5 to 2 times the detection threshold (Yuki Yamauchi et al., WHOLE MOUTH GUSTATORY TEST (PART1) - BASIC CONSIDERATIONS AND PRINCIPAL COMPONENT ANALYSIS -", Journal of The Oto-Rhino-Laryngological Society of Japan, vol. 98 (1995) No. 1, p.119-129, and Reiko Ohmori, "Comparisons of the taste sensitivity between three generations", The bulletin of the Faculty of Education, Utsunomiya University, Section 1 (2013) Vol. 63 p.201-210)).

In the present invention, it is preferable that a measured value be used as the taste recognition threshold. A taste recognition threshold of a substance can be determined by preparing aqueous solutions containing the substance in several concentration levels and tasting in the order from low concentrations to high concentrations to carry out a sensory test by which the taste can be sensed or not. A concentration at which a difference from water is detected is defined as a taste detection threshold and a concentration at which a taste is recognized is defined as a taste recognition threshold. For example, for a substance for which a theoretical value (a literature value) is already established, aqueous solutions in several concentration levels close to such a concentration are prepared and several persons who received sensory trainings carry out the test thereby to determine these thresholds. In an embodiment of the present invention, the taste recognition threshold means a taste recognition threshold in pure water. The taste recognition threshold in pure water means, for example in case of the phospholipid in the oral composition of the present invention, a minimum concentration at which such a taste can be recognized when only the phospholipid is added to water without addition of any sweetener or the like. The taste recognition threshold of the phospholipid can vary depending on species of a living thing from which it is derived, or a combination of molecular species contained therein, and is representatively about 10 to about 250 $\mu$g/mL, and when aqueous solutions at a plurality of concentration levels within this range are prepared, a sensory test can be efficiently performed.

The concentration of the phospholipid contained in the oral composition of the present invention is not limited, and may be, for example, less than about 250 $\mu$g/ mL, less than about 240 $\mu$g/ mL, less than about 230 $\mu$g/ mL, less than about 220 $\mu$g/ mL, less than about 210 $\mu$g/ mL, less than about 200 $\mu$g/ mL, less than about 190 $\mu$g/ mL, less than about 180 $\mu$g/ mL, less than about 170 $\mu$g/ mL, less than about 160 $\mu$g/ mL, less than about 150 $\mu$g/ mL, less than about 140 $\mu$g/ mL, less than about 130 $\mu$g/ mL, less than about 120 $\mu$g/ mL, less than about 110 $\mu$g/ mL, less than about 100 $\mu$g/ mL, less than about 95 $\mu$g/ mL, less than about 90 $\mu$g/ mL, less than about 85 $\mu$g/ mL, less than about 80 $\mu$g/ mL, less than about 75 $\mu$g/ mL, less than about 70 $\mu$g/ mL, less than about 65 $\mu$g/ mL, less than about 60 $\mu$g/ mL, less than about 55 $\mu$g/ mL, less than about 50 $\mu$g/ mL, less than about 45 $\mu$g/ mL, less than about 40 $\mu$g/ mL, less than about 35 $\mu$g/ mL, less than about 30 $\mu$g/ mL, less than about 25 $\mu$g/ mL, less than about 20 $\mu$g/ mL, less than about 19 $\mu$g/ mL, less than about 18 $\mu$g/ mL, less than about 17 $\mu$g/ mL, less than about 16 $\mu$g/ mL, less than about 15 $\mu$g/ mL, less than about 14 $\mu$g/ mL, less than about 13 $\mu$g/ mL, less than about 12.5 $\mu$g/ mL, less than about 12 $\mu$g/ mL, less than about 11 $\mu$g/ mL, less than about 10 $\mu$g/ mL, less than about 9 $\mu$g/ mL, less than about 8 $\mu$g/ mL, less than about 7 $\mu$g/ mL, less than about 6.25 $\mu$g/ mL, less than about 6 $\mu$g/ mL, less than about 5 $\mu$g/ mL, less than about 4 $\mu$g/ mL, less than about 3.125 $\mu$g/ mL, less than about 3 $\mu$g/ mL, less than about 2 $\mu$g/ mL, less than about 1.6125 $\mu$g/ mL, less than about 1.5 $\mu$g/ mL or less than about 1 $\mu$g/ mL.

In an embodiment, the concentration of the phospholipid contained in the oral composition of the present invention is not limited, and may be, for example, about 1.6125 to about 12.5 $\mu$g/ mL, about 3.125 to about 12.5 $\mu$g/ mL, about 3.125 to about 25 $\mu$g/ mL, about 6.25 to about 25 $\mu$g/ mL, about 6.25 to about 50 $\mu$g/ mL, about 12.5 to about 25 $\mu$g/ mL, about 25 to about 50 $\mu$g/ mL, about 100 to about 150 $\mu$g/ mL or about 100 to about 200 $\mu$g/ mL.

[Optional component]

(Sweetener)

The oral composition of the present invention can contain a sweetener other than the high-intensity sweetener of the component (a). In the present description, the "sweetener" means any substance or a substance group which causes a sweetness response. Sweeteners can be classified into carbohydrate sweeteners and non-carbohydrate sweeteners based on structural characteristics and also into low-intensity sweeteners and high-intensity sweeteners based on the degree of sweetness. Further, sweet substances can also be classified based on the energy (calorie) into caloric sweeteners and non-caloric sweeteners. Further, sweet substances can also be classified based on the availability into natural sweeteners and artificial sweeteners.

The carbohydrate sweetener is not limited and examples include starch sugars such as sucrose, lactose, glucose, maltose, starch syrup, a high-fructose corn syrup, and fructose, sugar alcohols such as erythritol, sorbitol, mannitol, maltitol, xylitol, and palatinit, palatinose, fructooligosaccharide, Coupling Sugar®, galactooligosaccharide, lactosucrose, raffinose, soyoligosaccharide, and honey. Further, the carbohydrate sweetener includes rare sugars.

The rare sugar refers to a monosaccharide that occurs in very small quantities in nature and derivatives thereof. For example, the rare sugar includes naturally occurring aldoses other than D-glucose, D-galactose, D-mannose, D-ribose, D-xylose, and L-arabinose, naturally occurring ketoses other than D-fructose, and naturally occurring sugar alcohols other than D-sorbitol. Nonrestrictive examples of the rare sugar include ketoses such as D-tagatose, D-sorbose, D-allulose (D-psicose), L-fructose, L-allulose (L-psicose), L-tagatose, and L-sorbose, aldoses such as altrose and D-allose, and sugar alcohols such as xylitol, erythritol, and D-talitol.

The caloric sweetener typically means sweet substances having an energy of 4 kcal/g. An energy of a sweet substance is already known or can be determined by measuring a content by HPLC or the like and calculating by multiplying the content by an energy conversion factor, or measuring a heat of physical combustion using a calorie meter (for example, bomb calorimeter) and correcting the heat with a digestion-absorption rate, an excreted heat or the like. Nonrestrictive examples of the caloric sweetener include sucrose, lactose, glucose, maltose, starch syrup, a high-fructose corn syrup, and fructose.

The non-caloric sweeteners typically refer to those having the nature of being difficult to be digested in the body and consequently having a reduced energy to be taken into and means sweet substances having an energy of less than 2 kcal/g, preferably less than 1 kcal/g, and further preferably less than 0.5 kcal/g. Nonrestrictive examples of the non-caloric sweetener include non-caloric hexoses such as allulose (psicose) and allose, non-caloric pentoses such as xylose and arabinose, non-caloric tetroses such as erythrose and threose, and non-caloric sugar alcohols such as erythritol and allitol.

Further, the sweet substances can also be classified based on the energy (calorie) level. For example, the sweet substances can be classified into sweet substances having an energy of 4 kcal/g or more and sweet substances having an energy of less than 4 kcal/g. The sweet substances having an energy of less than 4 kcal/g can further be classified into sweet substances having an energy of less than 3 kcal/g, sweet substances having an energy of less than 2.5 kcal/g, sweet substances having an energy of less than 2 kcal/g, sweet substances having an energy of less than 1.5 kcal/g, sweet substances having an energy of less than 1 kcal/g, sweet substances having an energy of less than 0.5 kcal/g, sweet substances having an energy of 1 kcal/g or more and less than 4 kcal/g, sweet substances having an energy of 2 kcal/g or more and less than 4 kcal/g, sweet substances having an energy of 3 kcal/g or more and less than 4 kcal/g, sweet substances having an energy of 2 kcal/g or more and less than 3 kcal/g, sweet substances having an energy of 1 kcal/g or more and less than 2 kcal/g, sweet substances having an energy of 0 kcal/g or more and less than 2 kcal/g, or sweet substances having an energy of 0 kcal/g or more and less than 1 kcal/g. Examples of the sweet substance having an energy of 4 kcal/g or more include sucrose, lactose, glucose, maltose, starch syrup, a high-fructose corn syrup, and fructose, examples of the sweet substance having an energy of 2 kcal/g or more and less than 4 kcal/g include sorbitol, xylitol, D-xylose, D-ribose, D-tagatose, and arabinose, and examples of the sweet substance having an energy of 0 kcal/g or more and less than 2 kcal/g include D-allulose, erythritol, allose, erythrose, threose, and allitol.

The low-intensity sweetener means a compound having about the same degree of sweetness as that of sucrose (for example, less than 5 times, about 0.1 to 2 times, about 0.5 to 1.5 times that of sucrose). Nonrestrictive examples of the low-intensity sweetener include low-intensity sugar sweeteners such as sucrose, a high-fructose corn syrup, glucose, fructose, lactose, maltose, xylose, lactulose, fructooligosaccharide, maltooligosaccharide, isomaltooligosaccharide, galactooligosaccharide, Coupling Sugar®, and palatinose, and sugar alcohol low-intensity sweeteners such as maltitol, sorbitol, erythritol, xylitol, lactitol, palatinit, and reduced starch saccharified products. Further, the low-intensity sweetener includes rare sugars, caloric sweeteners, non-caloric sweeteners, carbohydrate sweeteners, non-carbohydrate sweeteners, natural sweeteners, and artificial sweeteners as long as the degree of sweetness is in the above range.

The oral composition in an embodiment of the present invention contains a low-intensity sweetener. In this embodiments of the present invention, the following oral composition (hereinafter, also referred to as the oral composition of Embodiment A) is provided.

An oral composition comprising:

(a) a high-intensity sweetener in an amount corresponding to a sweetness intensity X1,
(b) 60 mg/100 mL or less of sodium,

(c) a phospholipid in an amount less than a taste recognition threshold, and
(d) a low-intensity sweetener in an amount corresponding to a sweetness intensity X5 (hereinafter, sometimes abbreviated as the "component (d)".),

wherein the oral composition has a sweetness of a sweetness intensity X6 exhibited by the components (a) to (d), and $0.1 < X1 + X5 < X6$ is satisfied. The oral composition in an embodiment of the present invention does not contain a component as a sweetener other than (a) a high-intensity sweetener in an amount corresponding to a sweetness intensity X1 and (d) a low-intensity sweetener in an amount corresponding to a sweetness intensity X5.

In an embodiment of the present invention, the low-intensity sweetener contains a sweetener selected from hexose, pentose, tetrose, a polysaccharide having a terminal sugar of aldose or ketose, sugar alcohols, and a combination thereof. In other embodiments of the present invention, the low-intensity sweetener contains a sweetener selected from glucose, sucrose, fructose, maltose, an oligosaccharide, a high-fructose corn syrup, lactose, psicose, allose, tagatose, xylose, ribose, and a combination thereof. In still another embodiment of the present invention, the low-intensity sweetener contains a sweetener selected from glucose, sucrose, fructose, and a combination thereof.

X5 in the "sweetness intensity X5" may be 0 to 0.5, 0 to 1.0, 0 to 1.5, 0 to 2.0, 0 to 2.5, 0 to 3.0, 0 to 3.5, 0 to 4.0, 0 to 4.5, 0 to 5.0, 0 to 5.5, 0 to 6.0, 0 to 6.5, 0 to 7.0, 0 to 7.5, 0 to 8.0, 0 to 8.25, 0 to 8.5, 0 to 8.75, 0 to 9.0, 0 to 9.25, 0 to 9.5, 0 to 9.75, 0 to 10.0, 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 0.5 to 6.0, 0.5 to 6.5, 0.5 to 7.0, 0.5 to 7.5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, 2.5 to 10.0, 0.1 to 5.9, 3.0 to 3.5, 3.0 to 4.0, 3.0 to 4.5, 3.0 to 5.0, or 3.0 to 5.5.

X5 may also be 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5 or 2.5 to 15.0.

The amount corresponding to a sweetness intensity X5 of a low-intensity sweetener refers to an amount (concentration) which provides a sweetness of a sweetness intensity X5 under the conditions when the low-intensity sweetener is dissolved in water having the same volume as the oral composition of the present invention at 20°C.

X6 is not particularly limited as long as it is greater than X1 + X5 and may be 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15 or 10.5 to 12.5

X6 may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16 or 10.5 to 15.5.

(Other components)

The oral composition of the present invention can suitably contain an antioxidant (sodium erythorbate or the like), an emulsifier (sucrose esters of fatty acids, sorbitan esters of fatty acids, polyglycerin esters of fatty acids or the like), an acidulant (phosphoric acid, citric acid, malic acid or the like), and a flavor, as long as the effects of the present invention are not affected.

[Exemplary embodiments of the oral composition of the present invention]

In an embodiment of the present invention, an oral composition is provided comprising:

(a) a high-intensity sweetener in an amount corresponding to a sweetness intensity X1,
(b) 60 mg/100 mL or less, 3 to 60 mg/100 mL, 4 to 60 mg/100 mL or 5 to 50 mg/100 mL of sodium, and
(c) a phospholipid in an amount less than a taste recognition threshold,

wherein the oral composition has a sweetness of a sweetness intensity X2 exhibited by the components (a) to (c), and 0.1 < X1 < X2 is satisfied,
wherein the high-intensity sweetener comprises a high-intensity sweetener selected from RebA, RebD, RebM, MogV, a luo han guo extract, and a combination thereof, preferably a high-intensity sweetener selected from RebD, RebM, and a combination thereof,
X1 is 0.5 to 9.0, preferably 1.0 to 8.0, and more preferably 2.0 to 6.0.

In the present embodiment, the amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, an oral composition is provided comprising:

(a) about 20 to about 600ppm of a high-intensity sweetener,
(b) 60 mg/100 mL or less, 3 to 60 mg/100 mL, 4 to 60 mg/100 mL or 5 to 50 mg/100 mL of sodium, and
(c) less than about 250 $\mu$g/ mL, about 10 to about 250 $\mu$g/ mL, about 1.6125 to about 12.5 $\mu$g/ mL, about 3.125 to about 12.5 $\mu$g/ mL, about 3.125 to about 25 $\mu$g/ mL, about 6.25 to about 25 $\mu$g/ mL, about 6.25 to about 50 $\mu$g/ mL, about 12.5 to about 25 $\mu$g/ mL, about 25 to about 50 $\mu$g/ mL, about 100 to about 150 $\mu$g/ mL or about 100 to about 200 $\mu$g/ mL of a phospholipid,

wherein the high-intensity sweetener optionally comprises a high-intensity sweetener selected from RebA, RebD, RebM, MogV, a luo han guo extract, and a combination thereof, preferably a high-intensity sweetener selected from RebD, RebM, MogV, a luo han guo extract, and a combination thereof, more preferably a high-intensity sweetener selected from RebD, RebM, and a combination thereof.

In an embodiment of the present invention, a beverage selected from a fruit- and vegetable-based beverage, a flavored water, a tea-based beverage, and a carbonated beverage is provided comprising:

(a) about 20 to about 600ppm of a high-intensity sweetener,
(b) 60 mg/100 mL or less, 3 to 60 mg/100 mL, 4 to 60 mg/100 mL or 5 to 50 mg/100 mL of sodium, and
(c) about 10 to about 250 $\mu$g/ mL, about 1.6125 to about 12.5 $\mu$g/ mL, about 3.125 to about 12.5 $\mu$g/ mL, about 3.125 to about 25 $\mu$g/ mL, about 6.25 to about 25 $\mu$g/ mL, about 6.25 to about 50 $\mu$g/ mL, about 12.5 to about 25 $\mu$g/ mL, about 25 to about 50 $\mu$g/ mL, about 100 to about 150 $\mu$g/ mL or about 100 to about 200 $\mu$g/ mL of a phospholipid, for example, less than about 25 $\mu$g/ mL, about 3.125 to about 25 $\mu$g/ mL or about 6.25 to about 25 $\mu$g/ mL of phospholipid from soybean.

wherein the high-intensity sweetener comprises a high-intensity sweetener selected from RebA, RebD, RebM, MogV, a luo han guo extract, and a combination thereof, preferably a high-intensity sweetener selected from RebD, RebM, MogV, a luo han guo extract, and a combination thereof, more preferably a high-intensity sweetener selected from RebD, RebM, and a combination thereof.

2. Method for producing an oral composition

The present invention provides, as the second embodiment, the following method for producing the oral composition with an enhanced sweetness (hereinafter, referred to as "the production method of the present invention").

A method for producing the oral composition of the present invention comprising:

(a) adding a high-intensity sweetener in an amount corresponding to a sweetness intensity X1,
(b) adding sodium to obtain a sodium content in the composition of 60 mg/100 mL or less, and
(c) adding a phospholipid in an amount less than a taste recognition threshold.

The oral composition produced by the method of the present invention is the oral composition of the present invention described in the above section "1. Oral composition in which sweetness exhibited by high-intensity sweetener is increased." Additionally, the "raw material" in the method of the present invention can be each material or a mixture thereof required for the production of the oral composition, and can further include additional components such as a preservative, a flavor, a carrier, a fruit juice. The "raw material" can be made up of several materials.

In the method of the present invention, any of the following (a) to (c) can be carried out first.

(a) adding the high-intensity sweetener in an amount corresponding to a sweetness intensity X1,
(b) adding the sodium to obtain a sodium content in the composition of 60 mg/100 mL or less, and
(c) adding the phospholipid in an amount less than a taste recognition threshold.

Two or more steps can be carried out simultaneously. For example, (a) and (b), (a) and (c), (b) and (c), or (a) and (b) and (c) can be carried out simultaneously.

In Step (a), a high-intensity sweetener in an amount corresponding to a sweetness intensity X1 is added to the raw material, but a high-intensity sweetener in an amount corresponding to a sweetness intensity X1 does not need to be added at once, and can be added in several divided batches.

Similarly, when sodium is added in Step (b) to obtain a sodium content in the composition of 60 mg/100 mL or less, sodium does not need to be added at once but can be added in several divided batches. Sodium (or a sodium source) added to the raw material in Step (b) can be selected from sodium (or the sodium sources) described in the above section "1. Oral composition in which sweetness exhibited by high-intensity sweetener is increased."

Similarly, when a phospholipid of less than a taste recognition threshold is added in Step (c), the phospholipid of less than a taste recognition threshold does not need to be added at once but can be added in several divided batches. The phospholipid added to the raw material in Step (c) can be selected from the phospholipids described in the above section "1. Oral composition in which sweetness exhibited by high-intensity sweetener is increased".

The "addition" herein means not only the actual operation of adding either of the components (a), (b) and (c) to the raw materials but also the operation of adjusting amounts of the components (a), (b), and (c) to predetermined amounts respectively in the oral composition to be finally produced through the production process of the oral composition of the present invention.

For example, a case in which when the first raw material contains a fruit juice, a grain, and extracts thereof and accordingly the raw material contains one or more of any of the components (a), (b), and (c) in advance, and the second raw material to be mixed with the first raw material also contains the components (a), (b), and (c) whereby the oral composition of the present invention can be produced by mixing the first and the second raw materials, the operation of individually adding the components (a), (b), and (c) to the raw materials is not carried out but in the method of the present invention Steps (a) to (c) are considered to have been carried out as long as the oral composition of the present invention to be finally produced comprises (a) a high-intensity sweetener in an amount corresponding to a sweetness intensity X1, (b) 60 mg/100 mL or less of sodium, and (c) a phospholipid in an amount less than a taste recognition threshold.

The production method of an embodiment of the present invention (hereinafter, also referred to as the production method of Embodiment A) further comprises adding (d) a low-intensity sweetener in an amount corresponding to a sweetness intensity X5. The production method of Embodiment A enables the production of the oral composition of the Embodiment A. Steps (a) to (d) can be carried out separately, or 2 or more steps can be carried out simultaneously. For example, (a) and (b), (a) and (c), (a) and (d), (b) and (c), (b) and (d), (c) and (d), (a) and (b) and (c), (a) and (b) and (d), (a) and (c) and (d), (b) and (c) and (d), or (a) and (b) and (c) and (d) can be carried out simultaneously.

In the method of the present invention, the "oral composition", "sweetness intensity X1", "high-intensity sweetener", "sweetness intensity X2", an amount of sodium, form of sodium in the oral composition, "phospholipid", "sweetness intensity X3", "optional component", "low-intensity sweetener", "sweetness intensity X5", "sweetness intensity X6", "other components", and energy are defined as described in the above section for the oral composition, and the numerical values described in the above section for the oral composition are applicable to the numerical values as they are.

3. Method of enhancing a sweetness of the oral composition

The present invention provides, as the third embodiment, a method for enhancing a sweetness of an oral composition (hereinafter, referred to as "the sweetness enhancement method of the present invention").

An embodiment of the sweetness enhancement method of the present invention relates to a method of enhancing a sweetness of an oral composition provided by a high-intensity sweetener, the method comprising, in a production of an oral composition:

(a) adding a high-intensity sweetener in an amount of a taste recognition threshold or more,
(b) adding sodium to obtain a sodium content in the composition of 60 mg/100 mL or less, and
(c) adding a phospholipid in an amount less than a taste recognition threshold.

Another embodiment of the sweetness enhancement method of the present invention relates to a method of enhancing a sweetness of an oral composition comprising adding 60 mg/100 mL or less of sodium and a phospholipid of less than a taste recognition threshold to an oral composition comprising a high-intensity sweetener.

According to the sweetness enhancement method of the present invention, a sweetness of an oral composition is enhanced, and thus, an oral composition having a sweetness beyond a sweetness intensity obtained when a component (a'): a high-intensity sweetener in an amount of a taste recognition threshold or more is simply added to the oral composition can be provided. Specifically, sodium and a phospholipid are simultaneously or separately added to an oral composition containing a high-intensity sweetener in a given amount, so that the oral composition comprises 60 mg/100 mL or less of sodium and the phospholipid in an amount less than a taste recognition threshold after the addition, and thus, the oral composition is provided with a sweetness beyond a sweetness intensity obtained only by adding a high-intensity sweetener. Here, the high-intensity sweetener need not be comprised in the oral composition before adding the sodium and the phospholipid, but may be added to the oral composition simultaneously with the sodium and/or the phospholipid, or may be added to the oral composition after the sodium and/or the phospholipid was/were added. The amount of the sodium (or a sodium source) to be added can be selected from the amounts described above in the section "1. Oral composition in which sweetness exhibited by high-intensity sweetener is increased". Besides, the type and the amount of the phospholipid to be added can be selected to accord with the type and the amount of the phospholipid in the oral composition described above in the section "1. Oral composition in which sweetness exhibited by high-intensity sweetener is increased".

In still another embodiment of the sweetness enhancement method of the present invention, addition of (d): a low-intensity sweetener in an amount corresponding to a sweetness intensity X5 may be further included.

According to the sweetness enhancement method of this embodiment, a sweetness of an oral composition is enhanced, and thus, an oral composition having a sweetness beyond a sweetness intensity obtained when a component (a) and component (d) are simply added to the oral composition can be provided. Specifically, sodium (or a sodium source) and a phospholipid are simultaneously or separately added to an oral composition containing a high-intensity sweetener and a low-intensity sweetener in a given amount, so that the oral composition comprises 60 mg/100 mL or less, 3 to 60 mg/100 mL, 4 to 60 mg/100 mL or 5 to 50 mg/100 mL of sodium and the phospholipid in an amount less than a taste recognition threshold after the addition, and thus, the oral composition is provided with a sweetness beyond a sweetness intensity obtained only by adding a high-intensity sweetener and a low-intensity sweetener.

In yet another embodiment of the sweetness enhancement method of the present invention, provided is a method of enhancing a sweetness of an oral composition comprising making an oral composition to comprise

(b) a phospholipid of less than a taste recognition threshold;
(c) 60 mg/100 mL or less of sodium; and
(d) a low-intensity sweetener in an amount corresponding to a sweetness intensity X5.

According to the sweetness enhancement method of this embodiment, a sweetness of an oral composition is enhanced, and thus, an oral composition having a sweetness beyond a sweetness intensity obtained when a component (d) is simply added to the oral composition can be provided. Specifically, sodium (or a sodium source) and a phospholipid are simultaneously or separately added to an oral composition containing a low-intensity sweetener in a given amount, so that the oral composition comprises 60 mg/100 mL or less, 3 to 60 mg/100 mL, 4 to 60 mg/100 mL or 5 to 50 mg/100 mL of sodium and the phospholipid in an amount less than a taste recognition threshold after the addition, and thus, the oral composition is provided with a sweetness beyond a sweetness intensity obtained only by adding a low-intensity sweetener. In this embodiment also, the amount of the sodium (or a sodium source) to be added can be selected from the amounts described above in the section "1. Oral composition in which sweetness exhibited by high-intensity sweetener is increased". Besides, the type and the amount of the phospholipid to be added can be selected to accord with the type and the amount of the phospholipid in the oral composition described above in the section " 1. Oral composition in which sweetness exhibited by high-intensity sweetener is increased".

In an embodiment of the present invention, 60 mg/100 mL or less of sodium and a phospholipid in an amount less than a taste recognition threshold are added to an oral composition containing a high-intensity sweetener in an amount corresponding to a sweetness intensity X1 and/or a low-intensity sweetener in an amount corresponding to a sweetness intensity X5. In another embodiment of the present invention, the amount of the sodium to be added is an amount such that a sodium content in the oral composition become 60 mg/100 mL or less, 3 to 60 mg/100 mL, 4 to 60 mg/100 mL, or 5 to 50 mg/mL. In another embodiment, the amount of the sodium may be an amount such that a sodium content in the oral composition in the range of 0.1 to 60 mg/100 mL, 0.1 to 55 mg/100 mL, 0.1 to 50 mg/100 mL, 0.1 to 45 mg/100 mL, 0.1 to 40 mg/100 mL, 0.1 to 35 mg/100 mL, 0.1 to 30 mg/100 mL, 0.1 to 25 mg/100 mL, 0.1 to 20 mg/100 mL, 0.1 to 19 mg/100 mL, 0.1 to 18 mg/100 mL, 0.1 to 17 mg/100 mL, 0.1 to 16 mg/100 mL, 0.1 to 15 mg/100 mL, 0.1 to 14 mg/100 mL, 0.1 to 13 mg/100 mL, 0.1 to 12 mg/100 mL, 0.1 to 11 mg/100 mL, 0.1 to 10 mg/100 mL, 1 to 60 mg/100 mL, 1 to 55 mg/100 mL, 1 to 50 mg/100 mL, 1 to 45 mg/100 mL, 1 to 40 mg/100 mL, 1 to 35 mg/100 mL, 1 to 30 mg/100 mL, 1 to 25 mg/100 mL, 1 to 20 mg/100 mL, 1 to 19 mg/100 mL, 1 to 18 mg/100 mL, 1 to 17 mg/100 mL, 1 to 16 mg/100 mL, 1 to 15 mg/100 mL, 1 to 14 mg/100 mL, 1 to 13 mg/100 mL, 1 to 12 mg/100 mL, 1 to 11 mg/100 mL, 1 to 10 mg/100 mL, 5 to 60 mg/100 mL, 5 to 55 mg/100 mL, 5 to 50 mg/100 mL, 5 to 45 mg/100 mL, 5 to 40 mg/100 mL, 5 to 35 mg/100 mL, 5 to 30 mg/100 mL, 5 to 25 mg/100 mL, 5 to 20 mg/100 mL, 5 to 19 mg/100 mL, 5 to 18 mg/100 mL, 5 to 17 mg/100 mL, 5 to 16 mg/100 mL, 5 to 15 mg/100 mL, 5 to 14 mg/100 mL, 5 to 13 mg/100 mL, 5 to 12 mg/100 mL, 5 to 11 mg/100 mL, 5 to 10 mg/100 mL, 7 to 60 mg/100 mL, 7 to 55 mg/100 mL, 7 to 50 mg/100 mL, 7 to 45 mg/100 mL, 7 to 40 mg/100 mL, 7 to 35 mg/100 mL, 7 to 30 mg/100 mL, 7 to 25 mg/100 mL, 7 to 20 mg/100 mL, 7 to 19 mg/100 mL, 7 to 18 mg/100 mL, 7 to 17 mg/100 mL, 7 to 16 mg/100 mL, 7 to 15 mg/100 mL, 10 to 60 mg/100 mL, 10 to 55 mg/100 mL, 10 to 50 mg/100 mL, 10 to 45 mg/100 mL, 10 to 40 mg/100 mL, 10 to 35 mg/100 mL, 10 to 30 mg/100 mL, 10 to 25 mg/100 mL, 10 to 20 mg/100 mL, 10 to 19 mg/100 mL, 10 to 18 mg/100 mL, 10 to 17 mg/100 mL, 10 to 16 mg/100 mL, 10 to 15 mg/100 mL, 15 to 60 mg/100 mL, 15 to 55 mg/100 mL, 15 to 50 mg/100 mL, 15 to 45 mg/100 mL, 15 to 40 mg/100 mL, 15 to 35 mg/100 mL, 15 to 30 mg/100 mL, 15 to 25 mg/100 mL, 15 to 20 mg/100 mL, 20 to 60 mg/100 mL, 20 to 55 mg/100 mL, 20 to 50 mg/100 mL, 20 to 45 mg/100 mL, 20 to 40 mg/100 mL, 20 to 35 mg/100 mL, 20 to 30 mg/100 mL, 20 to 25 mg/100 mL, 25 to 60 mg/100 mL, 25 to 55 mg/100 mL, 25 to 50 mg/100 mL, 25 to 45 mg/100 mL, 25 to 40 mg/100 mL, 25 to 35 mg/100 mL, 25 to 30 mg/100 mL, 30 to 60 mg/100 mL, 30 to 55 mg/100 mL, 30 to 50 mg/100 mL, 30 to 45 mg/100 mL, 30 to 40 mg/100 mL, 30 to 35 mg/100 mL, 35 to 60 mg/100 mL, 35 to 55 mg/100 mL, 35 to 50 mg/100 mL, 35 to 45 mg/100 mL, 35 to 40 mg/100 mL, 40 to 60 mg/100 mL, 40 to 55 mg/100 mL, 40 to 50 mg/100 mL, 40 to 45 mg/100 mL, 45 to 60 mg/100 mL, 45 to 55 mg/100 mL, 45 to 50 mg/100 mL, 50 to 60 mg/100 mL, 50 to 55 mg/100 mL or 55 to 60 mg/100 mL.

In an embodiment of the present invention, the amount of the phospholipid to be added may be an amount such that a sodium content in the oral composition become less than about 250 µg/ mL, less than about 240 µg/ mL, less than about 230 µg/ mL, less than about 220 µg/ mL, less than about 210 µg/ mL, less than about 200 µg/ mL, less than about 190 µg/ mL, less than about 180 µg/ mL, less than about 170 µg/ mL, less than about 160 µg/ mL, less than about 150 µg/ mL, less than about 140 µg/ mL, less than about 130 µg/ mL, less than about 120 µg/ mL, less than about 110 µg/ mL, less than about 100 µg/ mL, less than about 95 µg/ mL, less than about 90 µg/ mL, less than about 85 µg/ mL, less than about 80 µg/ mL, less than about 75 µg/ mL, less than about 70 µg/ mL, less than about 65 µg/ mL, less than about 60 µg/ mL, less than about 55 µg/ mL, less than about 50 µg/ mL, less than about 45 µg/ mL, less than about 40 µg/ mL, less than about 35 µg/ mL, less than about 30 µg/ mL, less than about 25 µg/ mL, less than about 20 µg/ mL, less than about 19 µg/ mL, less than about 18 µg/ mL, less than about 17 µg/ mL, less than about 16 µg/ mL, less than about 15 µg/ mL, less than about 14 µg/ mL, less than about 13 µg/ mL, less than about 12.5 µg/ mL, less than about 12 µg/ mL, less than about 11 µg/ mL, less than about 10 µg/ mL, less than about 9 µg/ mL, less than about 8 µg/ mL, less than about 7 µg/ mL, less than about 6.25 µg/ mL, less than about 6 µg/ mL, less than about 5 µg/ mL, less than about 4 µg/ mL, less than about 3.125 µg/ mL, less than about 3 µg/ mL, less than about 2 µg/ mL, less than about 1.6125 µg/ mL, less than about 1.5 µg/ mL, less than about 1 µg/ mL, less than about 1.6125 to about 12.5 µg/ mL, about 3.125 to about 12.5 µg/ mL, about 3.125 to about 25 µg/ mL, about 6.25 to about 25 µg/ mL, about 6.25 to about 50 µg/ mL, about 12.5 to about 25 µg/ mL, about 25 to about 50 µg/ mL, about 100 to about 150 µg/ mL or about 100 to about 200 µg/ mL.

In the sweetness enhancement method of the present invention, the "oral composition", "sweetness intensity X1", "high-intensity sweetener", "sweetness intensity X2", an amount of sodium, form of sodium in the oral composition, "phospholipid", "sweetness intensity X3", "optional component", "low-intensity sweetener", "sweetness intensity X5", "sweetness intensity X6", "other components", and energy are defined as described in the above section for the oral composition, and the numerical values described in the above section for the oral composition are applicable to the numerical values as they are.

4. Method of enhancing a texture of the oral composition

The present invention provides, as the fourth embodiment, a method for enhancing a texture of an oral composition (hereinafter, referred to as "the texture enhancement method of the present invention").

An embodiment of the sweetness enhancement method of the present invention relates to a method of enhancing a texture of an oral composition provided by a high-intensity sweetener, the method comprising, in a production of an oral composition:

> (a) adding a high-intensity sweetener in an amount of a taste recognition threshold or more,
> (b) adding sodium to obtain a sodium content in the composition of 60 mg/100 mL or less, and
> (c) adding a phospholipid in an amount less than a taste recognition threshold.

Another embodiment of the texture enhancement method of the present invention relates to a method of enhancing a texture of an oral composition comprising adding 60 mg/100 mL or less of sodium and a phospholipid of less than a taste recognition threshold to an oral composition comprising a high-intensity sweetener.

According to the texture enhancement method of the present invention, a texture of an oral composition is enhanced, and thus, an oral composition having a texture beyond a texture intensity obtained when a component (a) is simply added to the oral composition can be provided. Specifically, sodium and a phospholipid are simultaneously or separately added to an oral composition containing a high-intensity sweetener in a given amount, so that the oral composition comprises 60 mg/100 mL or less of sodium and the phospholipid in an amount less than a taste recognition threshold after the addition, and thus, the texture of the oral composition can be increased than a texture obtained only by adding a high-intensity sweetener. The amount of the sodium (or a sodium source) to be added can be selected from the amounts described above in the section " 1. Oral composition in which texture exhibited by high-intensity sweetener is increased". Besides, the type and the amount of the phospholipid to be added can be selected to accord with the type and the amount of the phospholipid in the oral composition described above in the section " 1. Oral composition in which texture exhibited by high-intensity sweetener is increased".

In the texture enhancement method of the present invention, the "oral composition", "high-intensity sweetener", an amount of sodium, form of sodium in the oral composition, "phospholipid", "texture" and the like are defined as described in the above section for the oral composition, and the numerical values described in the above section for the oral composition are applicable to the numerical values as they are.

5. Concentrate for providing the oral composition

The present invention provides, as the fifth embodiment, a concentrate for providing the following oral composition (hereinafter, referred to as "the enhancement method of the present invention").

An oral composition comprising:

> (a) a high-intensity sweetener in an amount corresponding to a sweetness intensity X1,
> (b) 60 mg/100 mL or less of sodium, and
> (c) a phospholipid in an amount less than a taste recognition threshold,

wherein the oral composition has a sweetness of a sweetness intensity X2 exhibited by the components (a) to (c), and 0.1 < X1 < X2 is satisfied.

The concentrate of the present invention is diluted in any ratio and used for providing the oral composition. The "oral composition" is the same as described in "1. Oral composition in which sweetness exhibited by high-intensity sweetener is increased." For example, the concentrate of the present invention can be used as a syrup or an undiluted solution in a beverage. In this instance, the concentrate can be diluted 2-fold, 3-fold, 4-fold, 5-fold, 6-fold, 7-fold, 8-fold, 9-fold, or 10-fold and used. Further, the concentrate of the present invention is preferable in the aspects of preservability and transportability because it is concentrated. The concentrate of the present invention can be solid or liquid.

The concentrate of the present invention is 2 to 10-fold concentrate, preferably 3 to 9-fold concentrate, more preferably 4 to 8-fold concentrate, and further preferably 5 to 7-fold concentrate, of the oral composition of the present invention.

The concentrate in an embodiment of the present invention is 5-fold concentrate of the oral composition of the present invention and comprises:

> (a) a high-intensity sweetener in an amount corresponding to a sweetness intensity X1a,
> (b) 300 mg/100 mL or less of sodium, and
> (c) a phospholipid in an amount less than 5-fold of a taste recognition threshold,

wherein the oral composition has a sweetness of a sweetness intensity X2a exhibited by the components (a) to (c), and $0.5 < X1a < X2a < 100$, preferably $1.0 < X1a < X2a < 50$, and more preferably $2.0 < X1a < X2a < 25$ is satisfied.

The concentrate in an embodiment of the present invention is 10-fold concentrate of the oral composition of the present invention and comprises:

(a) a high-intensity sweetener in an amount corresponding to a sweetness intensity X1b,
(b) 600 mg/100 mL or less of sodium, and
(c) a phospholipid in an amount less than 10-fold of a taste recognition threshold,

wherein the oral composition has a sweetness of a sweetness intensity X2a exhibited by the components (a) to (c), and $1.0 < X1b < X2b < 200$, preferably $2.0 < X1b < X2b < 100$, and more preferably $4.0 < X1b < X2b < 50$ is satisfied.

6. Oral composition with enhanced texture

The present invention provides, as the sixth embodiment, the following oral composition (hereinafter, referred to as "the oral composition A of the present invention").

An oral composition comprising:

(a) a high-intensity sweetener at a taste recognition threshold or more,
(b) 60 mg/100 mL or less of sodium, and
(c) a phospholipid of less than a taste recognition threshold,

wherein the oral composition has an increased texture by the components (b) to (c).

In the oral composition A of the present invention, the "oral composition", "high-intensity sweetener", an amount of sodium, form of sodium in the oral composition, "phospholipid", "taste recognition threshold", "low-intensity sweetener", "texture", "other components", and energy are defined as described in the above section for the oral composition, and the numerical values described in the above section for the oral composition are applicable to the numerical values as they are.

7. Alternative use of lipid other than phospholipid

In another embodiment of the present invention, the oral composition may contain, instead of a phospholipid in an amount less than a taste recognition threshold, a lipid other than a phospholipid in an amount less than a taste recognition threshold as a component (c). Examples of such a lipid include lipids containing a fatty acid having 8 to 22 carbon atoms, such as triglyceride (particularly, triglyceride containing a fatty acid having 8 or 10 carbon atoms, such as ACTOR M-1), and oils/fats from hydrogenated coconut oil (EMAFAT Co-7). The sweetness enhancement effect can be obtained also by these lipids. Alternative use of a lipid other than the phospholipid is applicable to the production method, the sweetness enhancement method, the texture increase method, and the concentrate of the present invention.

In the present description, the term "about" means that a subject matter is in ranges of $\pm 25\%$, $\pm 10\%$, $\pm 5\%$, $\pm 3\%$, $\pm 2\%$, or $\pm 1\%$, of the numerical value following the "about." For example, "about 10" means a range from 7.5 to 12.5. In the present description, the "mM" means a molar concentration and means $1 \times 10^{-3}$ mol/L.

EXAMPLES

Hereinafter, the present invention will be described with reference to Examples, etc. However, the present invention is not limited by these specific embodiments.

[Example 1] Evaluation (1) of sweetness enhancement effect by addition of sodium and phospholipid

In order to evaluate the sweetness enhancement effect obtained by adding a lipid and sodium to a sweet beverage, a sensory evaluation was carried out for beverages respectively using various lipid materials shown in Table 3.

1 w/v% of sucrose (manufactured by Pacific Sugar Mfg. Co., Ltd. (the same in the following examples), sweetness intensity of 1), 3.5 w/v% of glucose (manufactured by Showa Sangyo Co., Ltd., (the same in the following examples), sweetness intensity of about 2.3), 208 ppm of Rebaudioside D (RebD) (purity of 95% or more (the same in the following examples), sweetness intensity of 4.7), and 5 mM sodium gluconate (purity of 98% or more (the same in the following examples), 11.5 mg/100 mL in terms of Na) were dissolved in pure water to obtain a control beverage (Control), and to this control beverage, each of lipid materials having various concentrations in an amount less than a taste recognition threshold shown in Table 3 was added to obtain a test beverage. The taste recognition threshold of each lipid material was previously determined by a sensory test. The sweetness enhancement effect by a lipid was verified by sensorily comparing a sweetness intensity of each test beverage with a sweetness intensity of the control beverage. The evaluation was carried out by those (4 to 8 persons) who received sensory trainings as panelists by a three-alternative forced choice method for choosing "test beverage being sweeter", "control beverage being sweeter", and "equivalent sweetness". Of those who carried out the evaluation, the breakdowns and ratios of persons who sensed the sweetness enhanced as compared with the control beverage were shown in a result column of Table 4. For example, regarding a test beverage that was evaluated by 7 persons and sensed for sweetness enhancement by 4 persons, "4/7" was shown in a breakdown column, and 57 was shown in a % column. It is known from WO2018/225817 that sodium enhances the sweetness of a sweet beverage, and therefore, the evaluation of sweetness enhanced in this experiment means that sweetness already enhanced by sodium was further enhanced by the lipid.

Table 3 List of lipid materials tested

| Product name | Origin | Features | Components | Taste recognition threshold ($\mu$g/mL) |
|---|---|---|---|---|
| Lecion P | Soybean | High purity lecithin | Lecithin | 100~200 |
| Lecimal EL | Soybean | Enzyme-decomposed lecithin | Lysolecithin | 100~200 |
| ACTOR M-1 | | containing triglyceride of C8: C10 of about 6:4 | Edible fat/oil (triglyceride of C8: C10 of about 6:4), vitamin E | 200 |
| EMAFAT PA (N) | Oil palm | Powdered fat/oil from palm oil | Edible fat/oil, starch degradation product, casein Na, emulsifier, vitamin E | 50 |
| EMAFAT CO-7 | Palm | Powdered fat/oil from hydrogenated coconut oil | Edible fat/oil, starch degradation product, casein Na, emulsifier | 25~50 |
| SLP-white | Soybean | High purity powder lecithin | Lecithin | 25~50 |
| SLP-white lyso | Soybean | High purity enzyme-decomposed powder lecithin | Lysolecithin | 25 |
| SLP-PC70 | Soybean | Fractionated lecithin containing 70% or more of PC | Lecithin | 3.125 |
| SLP-LPC70 | Soybean | Enzyme-decomposed lecithin containing 65 to 75% of LPC | Lysolecithin | 3.125 |
| - | Rapeseed | Lecithin paste | Lecithin | 25 |
| - Sunflower | Sunflower | Powder lecithin | Lecithin | 12.5~25 |
| * Lecion P, Lecimal EL, ACTOR M-1, EMAFAT PA (N), and EMAFAT CO-7: manufactured by Riken Vitamin Co., Ltd., SLP-white, SLP-white lyso, SLP-PC70 and SLP-LPC70: manufactured by Tsuji Oil Mills Co., Ltd. | | | | |

Table 4 Sensory test results (Sweetness enhancement)

| Product name | Concentration ($\mu$g/ mL) | Results | |
|---|---|---|---|
| | | Breakdown | % |
| Lecion P | 100 | 4/4 | 100 |
| | 200 | 2/4 | 50 |
| Lecimal EL | 100 | 4/4 | 100 |
| | 200 | 2/4 | 50 |
| ACTOR M-1 | 25 | 5/8 | 63 |
| | 100 | 4/8 | 50 |

(continued)

| Product name | Concentration (μg/ mL) | Results | |
| --- | --- | --- | --- |
| | | Breakdown | % |
| EMAFAT PA(N) | 6.25 | 5/8 | 63 |
| | 25 | 4/8 | 50 |
| EMAFAT CO-7 | 6.25 | 3/8 | 38 |
| | 25 | 4/8 | 50 |
| SLP-white | 6.25 | 6/8 | 75 |
| | 25 | 6/8 | 75 |
| SLP-white lyso | 6.25 | 2/6 | 33 |
| | 12.5 | 2/6 | 33 |
| | 25 | 6/6 | 100 |
| | 50 | 1/6 | 17 |
| SLP-PC70 | 3.125 | 3/7 | 43 |
| | 12.5 | 4/7 | 57 |
| SLP-LPC70 | 1.6125 | 2/8 | 25 |
| | 3.125 | 3/8 | 38 |
| | 3.125 | 1/7 | 14 |
| | 12.5 | 2/7 | 29 |
| Lecithin paste from rapeseed | 3.125 | 4/6 | 67 |
| | 6.25 | 2/6 | 33 |
| | 12.5 | 3/6 | 50 |
| | 25 | 3/6 | 50 |
| Powder lecithin from sunflower | 3.125 | 6/8 | 75 |
| | 12.5 | 4/8 | 50 |

[Example 2] Study of molecular species contained in lipid material

Molecular species of a free fatty acid, LPC and PC contained in a lipid material were analyzed.

(1) Analysis of free fatty acid

(i) Preparation of standard solution

Fatty acid standard reagents shown in Table 5 were dissolved in solvents (methanol, acetone, and chloroform) to prepare standard undiluted solutions. The standard undiluted solutions were mixed, and the resultant was appropriately diluted with methanol to prepare a standard solution having concentrations of the respective fatty acids of 10 ng/mL to 5000 ng/mL. At this point, an internal standard (fatty acid-$^{18}O_2$, 67 types, manufactured by Chemicals Evaluation and Research Institute, Japan (CERI)) was added to the standard solution to a concentration of 100 ng/mL in the standard solution.

Table 5 Fatty acid standard reagents

| Fatty acid | Molecular species | Purity | Manufacturer |
| --- | --- | --- | --- |
| Caprylic acid | 8:0 | ≥97% | FUJIFILM Wako Pure Chemical Corporation |
| Capric acid | 10:0 | 98% | FUJIFILM Wako Pure Chemical Corporation |

(continued)

| Fatty acid | Molecular species | Purity | Manufacturer |
|---|---|---|---|
| Lauric acid | 12:0 | ≥98% | FUJIFILM Wako Pure Chemical Corporation |
| Myristic acid | 14:0 | ≥98% | FUJIFILM Wako Pure Chemical Corporation |
| Palmitic acid | 16:0 | ≥95% | Tokyo Chemical Industry Co., Ltd. |
| Stearic acid | 18:0 | ≥98% | Tokyo Chemical Industry Co., Ltd. |
| Oleic acid | 18:1n-9 | ≥99% | Sigma-Aldrich |
| Linoleic acid | 18:2n-6 | ≥98% | FUJIFILM Wako Pure Chemical Corporation |
| α-Linoleic acid | 18:3n-3 | ≥98% | Cayman Chemical |
| Erucic acid | 22:1n-9 | ≥98% | Cayman Chemical |

(ii) Preparation of lipid extract

To about 50 mg of each lipid material shown in Table 6 and used in Example 1, 1 mL of methanol/chloroform (1/1 v/v) was added, the resultant was subjected to ultrasonic extraction, was shaken with a multi-shaker for 5 minutes, and was centrifuged with a high speed refrigerated micro centrifuge (MX-207, manufactured by Tomy Seiko Co., Ltd.) to prepare a lipid extract. Besides, a blank operation was also carried out.

Table 6 List of lipid materials

| Material name | Article name, etc. |
|---|---|
| A | Lecithin paste from rapeseed |
| B | Powder lecithin from sunflower |
| C | EMAFAT PA(N) |
| D | EMAFAT CO-7 |
| E | ACTOR M-1 |
| F | SLP-LPC70 |
| G | SLP-PC70 |
| H | SLP-white lyso |
| I | SLP-white |

(iii) Preparation and analysis of analysis sample

The lipid extract obtained in the (ii) described above was appropriately diluted with methanol to prepare an analysis sample. At this point, the internal standard (fatty acid-$^{18}O_2$) was added thereto to a concentration of 100 ng/mL in the analysis sample. A free fatty acid composition of the thus obtained analysis sample was analyzed under analysis conditions shown in Table 7.

Table 7 Free fatty acid analysis conditions

| Device | LC: Prominence XR (Shimadzu Corporation)<br>MS: LTQ Orbitrap XL (Thermo Fisher Scientific) |
|---|---|
| Column | L-column 3 ODS (2.1 mm I.D.×150 mm, particle size 2 μm, CERT) |
| Flow rate | 0.3 mL/min |
| Column temperature | 40°C |
| Sampler temperature | 4°C |
| Injection amount | 3 μL |

(continued)

| Ionization method | Thermo electrospray ionization method |
|---|---|
| Measurement mode | Full scan (Negative) |

For detecting a peak, analysis software, Xcalibur ver. 2.1.0 (Thermo Fisher Scientific) was used. Regarding ions of a fatty acid to be analyzed, a chromatogram was output with a mass error of 10 ppm. An area value of the detected peak was divided by a peak area value of the internal standard (fatty acid-$^{18}O_2$) to calculate a ratio. A calibration curve was created based on a peak area ratio of the standard solution and the concentration thereof, and the calibration curve and a peak area ratio of the sample were used to calculate a free fatty acid concentration in the sample. A lower limit of quantification was calculated based on a lowest concentration at which a signal noise ratio (S/N) exceeded 10 in the analysis of the standard solution, and using the amount of the sample, a final volume and the like.

(iv) Analysis results

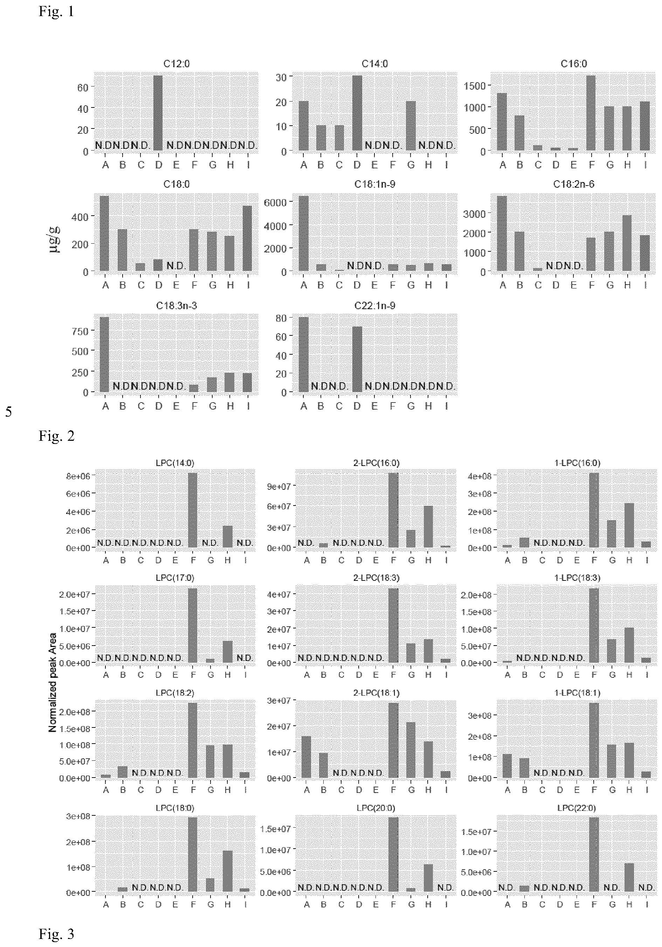

Concentrations of free fatty acids detected in each sample are shown in Table 8 and Figure 1.

Table 8 Concentrations of free fatty acids in each lipid sample ($\mu$g/g)

| Molecular species | A | B | C | D | E | F | G | H | I | Lower limit of quantification |
|---|---|---|---|---|---|---|---|---|---|---|
| 8:0 | N.D. | N.D. | N.D. | N.D. | N.D. | N.D. | N.D. | N.D. | N.D. | 1000 |
| 10:0 | N.D. | N.D. | N.D. | N.D. | N.D. | N.D. | N.D. | N.D. | N.D. | 100 |
| 12:0 | N.D. | N.D. | N.D. | (70) | N.D. | N.D. | N.D. | N.D. | N.D. | 100 |
| 14:0 | 20 | (10) | (10) | 30 | N.D. | N.D. | (20) | N.D. | N.D. | 20 |
| 16:0 | 1300 | 790 | 100 | 50 | 30 | 1700 | 1000 | 1000 | 1100 | 20 |
| 18:0 | 540 | 300 | 50 | 80 | N.D. | 300 | 280 | 250 | 470 | 20 |
| 18:1n-9 | 6400 | 580 | 70 | N.D. | N.D. | 560 | 450 | 620 | 560 | 20 |
| 18:2n-6 | 3800 | 2000 | 130 | N.D. | N.D. | 1700 | 2000 | 2800 | 1800 | 20 |
| 18:3n-3 | 900 | N.D. | N.D. | N.D. | N.D. | 80 | 170 | 230 | 220 | 20 |
| 22:1n-9 | 60 | N.D. | N.D. | 70 | N.D. | N.D. | N.D. | N.D. | N.D. | 100 |
| N.D.: Not detected | | | | | | | | | | |

Values under the lower limit of quantification are indicated within parentheses as reference values.

(2) LPC and PC analysis

(i) Preparation and analysis of analysis sample

An analysis sample was prepared by adding 500 ng/mL of phosphatidylcholine 16:0 D31-18:1 (Avanti Polar Lipids) in methanol to 2 $\mu$L of the lipid extract obtained in the (1) (ii) described above. Besides, 10 $\mu$L each of analysis samples thus prepared was collected, and the resultants were mixed to prepare a QC sample. LPC and PC compositions of the thus obtained analysis sample were analyzed under analysis conditions shown in Table 9.

Table 9 Analysis conditions for LPC and PC

| Device | LC: Prominence XR (Shimadzu Corporation)<br>MS: LTQ Orbitrap XL (Thermo Fisher Scientific) |
|---|---|
| Column | L-column 2 ODS Metal free (2 mm I.D.×50 mm, particle size 3 $\mu$m, CERI) |
| Flow rate | 0.3 mL/min |
| Column temperature | 40°C |
| Sampler temperature | 4°C |

(continued)

| Injection amount | 3 µL |
| Ionization method | Thermo electrospray ionization method |
| Measurement mode | Full scan (Negative) |
| Resolution | 30,000 |
| Mass range (m/z) | 200 to 1,600 |

For estimation of lipid molecular species and alignment between measurement samples, analysis software, Lipid Search Ver. 4.2 (MITSUI KNOWLEDGE INDUSTRY CO., LTD.) was used. Under conditions shown in Table 10 and Table 11, peak picking, lipid molecular species estimation processing, and alignment processing were executed. Out of peaks estimated to be derived from LPC and PC, the estimation result was employed for only peaks satisfying all the conditions shown in Table 12. Besides, an area value of a detected peak in each sample was corrected in accordance with the following equation using the peak area value of phosphatidylcholine 16:0 D31-18:1 used as the internal standard:

$$[NMArea] = [MainArea] \times \frac{[MainArea_{IS,Min}]}{[MainArea_{IS}]}$$

[NMArea]: each corrected peak area value in each sample

[MainArea]: each peak area value in each sample

[MainArea IS]: peak area value of phosphatidylcholine 16:0 D31-18:1 in each sample [Mainarea IS,Min]: minimum peak area value of phosphatidylcholine 16:0 D31-18:1 in all samples

Table 10 Conditions for peak detection and lipid molecular species estimation

| Database | General Labeled GPL, GL, SP, ChE | |
| Peak Detection | Recalc Isotope<br>R.T. Interval (Min) | on<br>0.0 |
| Search Options | Search Type<br>Exp Type<br>Precursor Tol.<br>Product Tol.<br>Intensity threshold<br>m-score threshold | Product<br>LC<br>5.0 ppm<br>0.5 Da<br>1.0% product ion<br>5.0 |
| Quantitation | MZ tol<br>RT range (min.) | -5.0 +5.0 ppm<br>-0.5 +0.5 |
| Class | Target Class: | LPC, PC |
| Ion | Negative: Positive: | -H, +HCOO, +CH$_3$COO<br>+H, +NH$_4$, +Na |

Table 11 Conditions for alignment processing

| Integration method | Average |
| R.T. tolerance | 0.25 |
| Main Node Filter | All isomer peaks |
| m-Score Threshold | 5.0 |

Table 12 Conditions for employing estimation results by Lipid Search

| Items | Conditions |
|---|---|
| Peak area | Peak area being 500,000 or more |
| SN ratio | SN ratio being 3 or more |
| Coefficient of variation in sample measurement | Detected in QC measurement, the coefficient of variation being less than 15% |
| Retention time | Reasonability between estimated result and retention time |
| Precursor ion | not stable isotope |
| Product ion | Specific product ion being detected in each lipid class |

(ii) Analysis results

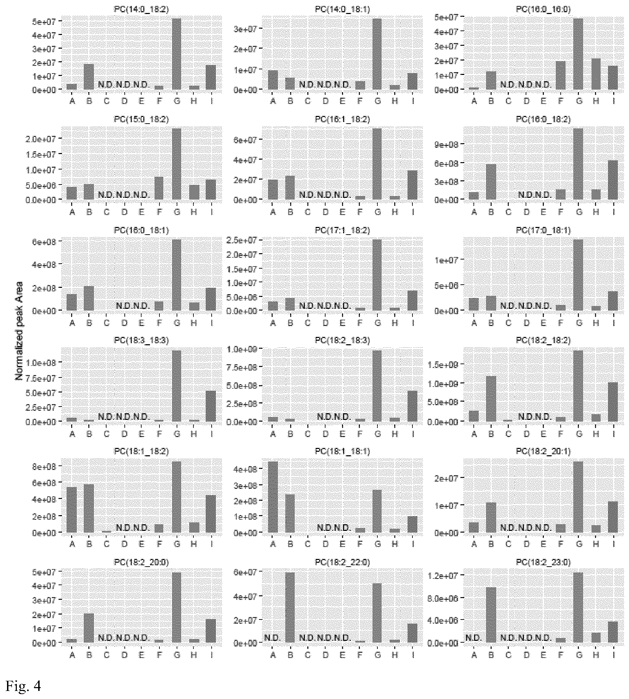

Out of LPC and PC detected in each sample, molecular species satisfying the employed conditions are shown in Tables 13 and 14. Besides, normalized peak area values of respective molecular species in the respective samples are illustrated in Figures 2 and 3.

Table 13 LPC and PC detected in analysis samples

| Lipid class | Lipid molecular species |
|---|---|
| LPC (12 species) | LPC(14:0) 2-LPC(16:0) 1-LPC(16:0) LPC(17:0) 2-LPC(18:3) 1-LPC(18:3) LPC(18:2) 2-LPC(18:1) 1-LPC(18:1) LPC(18:0) LPC(20:0) LPC(22:0) |
| PC (18 species) | PC(14:0, 18:2) PC(14:0, 18:1) PC(16:0, 16:0) PC(15:0, 18:2) PC(16:1, 18:2) PC(16:0, 18:2) PC(16:0, 18:1) PC(17:1, 18:2) PC(17:0, 18:1) PC(18:3, 18:3) PC(18:2, 18:3) PC(18:2, 18:2) PC(18:1, 18:2) PC(18:1, 18:1) PC(18:2, 20:1) PC(18:2, 20:0) PC(18:2, 22:0) PC(18:2, 23:0) |

Table 14 LPC and PC detected in each analysis sample

| | Combination of molecular species |
|---|---|
| A | 1-LPC(16:0), 1-LPC(18:3), LPC(18:2), 2-LPC(18:1), 1-LPC(18:1), LPC(18:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0) |
| B | 2-LPC(16:0), 1-LPC(16:0), LPC(18:2), 2-LPC(18:1), 1-LPC(18:1), LPC(18:0), LPC(22:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |
| C | PC(16:0, 18:2), PC(16:0, 18:1), PC(18:2, 18:3), PC(18:2, 18:2), PC(18:1, 18:2), PC(18:1, 18:1) |
| D | - |
| E | - |
| F | LPC(14:0), 2-LPC(16:0), 1-LPC(16:0), LPC(17:0), 2-LPC(18:3), 1-LPC(18:3), LPC(18:2), 2-LPC(18:1), 1-LPC(18:1), LPC(18:0), LPC(20:0), LPC(22:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |
| G | 2-LPC(16:0), 1-LPC(16:0), LPC(17:0), 2-LPC(18:3), 1-LPC(18:3), LPC(18:2), 2-LPC(18:1), 1-LPC(18:1), LPC(18:0), LPC(20:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |

(continued)

| | | Combination of molecular species |
|---|---|---|
| | H | LPC(14:0), 2-LPC(16:0), 1-LPC(16:0), LPC(17:0), 2-LPC(18:3), 1-LPC(18:3), LPC(18:2), 2-LPC(18:1), 1-LPC(18:1), LPC(18:0), LPC(20:0), LPC(22:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |
| | I | 2-LPC(16:0), 1-LPC(16:0), 2-LPC(18:3), 1-LPC(18:3), LPC(18:2), 2-LPC(18:1), 1-LPC(18:1), LPC(18:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |

[Example 3] Measurement of taste recognition threshold of phospholipid

Aqueous solutions of phospholipids from soybean, oil palm, rapeseed, and sunflower in concentrations shown in Table 15 below were prepared. As a phospholipid from soybean, SLP-white (material I of Example 2) was used, as a phospholipid from oil palm, EMAFAT PA(N) (material C of Example 2) was used, as a phospholipid from rapeseed, paste lecithin from rapeseed (material A of Example 2) was used, and as a phospholipid from sunflower, powder lecithin from sunflower (material B of Example 2) was used (the same in Examples 4 to 9). Each sample contained only water and the phospholipid. These samples were evaluated by those (6 to 8 persons) who received sensory trainings as panelists based on the following criteria:

Evaluation criteria:

A: No taste is sensed other than water

B: Taste different from water is sensed but cannot be specified

C: Taste is sensed

D: Extremely intense taste is sensed

Evaluation results are shown in Table 15 below.

Table 15 Taste recognition threshold of various phospholipid

| | Concentration (μg/mL) | A | B | C | D |
|---|---|---|---|---|---|
| Soybean n=8 | 3.125 | 6 | 1 | 1 | 0 |
| | 6.25 | 3 | 4 | 1 | 0 |
| | 12.5 | 3 | 2 | 3 | 0 |
| | 25 | 1 | 3 | 4 | 0 |
| | 50 | 0 | 2 | 4 | 2 |
| Oil palm n=8 | 25 | 3 | 3 | 1 | 0 |
| | 50 | 2 | 3 | 2 | 0 |
| | 100 | 3 | 1 | 3 | 0 |
| | 150 | 1 | 2 | 2 | 2 |
| | 200 | 1 | 2 | 1 | 3 |

(continued)

|  | Concentration (μg/mL) | A | B | C | D |
|---|---|---|---|---|---|
| Rapeseed n=6 | 3.125 | 1 | 5 | 0 | 0 |
|  | 6.25 | 1 | 4 | 1 | 0 |
|  | 12.5 | 3 | 1 | 2 | 0 |
|  | 25 | 2 | 2 | 1 | 1 |
|  | 50 | 2 | 1 | 2 | 1 |
| Sunflower n=6 | 3.125 | 5 | 1 | 0 | 0 |
|  | 6.25 | 2 | 4 | 0 | 0 |
|  | 12.5 | 3 | 1 | 2 | 0 |
|  | 25 | 2 | 1 | 2 | 1 |
|  | 50 | 1 | 0 | 2 | 3 |

Based on the above-described results, a sum of persons having made evaluation as A and B was compared with a sum of persons having made evaluation as C and D, and a concentration at which the latter exceeded a half of the total number of the persons was set as an upper limit value of the taste recognition threshold, and a concentration one level lower than this concentration was set as a lower limit of the taste recognition threshold. Thus, the taste recognition thresholds of the phospholipids from soybean, oil palm, rapeseed, and sunflower were respectively determined as 12.5 to 25 μg/ mL, 100 to 150 μg/ mL, 25 to 50 μg/ mL and 12.5 to 25 μg/ mL.

[Example 4] Evaluation of sweetness enhancement effect by addition of sodium and phospholipid (2)

1 w/v% of sucrose, 3.5 w/v% of glucose, and 208 ppm of RebD (purity of 95% or more) were dissolved in pure water to obtain a control beverage (Control), each phospholipid in a concentration shown in Table 16 was added to the control beverage to obtain a test beverage 1, and 5 mM sodium gluconate (purity of 98% or more) was further added to the test beverage 1 to obtain a test beverage 2. The sweetness enhancement effect was verified by sensorily comparing a sweetness intensity of such a test beverage 1 with a sweetness intensity of the control beverage, and by sensorily comparing a sweetness intensity of the test beverage 2 with the sweetness intensity of the test beverage 1. The evaluation was carried out by those (6 to 12 persons) who received sensory trainings as panelists by a three-alternative forced choice method for choosing "sweeter than the beverage to be compared", "beverage to be compared being sweeter", and "equivalent sweetness to beverage to be compared". Of those who carried out the evaluation, the breakdowns and ratios of persons who sensed the sweetness of the test beverage 1 enhanced as compared with the control beverage were shown in a result column of Table 16, and the breakdowns and ratios of persons who sensed the sweetness of the test beverage 2 enhanced as compared with the test beverage 1 were shown in a result column of Table 17.

Table 16 Sensory test results (Sweetness enhancement: Control beverage vs. Test beverage 1)

| Phospholipid | Concentration (μg/ mL) | Results | |
|---|---|---|---|
|  |  | Breakdown | % |
| Soybean | 6.25 | 6/10 | 60 |
| Oil palm | 6.25 | 3/6 | 50 |
| Rapeseed | 3.125 | 6/10 | 60 |
| Sunflower | 3.125 | 5/6 | 83 |

Table 17 Sensory test results (Sweetness enhancement: Test beverage 1 vs. Test beverage 2)

| Phospholipid | Concentration ($\mu$g/ mL) | Results | |
|---|---|---|---|
| | | Breakdown | % |
| Soybean | 6.25 | 4/5 | 80 |
| Oil palm | 6.25 | 4/6 | 67 |
| Rapeseed | 3.125 | 5/9 | 56 |
| Sunflower | 3.125 | 8/12 | 67 |

[Example 5] Evaluation of sweetness enhancement effect by addition of sodium and phospholipid (3)

1 w/v% of sucrose (sweetness intensity of 1), 3.5 w/v% of glucose (sweetness intensity of about 2.3), and 208 ppm of MogV (purity of 95% or more (the same in the following examples), sweetness intensity of about 5.6) were dissolved in pure water to obtain a control beverage (Control, sweetness intensity of about 8.9), 6.25 $\mu$g/ mL of phospholipid from soybean was added to the control beverage to obtain a test beverage 1, and 5 mM sodium gluconate (purity of 98% or more) was further added to the test beverage 1 to obtain a test beverage 2. The sweetness enhancement effect was verified by sensorily comparing a sweetness intensity of the test beverage 1 with a sweetness intensity of the control beverage, and by sensorily comparing a sweetness intensity of the test beverage 2 with the sweetness intensity of the test beverage 1. The evaluation was carried out by those (7 persons) who received sensory trainings as panelists by a three-alternative forced choice method for choosing "sweeter than the beverage to be compared", "beverage to be compared being sweeter", and "equivalent sweetness to beverage to be compared". Of those who carried out the evaluation, the breakdowns and ratios of persons who sensed the sweetness of the test beverage 1 enhanced as compared with the control beverage, and the breakdowns and ratios of persons who sensed the sweetness of the test beverage 2 enhanced as compared with the test beverage 1 were shown in the result column of Table 18.

Table 18 Sensory test results (Sweetness enhancement)

| | Results | |
|---|---|---|
| | Breakdown | % |
| Control beverage vs. Test beverage 1 | 5/7 | 71 |
| Test beverage 1 vs. Test beverage 2 | 4/7 | 57 |

[Example 6] Evaluation of texture increase effect by addition of sodium and phospholipid (1)

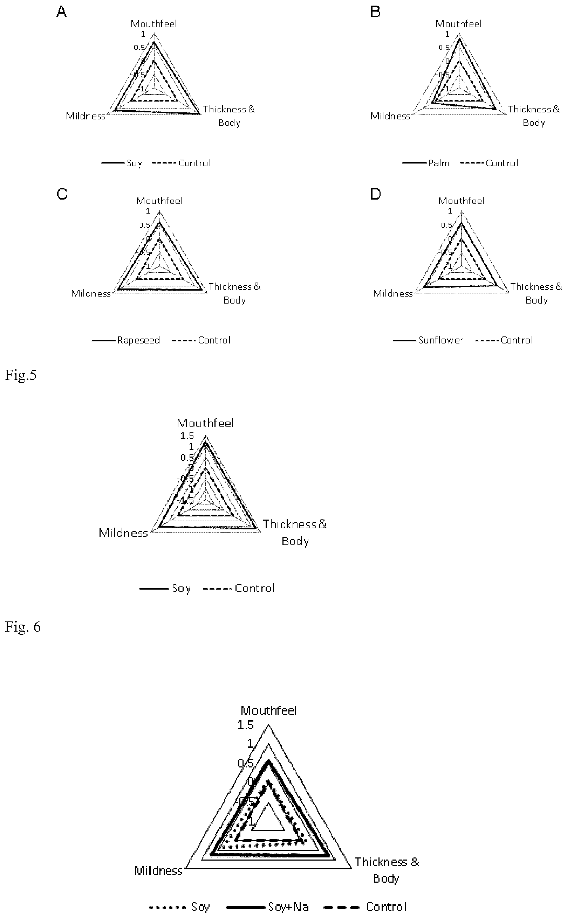

The control beverage and the test beverage 2 prepared in Example 4 were used to evaluate the texture of the test beverage 2 in the evaluation items of "Mouthfeel", "Thickness/Body", and "Mildness". Each evaluation item was scored in a range of -3 to 3 with an increment of 0.5 based on that a beverage with no difference from the control beverage was scored as 0. When the mouthfeel was more syrupy, thickness/body was sensed, or mildness was sensed as compared with the control beverage (Control), such a beverage was scored close to 3, when the sweetness was started to be sensed later, the mouthfeel was watery, the thickness/body was not sensed, or the mildness was not sensed as compared with the control beverage, such a beverage was scored close to -3. In other words, a score closer to 0 means that the beverage was closer to the control beverage. The evaluation was carried out by those (6 to 10 persons) who received sensory trainings as panelists. Results are illustrated in Figure 4 and Table 19. An area ratio shown in Table 19 indicates an area ratio in a radar chart obtained assuming that that of the control beverage was 1.

Table 19 Sensory test results (Texture)

| | Soybean (Soy) n=10 | Oil palm (Palm) n=7 | Rapeseed (Rapeseed) n=6 | Sunflower (Sunflower) n=6 | Control beverage (Control) |
|---|---|---|---|---|---|
| Mouthfeel | 0.60 | 0.79 | 0.67 | 0.58 | 0 |
| Thickness/ Body | 0.80 | 0.57 | 0.92 | 0.50 | 0 |
| Mildness | 0.75 | 0.14 | 0.67 | 0.58 | 0 |

(continued)

| | Soybean (Soy) n=10 | Oil palm (Palm) n=7 | Rapeseed (Rapeseed) n=6 | Sunflower (Sunflower) n=6 | Control beverage (Control) |
|---|---|---|---|---|---|
| Area ratio | 3.07 | 2.21 | 2.94 | 2.41 | 1 |

[Example 7] Evaluation of texture increase effect by addition of sodium and phospholipid (2)

The control beverage and the test beverage 2 prepared in Example 5 were used to evaluate the texture of the test beverage 2 in the same manner as in Example 6. The evaluation was carried out by those (7 persons) who received sensory trainings as panelists. Results are illustrated in Figure 5 and Table 20. An area ratio shown in Table 20 indicates an area ratio in a radar chart obtained assuming that that of the control beverage was 1.

Table 20 Sensory test results (Texture)

| | Test beverage 2 (Test) | Control beverage (Control) |
|---|---|---|
| Mouthfeel | 1.21 | 0 |
| Thickness/Body | 1.21 | 0 |
| Mildness | 1.00 | 0 |
| Area ratio | 3.10 | 1 |

[Example 8] Influence of addition of sodium and phospholipid on sweetness onset (1)

The control beverage and the test beverage 2 prepared in Example 4 were used to evaluate sweetness onset of the test beverage 2. Beverages were scored in a range of -3 to 3 with an increment of 0.5 based on that a beverage with no difference from the control beverage was scored as 0. When the sweetness onset is faster than the control beverage (Control), such a beverage was scored close to 3, and when the sweetness onset is slower than the control beverage, such a beverage was scored close to - 3. In other words, a score closer to 0 means that the beverage was closer to the control beverage. The evaluation was carried out by those (6 to 10 persons) who received sensory trainings as panelists. Results are shown in Table 21.

Table 21 Sensory test results (Sweetness onset)

| Soybean (Soy) n=10 | Oil palm (Palm) n=7 | Rapeseed (Rapeseed) n=6 | Sunflower (Sunflower) n=6 | Control beverage (Control) |
|---|---|---|---|---|
| 0.15 | -0.14 | 0.58 | -0.08 | 0 |

[Example 9] Influence of addition of sodium and phospholipid on sweetness onset (2)

The control beverage and the test beverage 2 prepared in Example 5 were used to evaluate sweetness onset of the test beverage 2 in a same manner as Example 8. The evaluation was carried out by those (7 persons) who received sensory trainings as panelists. The result was 0.07.

[Example 10] Quantification of sweetness enhancement effect by addition of phospholipid

1 w/v% of sucrose, 3.5 w/v% of glucose, and 208 ppm of RebD were dissolved in pure water to obtain a control beverage 1 (sweetness intensity: about 8.0), 5 mM of sodium gluconate was added to the control beverage 1 to obtain a control beverage 2, and 6.25 μg/mL of phospholipid (from soybean, SLP-white (material I of Example 2), the same in the following examples) was added to the control beverage 2 to obtain a test beverage. Sweetness intensities of the control beverages 1 and 2 and the test beverage were measured by those (n = 6) who received sensory trainings as panelists by employing Visual Analog Scale (VAS). Each panelist plotted the intensity of sweetness sensed at that time on a straight line with the left end defined as an intensity of "not sweet at all" and with the right end defined as an intensity of "nothing is sweeter than this", and a distance from the left end was used as an index of the sweetness intensity. As a result, assuming that the sweetness intensity of the control beverage 1 was 8, the sweetness intensity of the control beverage 2 was 10.6, and the sweetness intensity of the test beverage was 12.2, and thus, the sweetness intensity was enhanced by about 52% as compared with the control beverage 1.

[Example 11] Evaluation of sweetness enhancement effect by addition of sodium and phospholipid (4)

355.2 ppm of RebD was dissolved in pure water to obtain a control beverage (Control, C), 6.3 μg/mL of a phospholipid was added to the control beverage to obtain a test beverage 1 (T1), and 5 mM sodium gluconate (purity: 98% or more) was further added to the test beverage 1 to obtain a test beverage 2 (T2). The sweetness enhancement effect was verified by sensorily comparing a sweetness intensity of the test beverage 1 with a sweetness intensity of the control beverage, and by sensorily comparing a sweetness intensity of the test beverage 2 with the sweetness intensity of the test beverage 1. The evaluation was carried out by those (7 persons) who received sensory trainings as panelists by a three-alternative forced choice method for choosing "sweeter than the control beverage", "control beverage being sweeter", and "equivalent sweetness to the control beverage". Results are shown in Table 22. Of those who carried out the evaluation, 4 persons out of the 7 persons sensed that the sweetness of the test beverage 1 was equivalent or enhanced as compared with that of the control beverage (57%, with 1 person out of the 7 persons having sensed as equivalent (14%)), and 5 persons out of the 7 persons sensed that the sweetness of the test beverage 2 was equivalent or enhanced as compared with the test beverage 1 (71%, with 1 person out of the 7 persons having sensed as equivalent (14%)).

Table 22 Sensory evaluation results

| Panelist | A | B | C | D | E | F | G |
|---|---|---|---|---|---|---|---|
| Control sample v. Test sample1 | C>T1 | C<T1 | C<T1 | C>T1 | C>T1 | C<T1 | C=T1 |
| Test sample 1 v. Test sample2 | T1=T2 | T1<T2 | T1>T2 | T1<T2 | T1<T2 | T1<T2 | T1>T2 |

[Example 12] Evaluation of texture increase effect by addition of sodium and phospholipid (3)

The control beverage and the test beverages 1 and 2 prepared in Example 11 were used to sensory evaluate the texture of the test beverages 1 and 2 in the same manner as in Example 6. The evaluation was carried out by those (7 persons) who received sensory trainings as panelists. As a result, the mouthfeel, the thickness/body, the mildness, and the area ratio were respectively 0.07, 0.14, 0.36, and 1.41 for the test beverage 1, and 0.57, 0.79, 0.71, and 2.85 for the test beverage 2 (Figure 6).

[Example 13] Influence of addition of sodium and phospholipid on sweetness onset (3)

The control beverage and the test beverages 1 and 2 prepared in Example 11 were used to sensory evaluate the sweetness onset of the test beverages 1 and 2 in the same manner as in Example 8. The evaluation was carried out by those (7 persons) who received sensory trainings as panelists. As a result, the sweetness onset was -0.21 for the test beverage 1, and 0.07 for the test beverage 2.

[Example 14] Influence of addition of phospholipid on taste quality and texture (1)

Components selected from cassis diluted juice (sodium content: 0 (mg/100 mL), energy: 4 (kcal/100 mL), containing vitamin C, an acidulant, and a pigment; the same applies to the following examples), sucrose, glucose, RebD, sodium gluconate, and phospholipid were dissolved in pure water in ratios shown in Table 23 below to give 1 L, so as to prepare a beverage sample containing a cassis juice (fruit juice percentage: less than 10w/w%). 180 mL of each beverage sample was packed in a container (200 mL glass bottle), sealed, sterilized by heat (at 85°C for 10 minutes), and subjected to the following sensory tests. The Brix (soluble solid content) was measured using a Brix meter (RX-5000α, available from ATAGO CO., LTD.) (the same applies to the following examples). Further, the energy (kcal/100 mL) was calculated by setting the energy of sugar as 4 (kcal/Brix), the energy of lipid as 9 (kcal/g), the energy of the acidulant, vitamin C, pigment, sodium gluconate, and RebD as 0 (kcal/100 mL) (the same applies to Examples 15 and 30).

Table 23 Composition of cassis juice-containing beverage

| Beverage sample | 14-1 | 14-2 | 14-3 | 14-4 | 14-5 | 14-6 | 14-7 |
|---|---|---|---|---|---|---|---|
| Cassis diluted juice | 12.51 | 12.51 | 12.51 | 12.51 | 12.51 | 12.51 | 12.51 |
| Sucrose (g/L) | 10 | 10 | 10 | 10 | 10 | 10 | 10 |

(continued)

| Beverage sample | 14-1 | 14-2 | 14-3 | 14-4 | 14-5 | 14-6 | 14-7 |
|---|---|---|---|---|---|---|---|
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0.948 | 1.897 | 0.948 | 0.948 | 1.897 | 1.897 |
| Phospholipid (mg/L) | 0 | 0 | 0 | 6.25 | 10 | 6.25 | 10 |
| Pure water | q.s. to 1L | q.s. to 1L | q.s. to 1L | q.s. to 1L | q.s. to 1L | q.s. to 1L | q.s. to 1L |
| Brix | 5.01 | 5.10 | 5.20 | 5.09 | 5.09 | 5.20 | 5.20 |
| Energv (Kcal/100 mL) | 20.04 | 20.40 | 20.80 | 20.37 | 20.37 | 20.81 | 20.81 |

A taste quality and texture of a test beverage (beverage samples 14-2 and 14-7) were evaluated on evaluation items of "Total sweetness", "Lingering", "Thickness/Body", "Mildness", "Mouthfeel", and "Off-taste". Each evaluation item was scored in a range of -3 to 3 with an increment of 0.5 based on that a beverage with no difference from a control beverage (beverage sample 14-1) was scored as 0. When the sweetness was more sensed, the sweetness did not linger, the thickness was more sensed, the mouthfeel was syrupy, the mildness was more sensed, or an off-taste (bitterness, astringency) was less sensed as compared with the control beverage (Control), such a beverage was scored close to 3, and when the sweetness was less sensed, the sweetness lingered more, the thickness was less sensed, the mouthfeel was watery, the mildness was less sensed, or an off-taste (bitterness, astringency) was more sensed as compared with the control beverage, such a beverage was scored close to -3. In other words, a score closer to 0 means that the beverage was closer to the control beverage. The evaluation was carried out by those (5 persons) who received sensory trainings as panelists. Results are shown in Table 24.

Table 24 Sensory test results

| Beverage sample | 14-2 | 14-3 | 14-4 | 14-5 | 14-6 | 14-7 |
|---|---|---|---|---|---|---|
| Total sweetness | 0.30 | 0.80 | 1.10 | 1.10 | 1.50 | 1.70 |
| Lingering | 0.30 | 0.00 | 0.00 | 0.50 | 0.50 | 0.10 |
| Thickness/Body | 0.30 | 0.50 | 0.70 | 0.70 | 1.40 | 1.50 |
| Mildness | 0.00 | 0.30 | 0.70 | 0.50 | 1.10 | 1.20 |
| Mouthfeel | 0.00 | 0.20 | 0.70 | 0.40 | 0.60 | 1.00 |
| Off-taste | 0.10 | 0.00 | 0.40 | 0.40 | 0.50 | 1.20 |

[Example 15] Influence of addition of phospholipid on taste quality and texture (2)

Components selected from orange diluted juice (sodium content: 0 (mg/100 mL), energy: 4 (kcal/100 mL), containing vitamin C, an acidulant, and a pigment; the same applies to the following examples), sucrose, glucose, RebD, sodium gluconate, and phospholipid were dissolved in pure water in ratios shown in Table 25 below to give 1 L, so as to prepare a beverage sample containing an orange juice (fruit juice percentage: less than 10w/w%). 180 mL of each beverage sample was packed in a container (200 mL glass bottle), sealed, sterilized by heat (at 85°C for 10 minutes), and subjected to the following sensory tests.

Table 25 Composition of orange juice-containing beverage

| Beverage sample | 15-1 | 15-2 | 15-3 | 15-4 | 15-5 | 15-6 | 15-7 |
|---|---|---|---|---|---|---|---|
| Orange diluted juice | 31.67 | 31.67 | 31.67 | 31.67 | 31.67 | 31.67 | 31.67 |
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0.948 | 1.897 | 0.948 | 0.948 | 1.897 | 1.897 |

(continued)

| Beverage sample | 15-1 | 15-2 | 15-3 | 15-4 | 15-5 | 15-6 | 15-7 |
|---|---|---|---|---|---|---|---|
| Phospholipid (mg/L) | 0 | 0 | 0 | 6.25 | 10 | 6.25 | 10 |
| Pure water | q.s. to 1L | q.s. to 1L | q.s. to 1L | q.s. to 1L | q.s. to 1L | q.s. to 1L | q.s. to 1L |
| Brix | 5.87 | 5.98 | 6.09 | 5.97 | 5.98 | 6.10 | 6.09 |
| Energy (Kcal/100 mL) | 23.48 | 23.92 | 24.36 | 23.89 | 23.93 | 24.41 | 24.37 |

A taste quality and texture of a test beverage (beverage samples 15-2 to 15-7)) were evaluated in the same manner as in Example 14 with reference to a control beverage (beverage sample 15-1). Results are shown in Table 26.

Table 26 Sensory test results

| Beverage sample | 15-2 | 15-3 | 15-4 | 15-5 | 15-6 | 15-7 |
|---|---|---|---|---|---|---|
| Total sweetness | 0.80 | 0.70 | 1.30 | 1.40 | 1.90 | 2.20 |
| Lingering | -0.10 | -0.40 | -0.30 | -0.80 | -0.40 | -1.00 |
| Thickness/Body | 0.90 | 0.90 | 1.30 | 1.10 | 1.60 | 1.50 |
| Mildness | 0.50 | 0.60 | 0.90 | 0.60 | 1.10 | 1.50 |
| Mouthfeel | 0.50 | 0.40 | 0.90 | 0.70 | 0.90 | 1.30 |
| Off-taste | 0.50 | -0.20 | 0.30 | 0.00 | 0.50 | 0.00 |

[Example 16] Influence of addition of phospholipid on taste quality and texture (3)

Components selected from sucrose, glucose, RebD, sodium gluconate, phospholipid, and orange diluted juice were dissolved in pure water in ratios shown in Table 27 below to give 1 L, so as to prepare a beverage sample containing an orange juice. An appropriate amount of each beverage sample was packed in a container (200 mL glass bottle), sealed, sterilized by heat (at 85°C for 10 minutes), and subjected to the following sensory tests.

Table 27 Composition of orange juice-containing beverage

| Beverage sample | 16-1 | 16-2 | 16-3 | 16-4 | 16-5 | 16-6 | 16-7 | 16-8 | 16-9 |
|---|---|---|---|---|---|---|---|---|---|
| Orange diluted juice (g/L) | 31.67 | 31.67 | 31.67 | 31.67 | 31.67 | 31.67 | 31.67 | 31.67 | 31.67 |
| Sucrose (g/L) | 10 | 10 | 10 | 10 | 10 | 10 | 0 | 0 | 0 |
| Glucose (g/L) | 35 | 35 | 35 | 35 | 35 | 35 | 0 | 0 | 0 |
| RebD (g/L) | 0.1 | 0.3 | 0.1 | 0.3 | 0.1 | 0.3 | 0.208 | 0.208 | 0.208 |
| Sodium gluconate (g/L) | 0 | 0 | 1.897 | 1.897 | 1.897 | 1.897 | 0 | 1.897 | 1.897 |
| Phospholipid (mg/L) | 0 | 0 | 0 | 0 | 10 | 10 | 0 | 0 | 10 |
| Brix | 5.91 | 5.92 | 6.11 | 6.14 | 6.12 | 6.12 | 1.72 | 1.92 | 1.95 |
| Pure water | q.s. to 1L | q.s. to 1 L | q.s. to 1L | q.s. to 1L | q.s. to 1 L | q.s. to 1L | q.s. to 1L | q.s. to 1 L | q.s. to 1L |

A taste quality and texture of a test beverage (beverage sample containing a phospholipid and/or sodium gluconate (such as beverage samples 16-3 and 16-5)) were evaluated in the same manner as in Example 14 with reference to a control beverage (beverage sample having the same composition as the test beverage except that a phospholipid and sodium gluconate were not contained (such as a beverage sample 16-1)). Results are shown in Table 28.

Table 28 Sensory test results

| Beverage sample | 16-3 | 16-4 | 16-5 | 16-6 | 16-8 | 16-9 |
|---|---|---|---|---|---|---|
| Total sweetness | 0.60 | 0.80 | 0.80 | 1.30 | 0.60 | 0.90 |
| Lingering | 0.20 | 0.20 | 0.10 | 0.20 | 0.20 | 0.20 |
| Thickness/Body | 0.20 | 0.30 | 0.70 | 0.70 | 0.30 | 0.80 |
| Mildness | 0.20 | 0.20 | 0.40 | 0.50 | 0.10 | 0.40 |
| Mouthfeel | 0.10 | 0.30 | 0.60 | 0.60 | 0.10 | 0.50 |
| Off-taste | 0.30 | 0.30 | 0.50 | 0.50 | 0.40 | 0.50 |

[Example 17] Influence of addition of phospholipid on taste quality and texture (4)

Components selected from sucrose, glucose, RebA (purity: 95% or more, the same applies to the following examples), RebM (purity: 95% or more, the same applies to the following examples), MogV (purity: 95% or more, the same applies to the following examples), a Luo han guo extract (aqueous extract of Luo han guo containing 40 wt% of MogV, the same applies to the following examples), sodium gluconate, phospholipid, and orange diluted juice were dissolved in pure water in ratios shown in Table 29 below to give 1 L, so as to prepare a beverage sample. Each beverage sample was packed in a container (200 mL glass bottle), sealed, sterilized by heat (at 85°C for 10 minutes), and subjected to the following sensory tests.

Table 29 Composition of orange juice-containing beverage with milk

| Beverage sample | 17-1 | 17-2 | 17-3 | 17-4 | 17-5 | 17-6 |
|---|---|---|---|---|---|---|
| Orange diluted juice (g/L) | 31.67 | 31.67 | 31.67 | 31.67 | 31.67 | 31.67 |
| Sucrose (g/L) | 10 | 10 | 10 | 10 | 10 | 10 |
| Glucose (g/L) | 35 | 35 | 35 | 35 | 35 | 35 |
| RebA (g/L) | 0.208 | 0.208 | 0.208 | 0 | 0 | 0 |
| RebM (g/L) | 0 | 0 | 0 | 0.208 | 0.208 | 0.208 |
| MogV (g/L) | 0 | 0 | 0 | 0 | 0 | 0 |
| Luo han guo extract (g/L) | 0 | 0 | 0 | 0 | 0 | 0 |
| Sodium gluconate (g/L) | 0 | 1.897 | 1.897 | 0 | 1.897 | 1.897 |
| Phospholipid (mg/L) | 0 | 0 | 10 | 0 | 0 | 10 |
| Brix | 5.88 | 6.09 | 6.10 | 5.90 | 6.10 | 6.12 |
| Pure water | q.s. to 1L | q.s. to 1L | q.s. to 1L | q.s. to 1L | q.s. to 1L | q.s. to 1L |
| Beverage sample | 17-7 | 17-8 | 17-9 | 17-10 | 17-11 | 17-12 |
| Orange diluted juice (g/L) | 31.67 | 31.67 | 31.67 | 31.67 | 31.67 | 31.67 |
| Sucrose (g/L) | 10 | 10 | 10 | 10 | 10 | 10 |
| Glucose (g/L) | 35 | 35 | 35 | 35 | 35 | 35 |
| RebA (g/L) | 0 | 0 | 0 | 0 | 0 | 0 |
| RebM (g/L) | 0 | 0 | 0 | 0 | 0 | 0 |
| MogV (g/L) | 0.208 | 0.208 | 0.208 | 0 | 0 | 0 |
| Luo han guo extract (g/L) | 0 | 0 | 0 | 0.208 | 0.208 | 0.208 |
| Sodium gluconate (g/L) | 0 | 1.897 | 1.897 | 0 | 1.897 | 1.897 |
| Phospholipid (mg/L) | 0 | 0 | 10 | 0 | 0 | 10 |

(continued)

| Beverage sample | 17-7 | 17-8 | 17-9 | 17-10 | 17-11 | 17-12 |
|---|---|---|---|---|---|---|
| Brix | 5.90 | 6.12 | 6.11 | 5.91 | 6.12 | 6.11 |
| Pure water | q.s. to 1L | q.s. to 1L | q.s. to 1L | q.s. to 1L | q.s. to 1L | q.s. to 1L |

A taste quality and texture of a test beverage (beverage sample containing a phospholipid and/or sodium gluconate (such as beverage samples 17-2 and 17-3)) were evaluated in the same manner as in Example 14 with reference to a control beverage (beverage sample having the same composition as the test beverage except that a phospholipid and sodium gluconate were not contained (such as a beverage sample 17-1)). Results are shown in Table 30.

Table 30 Sensory test results

| Beverage sample | 17-2 | 17-3 | 17-5 | 17-6 | 17-8 | 17-9 | 17-11 | 17-12 |
|---|---|---|---|---|---|---|---|---|
| Total sweetness | 0.90 | 0.90 | 0.90 | 1.30 | 0.80 | 1.00 | 0.50 | 0.90 |
| Lingering | 0.30 | 0.10 | 0.20 | 0.10 | 0.30 | 0.40 | 0.10 | 0.10 |
| Thickness/Body | 0.30 | 0.70 | 0.60 | 1.00 | 0.50 | 0.90 | 0.20 | 0.70 |
| Mildness | 0.10 | 0.20 | 0.20 | 0.80 | 0.60 | 0.80 | 0.20 | 0.20 |
| Mouthfeel | 0.20 | 0.50 | 0.30 | 0.40 | 0.60 | 0.70 | 0.10 | 0.40 |
| Off-taste | 0.50 | 0.60 | 0.40 | 0.60 | 0.40 | 0.90 | 0.20 | 0.40 |

[Example 18] Influence of addition of phospholipid on taste quality and texture (5)

Components selected from sucrose, glucose, RebD, sodium gluconate, and phospholipid in amounts shown in Table 31 below were dissolved in an unsweetened orange (sodium content: 0 (mg/100 mL), energy: 0 (kcal/100 mL), with a lemon juice concentrate and an acidulant contained; the same applies to the following examples) to give 1 L, so as to prepare an orange flavored water beverage sample (absorbance at a wavelength of 660 nm: 0.01 or less, $\Delta E$ value of transmitted light: 3.5 or less). Each beverage sample was packed in a container (200 mL glass bottle), sealed, sterilized by heat (at 85°C for 10 minutes) or sterilized at 95°C for 30 seconds, then hot-packed in a PET container, and subjected to the following sensory tests. Further, the energy (kcal/100 mL) was calculated by setting the energy of the acidulant, the lemon juice concentrate, and RebD as 0 (kcal/100 mL) (the same applies to Examples 19, 32 and 33).

Table 31 Composition of orange flavored water beverage

| Beverage sample | 18-1 | 18-2 | 18-3 | 18-4 | 18-5 | 18-6 | 18-7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0.948 | 1.897 | 0.948 | 0.948 | 1.897 | 1.897 |
| Phospholipid (mg/L) | 0 | 0 | 0 | 6.25 | 10 | 6.25 | 10 |
| Sugar-free orange | q.s. to 1L | q.s. to 1L | q.s. to 1L | q.s. to 1L | q.s. to 1L | q.s. to 1L | q.s. to 1L |
| Brix | 4.30 | 4.36 | 4.46 | 4.37 | 4.37 | 4.47 | 4.46 |
| Energy (Kcal/100 mL) | 17.20 | 17.44 | 17.84 | 17.49 | 17.49 | 17.89 | 17.85 |

A taste quality and texture of a test beverage (beverage samples 18-2 to 18-7)) were evaluated in the same manner as in Example 14 with reference to a control beverage (beverage sample 18-1). Results are shown in Table 32.

Table 32 Sensory test results

| Beverage sample | 18-2 | 18-3 | 18-4 | 18-5 | 18-6 | 18-7 |
|---|---|---|---|---|---|---|
| Total sweetness | 0.50 | 0.58 | 0.83 | 1.00 | 1.08 | 1.17 |
| Lingering | -0.17 | 0.08 | -0.50 | -0.50 | -0.08 | 0.00 |
| Thickness/Body | 0.25 | 0.75 | 0.58 | 0.75 | 0.67 | 0.92 |
| Mildness | 0.17 | 0.42 | 0.00 | 0.42 | 0.08 | 0.17 |
| Mouthfeel | 0.00 | 0.50 | 0.25 | 0.75 | 0.50 | 0.58 |
| Off-taste | 0.25 | 0.25 | 0.00 | 0.00 | -0.17 | 0.17 |

[Example 19] Influence of addition of phospholipid on taste quality and texture (6)

Components selected from sucrose, glucose, RebD, sodium gluconate, and phospholipid in amounts shown in Table 33 below were dissolved in a peach flavored water (sodium content: 0 (mg/100 mL), energy: 0 (kcal/100 mL), with a lemon juice concentrate and an acidulant contained; the same applies to the following examples) to give 1 L, so as to prepare a peach flavored water beverage sample (absorbance at a wavelength of 660 nm: 0.01 or less, ΔE value of transmitted light: 3.5 or less). Each beverage sample was packed in a container (200 mL glass bottle), sealed, sterilized by heat (at 85°C for 10 minutes) or sterilized at 95°C for 30 seconds, then hot-packed in a PET container, and subjected to the following sensory tests.

Table 33 Composition of flavored water beverage

| Beverage sample | 19-1 | 19-2 | 19-3 | 19-4 | 19-5 | 19-6 | 19-7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0.948 | 1.897 | 0.948 | 0.948 | 1.897 | 1.897 |
| Phospholipid (mg/L) | 0 | 0 | 0 | 6.25 | 10 | 6.25 | 10 |
| Peach-flavored water | q.s. to 1 L | q.s. to 1 L | q.s. to 1 L | q.s. to 1 L | q.s. to 1 L | q.s. to 1 L | q.s. to 1 L |
| Brix | 4.22 | 4.37 | 4.47 | 4.35 | 4.36 | 4.48 | 4.46 |
| Energy (Kcal/100 mL) | 16.88 | 17.48 | 17.88 | 17.41 | 17.45 | 17.93 | 17.85 |

A taste quality and texture of a test beverage (beverage samples 19-2 to 19-7)) were evaluated in the same manner as in Example 14 with reference to a control beverage (beverage sample 19-1). Results are shown in Table 34.

Table 34 Sensory test results

| Beverage sample | 19-2 | 19-3 | 19-4 | 19-5 | 19-6 | 19-7 |
|---|---|---|---|---|---|---|
| Total sweetness | 0.50 | 0.58 | 0.50 | 0.58 | 0.92 | 1.25 |
| Lingering | -0.08 | -0.42 | -0.17 | -0.25 | -0.50 | -0.58 |
| Thickness/Body | 0.17 | 0.50 | 0.67 | 0.50 | 0.67 | 0.83 |
| Mildness | 0.25 | 0.50 | 0.33 | 0.25 | 0.50 | 0.67 |
| Mouthfeel | 0.33 | 0.42 | 0.50 | 0.58 | 0.75 | 0.83 |
| Off-taste | -0.08 | 0.08 | -0.25 | -0.42 | -0.67 | -0.33 |

[Example 20] Influence of addition of phospholipid on taste quality and texture (7)

Components selected from sucrose, glucose, RebD, sodium gluconate (purity: 98% or more), and phospholipid in amounts shown in Table 35 below were dissolved in a peach flavored water (sodium content: 0 (mg/100 mL), energy: 0 (kcal/100 mL), with a lemon juice concentrate and an acidulant contained) to give 1 L, so as to prepare a flavored water beverage sample . Each beverage sample was packed in a container (200 mL glass bottle), sealed, sterilized by heat (at 85°C for 10 minutes) or sterilized at 95°C for 30 seconds, then hot-packed in a PET container, and subjected to the following sensory tests.

Table 35 Composition of flavored water beverage

| Beverage sample | 20-1 | 20-2 | 20-3 | 20-4 | 20-5 | 20-6 | 20-7 | 20-8 | 20-9 |
|---|---|---|---|---|---|---|---|---|---|
| Sucrose (g/L) | 10 | 10 | 10 | 10 | 10 | 10 | 0 | 0 | 0 |
| Glucose (g/L) | 35 | 35 | 35 | 35 | 35 | 35 | 0 | 0 | 0 |
| RebD (g/L) | 0.1 | 0.3 | 0.1 | 0.3 | 0.1 | 0.3 | 0.208 | 0.208 | 0.208 |
| Sodium gluconate (g/L) | 0 | 0 | 1.897 | 1.897 | 1.897 | 1.897 | 0 | 1.897 | 1.897 |
| Phospholipid (mg/L) | 0 | 0 | 0 | 0 | 10 | 10 | 0 | 0 | 10 |
| Peach-flavored water | q.s. to 1 L | q.s. to 1L | q.s. to 1L | q.s. to 1L | q.s. to 1L | q.s. to 1L | q.s. to 1 L | q.s. to 1L | q.s. to 1L |
| Brix | 4.28 | 4.30 | 4.45 | 4.49 | 4.47 | 4.49 | 0.08 | 0.29 | 0.28 |

A taste quality and texture of a test beverage (beverage sample containing a phospholipid and/or sodium gluconate (such as beverage samples 20-3 and 20-5)) were evaluated in the same manner as in Example 14 with reference to a control beverage (beverage sample having the same composition as the test beverage except that a phospholipid and sodium gluconate were not contained (such as a beverage sample 20-1)). Results are shown in Table 36.

Table 36 Sensory test results

| Beverage sample | 20-3 | 20-4 | 20-5 | 20-6 | 20-8 | 20-9 |
|---|---|---|---|---|---|---|
| Total sweetness | 0.90 | 0.75 | 1.20 | 1.50 | 0.13 | 0.88 |
| Lingering | 0.20 | 0.00 | -0.20 | 0.38 | 0.13 | 0.25 |
| Thickness/Body | 0.50 | 0.50 | 1.10 | 1.00 | 0.38 | 0.63 |
| Mildness | 0.40 | 0.38 | 0.70 | 0.75 | 0.13 | 0.63 |
| Mouthfeel | 0.50 | 0.63 | 0.80 | 1.13 | 0.13 | 0.63 |
| Off-taste | 0.30 | 0.50 | 0.20 | 0.50 | 0.13 | 0.50 |

[Example 21] Influence of addition of phospholipid on taste quality and texture (8)

Components selected from sucrose, glucose, RebA, RebM, MogV, Luo han guo extract, sodium gluconate, and phospholipid in ratios shown in Table 37 below were dissolved in a peach flavored water (sodium content: 0 (mg/100 mL), energy: 0 (kcal/100 mL), with a lemon juice concentrate and an acidulant contained) to give 1 L, so as to prepare a flavored water beverage sample. Each beverage sample was packed in a container (200 mL glass bottle), sealed, sterilized by heat (at 85°C for 10 minutes) or sterilized at 95°C for 30 seconds, then hot-packed in a PET container, and subjected to the following sensory tests.

Table 37 Composition of flavored water beverage

| Beverage sample | 21-1 | 21-2 | 21-3 | 21-4 | 21-5 | 21-6 |
|---|---|---|---|---|---|---|
| Sucrose (g/L) | 10 | 10 | 10 | 10 | 10 | 10 |
| Glucose (g/L) | 35 | 35 | 35 | 35 | 35 | 35 |

(continued)

| Beverage sample | 21-1 | 21-2 | 21-3 | 21-4 | 21-5 | 21-6 |
|---|---|---|---|---|---|---|
| RebA (g/L) | 0.208 | 0.208 | 0.208 | 0 | 0 | 0 |
| RebM (g/L) | 0 | 0 | 0 | 0.208 | 0.208 | 0.208 |
| MogV (g/L) | 0 | 0 | 0 | 0 | 0 | 0 |
| Luo han guo extract (g/L) | 0 | 0 | 0 | 0 | 0 | 0 |
| Sodium gluconate (g/L) | 0 | 1.897 | 1.897 | 0 | 1.897 | 1.897 |
| Phospholipid (mg/L) | 0 | 0 | 10 | 0 | 0 | 10 |
| Peach-flavored water | q.s. to 1 L | q.s. to 1 L | q.s. to 1 L | q.s. to 1 L | q.s. to 1 L | q.s. to 1 L |
| Brix | 4.28 | 4.51 | 4.46 | 4.28 | 4.47 | 4.47 |
| | | | | | | |
| Beverage sample | 21-7 | 21-8 | 21-9 | 21-10 | 21-11 | 21-12 |
| Sucrose (g/L) | 10 | 10 | 10 | 10 | 10 | 10 |
| Glucose (g/L) | 35 | 35 | 35 | 35 | 35 | 35 |
| RebA (g/L) | 0 | 0 | 0 | 0 | 0 | 0 |
| RebM (g/L) | 0 | 0 | 0 | 0 | 0 | 0 |
| MogV (g/L) | 0.208 | 0.208 | 0.208 | 0 | 0 | 0 |
| Luo han guo extract (g/L) | 0 | 0 | 0 | 0.208 | 0.208 | 0.208 |
| Sodium gluconate (g/L) | 0 | 1.897 | 1.897 | 0 | 1.897 | 1.897 |
| Phospholipid (mg/L) | 0 | 0 | 10 | 0 | 0 | 10 |
| Peach-flavored water | q.s. to 1 L | q.s. to 1 L | q.s. to 1 L | q.s. to 1 L | q.s. to 1 L | q.s. to 1 L |
| Brix | 4.28 | 4.51 | 4.46 | 4.28 | 4.47 | 4.47 |

A taste quality and texture of a test beverage (beverage sample containing a phospholipid and/or sodium gluconate (such as beverage samples 21-2 and 21-3)) were evaluated in the same manner as in Example 14 with reference to a control beverage (beverage sample having the same composition as the test beverage except that a phospholipid and sodium gluconate were not contained (such as a beverage sample 21-1)). Results are shown in Table 38.

Table 38 Sensory test results

| Beverage sample | 21-2 | 21-3 | 21-5 | 21-6 | 21-8 | 21-9 | 21-11 | 21-12 |
|---|---|---|---|---|---|---|---|---|
| Total sweetness | 0.50 | 1.25 | 1.00 | 1.25 | 0.75 | 0.75 | 0.50 | 1.00 |
| Lingering | -0.13 | 0.13 | 0.25 | 0.25 | 0.13 | 0.25 | 0.13 | 0.25 |
| Thickness/Body | 0.13 | 1.00 | 0.50 | 1.00 | 0.38 | 0.38 | 0.38 | 0.75 |
| Mildness | 0.00 | 0.75 | 0.25 | 0.88 | 0.50 | 0.38 | 0.25 | 0.75 |
| Mouthfeel | 0.00 | 0.88 | 0.25 | 0.75 | 0.25 | 0.25 | 0.63 | 0.88 |
| Off-taste | 0.25 | 0.63 | 0.13 | 0.38 | 0.38 | 0.50 | 0.38 | 0.50 |

[Example 22] Influence of addition of phospholipid on taste quality and texture (9)

Components selected from sucrose, glucose, RebD, sodium gluconate, and phospholipid in amounts (final concentrations) shown in Table 39 below were mixed with caffeine and a flavor, so as to prepare a syrup (250-fold). The obtained syrup was sterilized, packed in a PET bottle, and diluted with high-pressure carbonated water (3.0 kgf/cm$^2$) to give 1000 mL, so as to prepare an energy drink-flavored carbonated beverage sample. Further, the energy (kcal/100 mL) was calculated by setting the energy of sugar as 4 (kcal/Brix), the energy of lipid as 9 (kcal/g), the energy of caffeine, the flavor, and RebD as 0 (kcal/100 mL) (the same applies to Example 34).

Table 39 Composition of carbonated beverage sample

| Beverage sample | 22-1 | 22-2 | 22-3 | 22-4 | 22-5 | 22-6 | 22-7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0.948 | 1.897 | 0.948 | 0.948 | 1.897 | 1.897 |
| Phospholipid (mg/L) | 0 | 0 | 0 | 6.25 | 10 | 6.25 | 10 |
| Brix | 4.25 | 4.33 | 4.44 | 4.33 | 4.33 | 4.43 | 4.44 |
| Energy (Kcal/100 mL) | 17.01 | 17.33 | 17.76 | 17.31 | 17.31 | 17.73 | 17.74 |

A taste quality and texture of a test beverage (beverage samples 22-2 to 22-7)) were evaluated in the same manner as in Example 14 with reference to a control beverage (beverage sample 22-1). A carbonated feeling was also evaluated. When the sharpness was more sensed as compared with the control beverage, such a beverage was scored close to 3, and when the carbonated feeling was milder as compared with the control beverage, such a beverage was scored close to -3. Results are shown in Table 40.

Table 40 Sensory test results

| Beverage sample | 22-2 | 22-3 | 22-4 | 22-5 | 22-6 | 22-7 |
|---|---|---|---|---|---|---|
| Total sweetness | 0.25 | 0.50 | 0.25 | 0.75 | 1.00 | 1.00 |
| Lingering | 0.00 | -0.42 | -0.42 | -0.33 | -0.42 | -0.25 |
| Thickness/Body | 0.42 | 0.75 | 0.42 | 0.58 | 0.92 | 0.75 |
| Mildness | 0.17 | 0.33 | -0.17 | 0.25 | 0.50 | 0.67 |
| Mouthfeel | 0.00 | 0.08 | -0.25 | 0.00 | 0.17 | 0.67 |
| Off-taste | 0.17 | 0.00 | -0.42 | 0.17 | -0.33 | -0.33 |
| Carbonated feeling | -0.25 | -0.17 | -0.33 | 0.25 | 0.17 | -0.33 |

[Example 23] Influence of addition of phospholipid on taste quality and texture (10)

Components selected from sucrose, glucose, RebD, sodium gluconate, and phospholipid in amounts (final concentrations) shown in Table 41 below were mixed with an acidulant and a flavor, so as to prepare a syrup (250-fold). The obtained syrup was sterilized, packed in a PET bottle, and diluted with high-pressure carbonated water (3.0 kgf/cm$^2$) to give 1000 mL, so as to prepare a cola-flavored carbonated beverage sample. Further, the energy (kcal/100 mL) was calculated by setting the energy of sugar as 4 (kcal/Brix), the energy of lipid as 9 (kcal/g), the energy of the acidulant, the flavor, and RebD as 0 (kcal/100 mL) (the same applies to Example 35).

Table 41 Composition of carbonated beverage sample

| Beverage sample | 23-1 | 23-2 | 23-3 | 23-4 | 23-5 | 23-6 | 23-7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0.948 | 1.897 | 0.948 | 0.948 | 1.897 | 1.897 |
| Phospholipid (mg/L) | 0 | 0 | 0 | 6.25 | 10 | 6.25 | 10 |
| Brix | 4.40 | 4.49 | 4.60 | 4.62 | 4.60 | 4.64 | 4.65 |
| Energy (Kcal/100 mL) | 17.58 | 17.95 | 18.42 | 18.47 | 18.39 | 18.57 | 18.62 |

A taste quality and texture of a test beverage (beverage samples 23-2 to 23-7)) were evaluated in the same manner as in Example 22 with reference to a control beverage (beverage sample 23-1). Results are shown in Table 42.

Table 42 Sensory test results

| Beverage sample | 23-2 | 23-3 | 23-4 | 23-5 | 23-6 | 23-7 |
|---|---|---|---|---|---|---|
| Total sweetness | 0.42 | 0.42 | 0.42 | 0.42 | 0.58 | 0.67 |
| Lingering | -0.17 | -0.25 | -0.33 | -0.33 | -0.25 | -0.33 |
| Thickness/Body | 0.33 | 0.58 | 0.33 | 0.50 | 0.75 | 1.17 |
| Mildness | -0.08 | 0.42 | 0.25 | 0.17 | 0.17 | 0.00 |
| Mouthfeel | 0.08 | 0.42 | 0.17 | 0.33 | 0.17 | 0.33 |
| Off-taste | -0.17 | 0.08 | -0.42 | -0.58 | -0.92 | -0.83 |
| Carbonated feeling | 0.08 | -0.08 | -0.42 | -0.33 | -0.33 | -0.42 |

[Example 24] Influence of addition of phospholipid on taste quality and texture (11)

Components selected from sucrose, glucose, RebD, sodium gluconate, and phospholipid in amounts (final concentrations) shown in Table 43 below were mixed with caffeine and a flavor, so as to prepare a syrup (250-fold). The obtained syrup was sterilized, packed in a PET bottle, and diluted with high-pressure carbonated water (3.0 kgf/cm$^2$) to give 1000 mL, so as to prepare an energy drink-flavored carbonated beverage sample.

Table 43 Composition of carbonated beverage

| Beverage sample | 24-1 | 24-2 | 24-3 | 24-4 | 24-5 | 24-6 | 24-7 | 24-8 | 24-9 |
|---|---|---|---|---|---|---|---|---|---|
| Sucrose (g/L) | 10 | 10 | 10 | 10 | 10 | 10 | 0 | 0 | 0 |
| Glucose (g/L) | 35 | 35 | 35 | 35 | 35 | 35 | 0 | 0 | 0 |
| RebD (g/L) | 0.1 | 0.3 | 0.1 | 0.3 | 0.1 | 0.3 | 0.208 | 0.208 | 0.208 |
| Sodium gluconate (g/L) | 0 | 0 | 1.897 | 1.897 | 1.897 | 1.897 | 0 | 1.897 | 1.897 |
| Phospholipid (mg/L) | 0 | 0 | 0 | 0 | 10 | 10 | 0 | 0 | 10 |
| Brix | 4.24 | 4.24 | 4.42 | 4.44 | 4.43 | 4.43 | 0.05 | 0.25 | 0.25 |

A taste quality and texture of a test beverage (beverage sample containing a phospholipid and/or sodium gluconate (such as beverage samples 24-3 and 24-5)) were evaluated in the same manner as in Example 22 with reference to a control beverage (beverage sample having the same composition as the test beverage except that a phospholipid and sodium gluconate were not contained (such as a beverage sample 24-1)). Results are shown in Table 44.

Table 44 Sensory test results

| Beverage sample | 24-3 | 24-4 | 24-5 | 24-6 | 24-8 | 24-9 |
|---|---|---|---|---|---|---|
| Total sweetness | 0.70 | 0.90 | 0.80 | 1.10 | 0.20 | 0.90 |
| Lingering | 0.10 | 0.00 | 0.10 | -0.30 | 0.30 | 0.10 |
| Thickness/Body | 0.30 | 0.60 | 0.60 | 0.70 | 0.20 | 0.80 |
| Mildness | 0.50 | 0.30 | 0.30 | 0.50 | 0.20 | 0.40 |
| Mouthfeel | 0.40 | 0.40 | 0.10 | 0.40 | 0.30 | 0.60 |
| Off-taste | 0.40 | 0.30 | 0.00 | -0.20 | 0.10 | 0.30 |
| Carbonated feeling | -0.10 | -0.10 | -0.30 | 0.00 | -0.10 | -0.20 |

[Example 25] Influence of addition of phospholipid on taste quality and texture (12)

Components selected from sucrose, glucose, RebA, RebM, MogV, Luo han guo extract, sodium gluconate, and phospholipid in amounts (final concentrations) shown in Table 45 below were mixed with caffeine and a flavor, so as to prepare a syrup (250-fold). The obtained syrup was sterilized, packed in a PET bottle, and diluted with high-pressure carbonated water (3.0 kgf/cm$^2$) to give 1000 mL, so as to prepare an energy drink-flavored carbonated beverage sample.

Table 45 Composition of carbonated beverage

| Beverage sample | 25-1 | 25-2 | 25-3 | 25-4 | 25-5 | 25-6 |
|---|---|---|---|---|---|---|
| Sucrose (g/L) | 10 | 10 | 10 | 10 | 10 | 10 |
| Glucose (g/L) | 35 | 35 | 35 | 35 | 35 | 35 |
| RebA (g/L) | 0.208 | 0.208 | 0.208 | 0 | 0 | 0 |
| RebM (g/L) | 0 | 0 | 0 | 0.208 | 0.208 | 0.208 |
| MogV (g/L) | 0 | 0 | 0 | 0 | 0 | 0 |
| Luo han guo extract (g/L) | 0 | 0 | 0 | 0 | 0 | 0 |
| Sodium gluconate (g/L) | 0 | 1.897 | 1.897 | 0 | 1.897 | 1.897 |
| Phospholipid (mg/L) | 0 | 0 | 10 | 0 | 0 | 10 |
| Brix (Syrup) | 4.24 | 4.44 | 4.42 | 4.23 | 4.49 | 4.48 |
| Beverage sample | 25- | 25-8 | 25-9 | 25-10 | 25-11 | 25-12 |
| Sucrose (g/L) | 10 | 10 | 10 | 10 | 10 | 10 |
| Glucose (g/L) | 35 | 35 | 35 | 35 | 35 | 35 |
| RebA (g/L) | 0 | 0 | 0 | 0 | 0 | 0 |
| RebM (g/L) | 0 | 0 | 0 | 0 | 0 | 0 |
| MogV (g/L) | 0.208 | 0.208 | 0.208 | 0 | 0 | 0 |
| Luo han guo extract (g/L) | 0 | 0 | 0 | 0.208 | 0.208 | 0.208 |
| Sodium gluconate (g/L) | 0 | 1.897 | 1.897 | 0 | 1.897 | 1.897 |
| Phospholipid (mg/L) | 0 | 0 | 10 | 0 | 0 | 10 |
| Brix (Syrup) | 4.24 | 4.44 | 4.44 | 4.28 | 4.44 | 4.42 |

A taste quality and texture of a test beverage (beverage sample containing a phospholipid and/or sodium gluconate (such as beverage samples 25-2 and 25-3)) were evaluated in the same manner as in Example 22 with reference to a control beverage (beverage sample having the same composition as the test beverage except that a phospholipid and sodium gluconate were not contained (such as a beverage sample 25-1)). Results are shown in Table 46.

Table 46 Sensory test results

| Beverage sample | 25-2 | 25-3 | 25-5 | 25-6 | 25-8 | 25-9 | 25-11 | 25-12 |
|---|---|---|---|---|---|---|---|---|
| Total sweetness | 0.60 | 0.80 | 0.80 | 1.00 | 0.50 | 0.90 | 0.60 | 0.90 |
| Lingering | 0.10 | 0.10 | 0.10 | 0.10 | 0.20 | 0.40 | 0.10 | 0.10 |
| Thickness/Body | 0.30 | 0.80 | 0.50 | 0.70 | 0.40 | 0.80 | 0.20 | 0.60 |
| Mildness | 0.10 | 0.30 | 0.50 | 0.50 | 0.30 | 0.70 | 0.10 | 0.30 |
| Mouthfeel | 0.30 | 0.20 | 0.40 | 0.50 | 0.10 | 0.50 | 0.20 | 0.40 |
| Off-taste | 0.30 | 0.00 | 0.30 | 0.40 | 0.20 | 0.20 | 0.30 | 0.30 |
| Carbonated feeling | 0.00 | -0.10 | 0.00 | -0.40 | 0.00 | -0.10 | -0.10 | -0.30 |

[Example 26] Influence of addition of phospholipid on taste quality and texture (13)

Components selected from sucrose, glucose, RebD, sodium gluconate, and phospholipid in amounts shown in Table 47 below were dissolved in 1000 g of oolong tea extract (sodium content: about 10 (mg/100 mL), polyphenol content: 400 (ppm), energy: 0 (kcal/100 mL), the same applies to the following examples), so as to prepare an oolong tea beverage sample. Further, the energy (kcal/100 mL) was calculated by setting the energy of sugar as 4 (kcal/Brix), the energy of lipid as 9 (kcal/g), the energy of the oolong tea extract, sodium gluconate, and RebD as 0 (kcal/100 mL) (the same applies to Example 36).

Table 47 Composition of oolong tea beverage

| Beverage sample | 26-1 | 26-2 | 26-3 | 26-4 |
|---|---|---|---|---|
| Oolong tea extract (g) | 1000 | 1000 | 1000 | 1000 |
| Sucrose (g/L) | 10 | 10 | 10 | 10 |
| Glucose (g/L) | 35 | 35 | 35 | 35 |
| RebD (g/L) | 0.208 | 0.208 | 0.208 | 0.208 |
| Sodium gluconate (g/L) | 0 | 0.948 | 0.948 | 0.948 |
| Phospholipid (mg/L) | 0 | 0 | 6.25 | 10 |
| Brix | 4.35 | 4.54 | 4.53 | 4.54 |
| Energy (Kcal/100 mL) | 17.40 | 18.16 | 18.13 | 18.17 |

A taste quality and texture of a test beverage (beverage samples 26-2 to 26-4)) were evaluated in the same manner as in Example 14 with reference to a control beverage (beverage sample 26-1). Results are shown in Table 48.

Table 48 Sensory test results

| Beverage sample | 26-2 | 26-3 | 26-4 |
|---|---|---|---|
| Total sweetness | 0.75 | 0.92 | 1.17 |
| Lingering | -0.08 | 0.08 | 0.00 |
| Thickness/Body | 0.67 | 0.58 | 0.83 |
| Mildness | 0.42 | 0.50 | 0.50 |
| Mouthfeel | 0.25 | 0.50 | 0.42 |
| Off-taste | 0.17 | 0.08 | -0.08 |

[Example 27] Influence of addition of phospholipid on taste quality and texture (14)

Components selected from sucrose, glucose, RebD, sodium gluconate, and phospholipid in amounts shown in Table 49 below were dissolved in 1000 g of green tea extract (sodium content: about 8 (mg/100 mL), catechin content: 300 (ppm), energy: 0 (kcal/100 mL), the same applies to the following examples), so as to prepare a green tea beverage sample. Further, the energy (kcal/100 mL) was calculated by setting the energy of sugar as 4 (kcal/Brix), the energy of lipid as 9 (kcal/g), the energy of the green tea extract, sodium gluconate, and RebD as 0 (kcal/100 mL) (the same applies to Example 37).

Table 49 Composition of green tea beverage

| Beverage sample | 27-1 | 27-2 | 27-3 | 27-4 | 27-5 | 27-6 | 27-7 |
|---|---|---|---|---|---|---|---|
| Green tea extract (g) | 1000 | 1000 | 1000 | 1000 | 1000 | 1000 | 1000 |
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |

(continued)

| Beverage sample | 27-1 | 27-2 | 27-3 | 27-4 | 27-5 | 27-6 | 27-7 |
|---|---|---|---|---|---|---|---|
| Sodium gluconate (g/L) | 0 | 0.379 | 1.328 | 0.379 | 0.379 | 1.328 | 1.328 |
| Phospholipid (mg/L) | 0 | 0 | 0 | 6.25 | 10 | 6.25 | 10 |
| Brix | 4.33 | 4.39 | 4.46 | 4.37 | 4.39 | 4.46 | 4.47 |
| Energy (Kcal/100 mL) | 17.32 | 17.56 | 17.84 | 17.49 | 17.57 | 17.85 | 17.89 |

A taste quality and texture of a test beverage (beverage samples 27-2 to 27-7)) were evaluated in the same manner as in Example 14 with reference to a control beverage (beverage sample 27-1). Results are shown in Table 50.

Table 50 Sensory test results

| Beverage sample | 27-2 | 27-3 | 27-4 | 27-5 | 27-6 | 27-7 |
|---|---|---|---|---|---|---|
| Total sweetness | 0.33 | 0.83 | 1.08 | 1.25 | 0.92 | 1.33 |
| Lingering | 0.08 | 0.17 | -0.25 | -0.25 | 0.00 | 0.25 |
| Thickness/Body | 0.17 | 0.58 | 0.58 | 0.75 | 0.58 | 1.08 |
| Mildness | 0.25 | 0.42 | 0.67 | 0.50 | 0.67 | 0.92 |
| Mouthfeel | 0.33 | 0.42 | 0.42 | 0.42 | 0.42 | 0.58 |
| Off-taste | 0.08 | 0.25 | 0.00 | -0.17 | -0.17 | -0.17 |

[Example 28] Influence of addition of phospholipid on taste quality and texture (15)

Components selected from sucrose, glucose, RebD, sodium gluconate, and phospholipid in amounts shown in Table 51 below were dissolved in 1000 g of oolong tea extract, so as to prepare an oolong tea beverage sample.

Table 51 Composition of oolong tea beverage

| Beverage sample | 28-1 | 28-2 | 28-3 | 28-4 | 28-5 | 28-6 | 28-7 | 28-8 | 28-9 |
|---|---|---|---|---|---|---|---|---|---|
| Oolong tea extract (g) | 1000 | 1000 | 1000 | 1000 | 1000 | 1000 | 1000 | 1000 | 1000 |
| Sucrose (g) | 10 | 10 | 10 | 10 | 10 | 10 | 0 | 0 | 0 |
| Glucose (g) | 35 | 35 | 35 | 35 | 35 | 35 | 0 | 0 | 0 |
| RebD (g) | 0.1 | 0.3 | 0.1 | 0.3 | 0.1 | 0.3 | 0.208 | 0.208 | 0.208 |
| Sodium gluconate (g) | 0 | 0 | 0.948 | 0.948 | 0.948 | 0.948 | 0 | 0.948 | 0.948 |
| Phospholipid (mg) | 0 | 0 | 0 | 0 | 10 | 10 | 0 | 0 | 10 |
| Brix | 4.33 | 4.34 | 4.45 | 4.46 | 4.38 | 4.38 | 0.34 | 0.45 | 0.45 |

A taste quality and texture of a test beverage (beverage sample containing a phospholipid and/or sodium gluconate (such as beverage sample28-3)) were evaluated in the same manner as in Example 14 with reference to a control beverage (beverage sample having the same composition as the test beverage except that a phospholipid and sodium gluconate were not contained (such as a beverage sample 28-1)). Results are shown in Table 52.

Table 52 Sensory test results

| Beverage sample | 28-3 | 28-4 | 28-5 | 28-6 | 28-8 | 28-9 |
|---|---|---|---|---|---|---|
| Total sweetness | 0.50 | 0.38 | 0.75 | 0.88 | 0.40 | 0.90 |
| Lingering | 0.38 | 0.38 | -0.25 | 0.38 | 0.40 | 0.60 |
| Thickness/Body | 0.25 | 0.13 | 0.50 | 1.00 | 0.20 | 0.50 |
| Mildness | 0.63 | 0.50 | 0.63 | 0.75 | 0.00 | 0.40 |

(continued)

| Beverage sample | 28-3 | 28-4 | 28-5 | 28-6 | 28-8 | 28-9 |
|---|---|---|---|---|---|---|
| Mouthfeel | 0.13 | 0.25 | 0.63 | 0.75 | 0.30 | 0.60 |
| Off-taste | 0.50 | 0.25 | 0.50 | 0.50 | 0.10 | 0.40 |

[Example 29] Influence of addition of phospholipid on taste quality and texture (16)

Components selected from sucrose, glucose, RebA, RebM, MogV, Luo han guo extract, sodium gluconate, and phospholipid in ratios shown in Table 53 below were dissolved in 1000 g of oolong tea extract, so as to prepare an oolong tea beverage sample.

Table 53 Composition of oolong tea beverage

| Beverage sample | 29-1 | 29-2 | 29-3 | 29-4 | 29-5 | 29-6 |
|---|---|---|---|---|---|---|
| Oolong tea extract (g) | 1000 | 1000 | 1000 | 1000 | 1000 | 1000 |
| Sucrose (g) | 10 | 10 | 10 | 10 | 10 | 10 |
| Glucose (g) | 35 | 35 | 35 | 35 | 35 | 35 |
| RebA (g) | 0.208 | 0.208 | 0.208 | 0 | 0 | 0 |
| RebM (g) | 0 | 0 | 0 | 0.208 | 0.208 | 0.208 |
| MogV (g) | 0 | 0 | 0 | 0 | 0 | 0 |
| Luo han guo extract (g) | 0 | 0 | 0 | 0 | 0 | 0 |
| Sodium gluconate (g) | 0 | 1.897 | 1.897 | 0 | 1.897 | 1.897 |
| Phospholipid (mg) | 0 | 0 | 10 | 0 | 0 | 10 |
| Brix | 4.35 | 4.45 | 4.46 | 4.35 | 4.45 | 4.47 |
| Beverage sample | 29-7 | 29-8 | 29-9 | 29-10 | 29-11 | 29-12 |
| Oolong tea extract (g) | 1000 | 1000 | 1000 | 1000 | 1000 | 1000 |
| Sucrose (g) | 10 | 10 | 10 | 10 | 10 | 10 |
| Glucose (g) | 35 | 35 | 35 | 35 | 35 | 35 |
| RebA (g) | 0 | 0 | 0 | 0 | 0 | 0 |
| RebM (g) | 0 | 0 | 0 | 0 | 0 | 0 |
| MogV (g) | 0.208 | 0.208 | 0.208 | 0 | 0 | 0 |
| Luo han guo extract (g) | 0 | 0 | 0 | 0.208 | 0.208 | 0.208 |
| Sodium gluconate (g) | 0 | 1.897 | 1.897 | 0 | 1.897 | 1.897 |
| Phospholipid (mg) | 0 | 0 | 10 | 0 | 0 | 10 |
| Brix | 4.35 | 4.44 | 4.46 | 4.36 | 4.44 | 4.46 |

A taste quality and texture of a test beverage (beverage sample containing a phospholipid and/or sodium gluconate (such as beverage samples 29-2 and 29-3)) were evaluated in the same manner as in Example 14 with reference to a control beverage (beverage sample having the same composition as the test beverage except that a phospholipid and sodium gluconate were not contained (such as a beverage sample 29-1)). Results are shown in Table 54.

Table 54 Sensory test results

| Beverage sample | 29-2 | 29-3 | 29-5 | 29-6 | 29-8 | 29-9 | 29-11 | 29-12 |
|---|---|---|---|---|---|---|---|---|
| Total sweetness | 0.88 | 1.13 | 0.88 | 1.25 | 0.63 | 1.13 | 0.50 | 1.25 |
| Lingering | 0.38 | 0.38 | 0.38 | 0.38 | 0.25 | 0.00 | 0.13 | 0.13 |

(continued)

| Beverage sample | 29-2 | 29-3 | 29-5 | 29-6 | 29-8 | 29-9 | 29-11 | 29-12 |
|---|---|---|---|---|---|---|---|---|
| Thickness/Body | 0.63 | 1.13 | 0.63 | 0.75 | 0.63 | 0.75 | 0.25 | 0.88 |
| Mildness | 0.63 | 0.88 | 0.50 | 0.75 | 0.63 | 0.63 | 0.25 | 0.75 |
| Mouthfeel | 0.63 | 0.88 | 0.50 | 0.88 | 0.50 | 0.63 | 0.38 | 0.75 |
| Off-taste | 0.25 | 0.50 | 0.25 | 0.50 | 0.38 | 0.50 | 0.25 | 0.63 |

[Example 30] Influence of addition of phospholipid on taste quality and texture (17)

Components selected from cassis diluted juice, sucrose, glucose, RebD, sodium gluconate, and phospholipid (paste lecithin from rapeseed (material A of Example 2) or powder lecithin from sunflower (material B of Example 2), the same applies to the following examples) were dissolved in pure water in ratios shown in Table 55 below to give 1 L, so as to prepare a beverage sample containing a cassis juice (fruit juice percentage: less than 10w/w%). 180 mL of each beverage sample was packed in a container (200 mL glass bottle), sealed, sterilized by heat (at 85°C for 10 minutes), and subjected to the following sensory tests.

Table 55 Composition of cassis juice-containing beverage

| Beverage sample | 30-1 | 30-2 | 30-3 | 30-4 | 30-5 | 30-6 | 30-7 |
|---|---|---|---|---|---|---|---|
| Cassis diluted juice | 12.51 | 12.51 | 12.51 | 12.51 | 12.51 | 12.51 | 12.51 |
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0.948 | 1.897 | 0.948 | 0.948 | 1.897 | 1.897 |
| Phospholipid from rapeseed (mg) | 0 | 0 | 0 | 3.125 | 0 | 3.125 | 0 |
| Phospholipid from sunflower (mg) | 0 | 0 | 0 | 0 | 3.125 | 0 | 3.125 |
| Pure water | q.s. to 1L | q.s. to 1L | q.s. to 1L | q.s. to 1L | q.s. to 1L | q.s. to 1L | q.s. to 1L |
| Brix | 5.02 | 5.11 | 5.21 | 5.05 | 5.11 | 5.21 | 5.21 |
| Energy (Kcal/100 mL) | 20.08 | 20.44 | 20.84 | 20.20 | 20.44 | 20.84 | 20.84 |

A taste quality and texture of a test beverage (beverage samples 30-2 to 30-7)) were evaluated in the same manner as in Example 14 with reference to a control beverage (beverage sample 30-1). Results are shown in Table 56.

Table 56 Sensory test results

| Beverage sample | 30-2 | 30-3 | 30-4 | 30-5 | 30-6 | 30-7 |
|---|---|---|---|---|---|---|
| Total sweetness | 0.58 | 0.67 | 0.83 | 0.83 | 1.00 | 1.25 |
| Lingering | 0.25 | 0.17 | -0.08 | 0.08 | 0.08 | 0.08 |
| Thickness/Body | 0.58 | 0.42 | 0.42 | 0.75 | 0.92 | 0.83 |
| Mildness | 0.25 | 0.25 | 0.25 | 0.50 | 0.92 | 0.75 |
| Mouthfeel | 0.33 | 0.17 | 0.08 | 0.25 | 0.58 | 0.50 |
| Off-taste | 0.33 | 0.00 | 0.08 | 0.25 | 0.33 | 0.25 |

[Example 31] Influence of addition of phospholipid on taste quality and texture (18)

Components selected from orange diluted juice, sucrose, glucose, RebD, sodium gluconate, and phospholipid were dissolved in pure water in ratios shown in Table 57 below to give 1 L, so as to prepare a beverage sample containing an orange juice (fruit juice percentage: less than 10w/w%). 180 mL of each beverage sample was packed in a container (200 mL glass bottle), sealed, sterilized by heat (at 85°C for 10 minutes), and subjected to the following sensory tests.

Table 57 Composition of orange juice-containing beverage

| Beverage sample | 31-1 | 31-2 | 31-3 | 31-4 | 31-5 | 31-6 | 31-7 |
|---|---|---|---|---|---|---|---|
| Orange diluted juice | 31.67 | 31.67 | 31.67 | 31.67 | 31.67 | 31.67 | 31.67 |
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0.948 | 1.897 | 0.948 | 0.948 | 1.897 | 1.897 |
| Phospholipid from rapeseed (mg) | 0 | 0 | 0 | 3.125 | 0 | 3.125 | 0 |
| Phospholipid from sunflower (mg) | 0 | 0 | 0 | 0 | 3.125 | 0 | 3.125 |
| Pure water | q.s. to 1L | q.s. to 1L | q.s. to 1L | q.s. to 1L | q.s. to 1L | q.s. to 1L | q.s. to 1L |
| Brix | 5.88 | 6.01 | 6.11 | 6.00 | 6.02 | 6.11 | 6.11 |
| Energy (Kcal/100 mL) | 23.52 | 24.04 | 24.44 | 24.00 | 24.08 | 24.44 | 24.44 |

A taste quality and texture of a test beverage (beverage samples 31-2 to 31-7)) were evaluated in the same manner as in Example 14 with reference to a control beverage (beverage sample 31-1). Results are shown in Table 58.

Table 58 Sensory test results

| Beverage sample | 31-2 | 31-3 | 31-4 | 31-5 | 31-6 | 31-7 |
|---|---|---|---|---|---|---|
| Total sweetness | 0.75 | 0.83 | 1.25 | 1.50 | 1.42 | 1.67 |
| Lingering | 0.00 | 0.00 | 0.00 | 0.08 | -0.25 | -0.08 |
| Thickness/Body | 0.50 | 0.50 | 0.75 | 0.92 | 1.00 | 1.25 |
| Mildness | 0.33 | 0.50 | 0.50 | 0.83 | 0.50 | 0.83 |
| Mouthfeel | 0.33 | 0.42 | 0.67 | 0.58 | 0.83 | 1.17 |
| Off-taste | 0.25 | 0.50 | 0.17 | 0.08 | 0.08 | 0.00 |

[Example 32] Influence of addition of phospholipid on taste quality and texture (19)

Components selected from sucrose, glucose, RebD, sodium gluconate, and phospholipid in amounts shown in Table 59 below were dissolved in an unsweetened orange to give 1 L, so as to prepare an orange flavored water beverage sample (absorbance at a wavelength of 660 nm: 0.01 or less, ΔE value of transmitted light: 3.5 or less). Each beverage sample was packed in a container (200 mL glass bottle), sealed, sterilized by heat (at 85°C for 10 minutes) or sterilized at 95°C for 30 seconds, then hot-packed in a PET container, and subjected to the following sensory tests.

Table 59 Composition of orange flavored water beverage

| Beverage sample | 32-1 | 32-2 | 32-3 | 32-4 | 32-5 | 32-6 | 32-7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0.948 | 1.897 | 0.948 | 0.948 | 1.897 | 1.897 |

(continued)

| Beverage sample | 32-1 | 32-2 | 32-3 | 32-4 | 32-5 | 32-6 | 32-7 |
|---|---|---|---|---|---|---|---|
| Phospholipid from rapeseed (mg) | 0 | 0 | 0 | 3.125 | 0 | 3.125 | 0 |
| Phospholipid from sunflower (mg) | 0 | 0 | 0 | 0 | 3.125 | 0 | 3.125 |
| Sugar-free orange | q.s. to 1L | q.s. to 1L | q.s. to 1L | q.s. to 1L | q.s. to 1L | q.s. to 1L | q.s. to 1L |
| Brix | 4.26 | 4.31 | 4.43 | 4.33 | 4.34 | 4.49 | 4.49 |
| Energy (Kcal/100 mL) | 17.04 | 17.24 | 17.72 | 17.32 | 17.36 | 17.96 | 17.96 |

A taste quality and texture of a test beverage (beverage samples 32-2 to 32-7)) were evaluated in the same manner as in Example 14 with reference to a control beverage (beverage sample 32-1). Results are shown in Table 60.

Table 60 Sensory test results

| Beverage sample | 32-2 | 32-3 | 32-4 | 32-5 | 32-6 | 32-7 |
|---|---|---|---|---|---|---|
| Total sweetness | 0.30 | 0.20 | 0.80 | 0.70 | 1.10 | 1.00 |
| Lingering | 0.00 | 0.10 | -0.30 | 0.30 | -0.20 | 0.30 |
| Thickness/Body | 0.50 | 0.40 | 0.80 | 0.70 | 0.90 | 0.90 |
| Mildness | 0.00 | 0.10 | 0.50 | 0.50 | 0.60 | 0.60 |
| Mouthfeel | 0.30 | 0.10 | 0.60 | 0.40 | 0.60 | 0.50 |
| Off-taste | 0.20 | 0.50 | 0.10 | 0.20 | 0.40 | 0.30 |

[Example 33] Influence of addition of phospholipid on taste quality and texture (20)

Components selected from sucrose, glucose, RebD, sodium gluconate, and phospholipid in amounts shown in Table 61 below were dissolved in a peach flavored water to give 1 L, so as to prepare a peach flavored water beverage sample (absorbance at a wavelength of 660 nm: 0.01 or less, ΔE value of transmitted light: 3.5 or less). Each beverage sample was packed in a container (200 mL glass bottle), sealed, sterilized by heat (at 85°C for 10 minutes) or sterilized at 95°C for 30 seconds, then hot-packed in a PET container, and subjected to the following sensory tests.

Table 61 Composition of flavored water beverage

| Beverage sample | 33-1 | 33-2 | 33-3 | 33-4 | 33-5 | 33-6 | 33-7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0.948 | 1.897 | 0.948 | 0.948 | 1.897 | 1.897 |
| Phospholipid from rapeseed (mg) | 0 | 0 | 0 | 3.125 | 0 | 3.125 | 0 |
| Phospholipid from sunflower (mg) | 0 | 0 | 0 | 0 | 3.125 | 0 | 3.125 |
| Peach-flavored water | q.s. to 1 L | q.s. to 1 L | q.s. to 1 L | q.s. to 1 L | q.s. to 1 L | q.s. to 1 L | q.s. to 1 L |
| Brix | 4.30 | 4.39 | 4.48 | 4.39 | 4.40 | 4.52 | 4.52 |
| Energy (Kcal/100 mL) | 17.20 | 17.56 | 17.92 | 17.56 | 17.60 | 18.08 | 18.08 |

A taste quality and texture of a test beverage (beverage samples 33-2 to 33-7)) were evaluated in the same manner as in Example 14 with reference to a control beverage (beverage sample 33-1). Results are shown in Table 62.

Table 62 Sensory test results

| Beverage sample | 33-2 | 33-3 | 33-4 | 33-5 | 33-6 | 33-7 |
|---|---|---|---|---|---|---|
| Total sweetness | 0.70 | 0.90 | 0.60 | 0.80 | 1.10 | 1.20 |
| Lingering | 0.00 | 0.00 | 0.00 | 0.30 | -0.10 | 0.40 |
| Thickness/Body | 0.40 | 0.60 | 0.60 | 0.60 | 0.90 | 1.00 |
| Mildness | 0.30 | 0.60 | 0.40 | 0.30 | 0.70 | 0.70 |
| Mouthfeel | 0.40 | 0.60 | 0.30 | 0.30 | 0.50 | 0.60 |
| Off-taste | 0.40 | 0.50 | 0.00 | 0.10 | 0.30 | 0.50 |

[Example 34] Influence of addition of phospholipid on taste quality and texture (21)

Components selected from sucrose, glucose, RebD, sodium gluconate, and phospholipid in amounts (final concentrations) shown in Table 63 below were mixed with caffeine and a flavor, so as to prepare a syrup (250-fold). The obtained syrup was sterilized, packed in a PET bottle, and diluted with high-pressure carbonated water (3.0 kgf/cm$^2$) to give 1000 mL, so as to prepare an energy drink-flavored carbonated beverage sample.

Table 63 Composition of carbonated beverage sample

| Beverage sample | 34-1 | 34-2 | 34-3 | 34-4 | 34-5 | 34-6 | 34-7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0.948 | 1.897 | 0.948 | 0.948 | 1.897 | 1.897 |
| Phospholipid from rapeseed (mg) | 0 | 0 | 0 | 3.125 | 0 | 3.125 | 0 |
| Phospholipid from sunflower (mg) | 0 | 0 | 0 | 0 | 3.125 | 0 | 3.125 |
| Brix | 4.26 | 4.36 | 4.47 | 4.35 | 4.35 | 4.45 | 4.47 |
| Energy (Kcal/100 mL) | 17.06 | 17.46 | 17.87 | 17.41 | 17.39 | 17.81 | 17.87 |

A taste quality and texture of a test beverage (beverage samples 34-2 to 34-7)) were evaluated in the same manner as in Example 22 with reference to a control beverage (beverage sample 34-1). Results are shown in Table 64.

Table 64 Sensory test results

| Beverage sample | 34-2 | 34-3 | 34-4 | 34-5 | 34-6 | 34-7 |
|---|---|---|---|---|---|---|
| Total sweetness | 0.58 | 0.83 | 0.75 | 0.75 | 1.00 | 1.17 |
| Lingering | 0.00 | 0.00 | -0.33 | -0.25 | -0.17 | -0.42 |
| Thickness/Body | 0.42 | 0.75 | 0.50 | 0.50 | 0.75 | 0.92 |
| Mildness | 0.17 | 0.42 | 0.33 | 0.42 | 0.50 | 0.67 |
| Mouthfeel | 0.25 | 0.42 | 0.50 | 0.42 | 0.58 | 0.58 |
| Off-taste | 0.33 | 0.42 | -0.25 | -0.08 | -0.17 | 0.00 |
| Carbonated feeling | -0.08 | 0.00 | 0.00 | 0.00 | 0.00 | 0.00 |

[Example 35] Influence of addition of phospholipid on taste quality and texture (22)

Components selected from sucrose, glucose, RebD, sodium gluconate, and phospholipid in amounts (final concentrations) shown in Table 65 below were mixed with an acidulant and a flavor, so as to prepare a syrup (250-fold).

The obtained syrup was sterilized, packed in a PET bottle, and diluted with high-pressure carbonated water (3.0 kgf/cm$^2$) to give 1000 mL, so as to prepare a cola-flavored carbonated beverage sample.

Table 65 Composition of carbonated beverage sample

| Beverage sample | 35-1 | 35-2 | 35-3 | 35-4 | 35-5 | 35-6 | 35-7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0.948 | 1.897 | 0.948 | 0.948 | 1.897 | 1.897 |
| Phospholipid from rapeseed (mg) | 0 | 0 | 0 | 3.125 | 0 | 3.125 | 0 |
| Phospholipid from sunflower (mg) | 0 | 0 | 0 | 0 | 3.125 | 0 | 3.125 |
| Brix | 4.40 | 4.52 | 4.62 | 4.51 | 4.51 | 4.61 | 4.61 |
| Energy (Kcal/100 mL) | 17.58 | 18.06 | 18.48 | 18.03 | 18.05 | 18.45 | 18.45 |

A taste quality and texture of a test beverage (beverage samples 35-2 to 35-7)) were evaluated in the same manner as in Example 22 with reference to a control beverage (beverage sample 35-1). Results are shown in Table 66.

Table 66 Sensory test results

| Beverage sample | 35-2 | 35-3 | 35-4 | 35-5 | 35-6 | 35-7 |
|---|---|---|---|---|---|---|
| Total sweetness | 0.33 | 0.50 | 0.50 | 0.17 | 0.75 | 0.75 |
| Lingering | 0.25 | -0.17 | 0.00 | 0.00 | -0.17 | -0.17 |
| Thickness/Body | 0.17 | 0.17 | 0.58 | 0.50 | 0.58 | 0.58 |
| Mildness | -0.08 | 0.33 | 0.08 | 0.08 | 0.17 | 0.17 |
| Mouthfeel | -0.33 | 0.08 | 0.25 | 0.08 | 0.42 | 0.33 |
| Off-taste | 0.25 | 0.17 | 0.08 | 0.17 | -0.08 | 0.00 |
| Carbonated feeling | 0.42 | 0.00 | 0.00 | 0.00 | 0.00 | 0.00 |

[Example 36] Influence of addition of phospholipid on taste quality and texture (23)

Components selected from sucrose, glucose, RebD, sodium gluconate, and phospholipid in amounts shown in Table 67 below were dissolved in 1000 g of oolong tea extract, so as to prepare an oolong tea beverage sample.

Table 67 Composition of oolong tea beverage

| Beverage sample | 36-1 | 36-2 | 36-3 | 36-4 |
|---|---|---|---|---|
| Oolong tea extract (g) | 1000 | 1000 | 1000 | 1000 |
| Sucrose (g/L) | 10 | 10 | 10 | 10 |
| Glucose (g/L) | 35 | 35 | 35 | 35 |
| RebD (g/L) | 0.208 | 0.208 | 0.208 | 0.208 |
| Sodium gluconate (g/L) | 0 | 0.948 | 0.948 | 0.948 |
| Phospholipid from rapeseed (mg) | 0 | 0 | 3.125 | 0 |
| Phospholipid from sunflower (mg) | 0 | 0 | 0 | 3.125 |
| Brix | 4.32 | 4.43 | 4.36 | 4.44 |
| Energy (Kcal/100 mL) | 17.28 | 17.72 | 17.44 | 17.76 |

A taste quality and texture of a test beverage (beverage samples 36-2 to 36-4)) were evaluated in the same manner as in Example 14 with reference to a control beverage (beverage sample 36-1). Results are shown in Table 68.

Table 68 Sensory test results

| Beverage sample | 36-2 | 36-3 | 36-4 |
|---|---|---|---|
| Total sweetness | 0.50 | 1.20 | 1.10 |
| Lingering | -0.10 | 0.20 | 0.20 |
| Thickness/Body | 0.50 | 0.90 | 0.90 |
| Mildness | 0.30 | 0.70 | 0.70 |
| Mouthfeel | 0.20 | 0.80 | 0.70 |
| Off-taste | 0.30 | 0.30 | 0.80 |

[Example 37] Influence of addition of phospholipid on taste quality and texture (24)

Components selected from sucrose, glucose, RebD, sodium gluconate, and phospholipid in amounts shown in Table 69 below were dissolved in 1000 g of green tea extract, so as to prepare a green tea beverage sample.

Table 69 Composition of green tea beverage

| Beverage sample | 37-1 | 37-2 | 37-3 | 37-4 | 37-5 | 37-6 | 37-7 |
|---|---|---|---|---|---|---|---|
| Green tea extract (g) | 1000 | 1000 | 1000 | 1000 | 1000 | 1000 | 1000 |
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0.379 | 1.328 | 0.379 | 0.379 | 1.328 | 1.328 |
| Phospholipid from rapeseed (mg) | 0 | 0 | 0 | 3.125 | 0 | 3.125 | 0 |
| Phospholipid from sunflower (mg) | 0 | 0 | 0 | 0 | 3.125 | 0 | 3.125 |
| Brix | 4.28 | 4.29 | 4.39 | 4.31 | 4.31 | 4.40 | 4.40 |
| Energy (Kcal/100 mL) | 17.12 | 17.16 | 17.56 | 17.24 | 17.24 | 17.60 | 17.60 |

A taste quality and texture of a test beverage (beverage samples 37-2 to 37-7)) were evaluated in the same manner as in Example 14 with reference to a control beverage (beverage sample 37-1). Results are shown in Table 70.

Table 70 Sensory test results

| Beverage sample | 37-2 | 37-3 | 37-4 | 37-5 | 37-6 | 37-7 |
|---|---|---|---|---|---|---|
| Total sweetness | 0.30 | 0.70 | 0.60 | 0.70 | 0.90 | 1.00 |
| Lingering | 0.10 | 0.10 | 0.20 | 0.30 | 0.40 | 0.40 |
| Thickness/Body | 0.40 | 0.60 | 0.60 | 0.60 | 0.70 | 1.00 |
| Mildness | 0.20 | 0.20 | 0.20 | 0.40 | 0.40 | 0.90 |
| Mouthfeel | 0.10 | 0.20 | 0.30 | 0.30 | 0.60 | 0.70 |
| Off-taste | 0.00 | -0.10 | 0.40 | 0.60 | 0.50 | 0.70 |

**Claims**

1. An oral composition comprising:

(a) a high-intensity sweetener in an amount corresponding to a sweetness intensity X1,
(b) 60 mg/100 mL or less of sodium, and
(c) a phospholipid in an amount less than a taste recognition threshold,

wherein the oral composition has a sweetness of a sweetness intensity X2 exhibited by the components (a) to (c), and 0.1 < X1 < X2 is satisfied.

2. The oral composition according to claim 1, wherein the phospholipid has a fatty acid having 14 or more carbon atoms.

3. The oral composition according to claim 1 or 2, having a sweetness of a sweetness intensity X3 exhibited by the components (a) and (b), wherein 0.1 < X1 < X3 < X2 is satisfied.

4. The oral composition according to any one of claims 1 to 3, further comprising a low-intensity sweetener.

5. The oral composition according to any one of claims 1 to 4, wherein the high-intensity sweetener comprises a high-intensity sweetener selected from a stevia extract, a Luo han guo extract, a steviol glycoside, a mogroside, and a combination thereof.

6. The oral composition according to claim 4 or 5, wherein the low-intensity sweetener comprises a low-intensity sweetener selected from glucose, sucrose, fructose, maltose, a high-fructose corn syrup, lactose, psicose, allose, tagatose, xylose, ribose, and a combination thereof.

7. The oral composition according to any one of claims 1 to 6, which is a beverage.

8. The oral composition according to claim 7, wherein the beverage is selected from a fruit- and vegetable-based beverage, a flavored water, a tea-based beverage, and a carbonated beverage.

9. A method for producing the oral composition according to any one of claims 1 to 9 comprising:

   (a) adding the high-intensity sweetener in an amount corresponding to a sweetness intensity X1,
   (b) adding the sodium to obtain a sodium content in the composition of 60 mg/100 mL or less,
   and
   (c) adding the phospholipid in an amount less than a taste recognition threshold.

10. A method for enhancing a sweetness of an oral composition provided by a high-intensity sweetener, the method comprising, in a production of an oral composition:

    (a) adding a high-intensity sweetener in an amount of a taste recognition threshold or more,
    (b) adding sodium to obtain a sodium content in the composition of 60 mg/100 mL or less, and
    (c) adding a phospholipid in an amount less than a taste recognition threshold.

11. An oral composition comprising:

    (a) about 20 to about 600 ppm of a high-intensity sweetener,
    (b) 60 mg/100 mL or less of sodium, and
    (c) less than about 250 $\mu$g/mL of a phospholipid.

Fig. 1

Fig. 2

Fig. 3

Fig. 4

Fig.5

Fig. 6

<div align="center">

**INTERNATIONAL SEARCH REPORT**

</div>

| International application No. |
| --- |
| **PCT/JP2021/048992** |

**A. CLASSIFICATION OF SUBJECT MATTER**

*A23F 3/16*(2006.01)i; *A23L 27/00*(2016.01)i; *A23L 2/60*(2006.01)i; *A23L 2/00*(2006.01)i; *A23L 2/02*(2006.01)i; *A23L 2/52*(2006.01)i
FI: A23L27/00 E; A23L27/00 101; A23L27/00 101A; A23L27/00 101Z; A23L2/60; A23L27/00 Z; A23L2/00 C; A23F3/16; A23L2/02 A; A23L2/02 B; A23L2/02 E; A23L2/00 T; A23L2/52

According to International Patent Classification (IPC) or to both national classification and IPC

**B. FIELDS SEARCHED**

Minimum documentation searched (classification system followed by classification symbols)

A23F3/16; A23L27/00; A23L2/60; A23L2/00; A23L2/02; A23L2/52

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X | US 6368651 B1 (THE NUTRASWEET COMPANY) 09 April 2002 (2002-04-09) claims, column 3, last paragraph, examples | 1-4, 6-11 |
| Y | claims, column 3, last paragraph, examples | 5-9 |
| X | JP 2016-529893 A (TATE & LYLE INGREDIENTS AMERICAS LIMITED LIABILITY COMPANY) 29 September 2016 (2016-09-29) claims, paragraph [0030], examples | 1-11 |
| Y | claims, paragraph [0030], examples | 5-9 |
| X | JP 2001-346555 A (SENJU SHOKUHIN KABUSHIKI KAISHA) 18 December 2001 (2001-12-18) example 2 | 11 |
| X | CN 103689741 A (SERICULTURE & AGRI-FOOD RESEARCH INSTITUTE GAAS) 02 April 2014 (2014-04-02) claims | 11 |

☑ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 February 2022** | **22 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

<div align="center">

65

</div>

**INTERNATIONAL SEARCH REPORT**

International application No.

**PCT/JP2021/048992**

| C. | DOCUMENTS CONSIDERED TO BE RELEVANT | | |
|---|---|---|---|
| Category* | Citation of document, with indication, where appropriate, of the relevant passages | | Relevant to claim No. |
| A | 鈴木 秀男, 植物油製造プロセスとリン回収, 生物工学, 2012, vol. 90, no. 8, pp. 488-492, (SUZUKI, Hideo. Seibutsu-kogaku Kaishi.), non-official translation (Vegetable oil manufacturing process and phosphorus recovery.)<br>p. 488 | | 1-11 |
| A | WO 2018/225817 A1 (SUNTORY HOLDINGS LIMITED) 13 December 2018 (2018-12-13)<br>claims | | 1-11 |
| A | JP 2003-210147 A (ASAHI SOFT DRINKS COMPANY, LIMITED) 29 July 2003 (2003-07-29)<br>paragraphs [0045], [0046] | | 1-11 |

Form PCT/ISA/210 (second sheet) (January 2015)

INTERNATIONAL SEARCH REPORT
Information on patent family members

International application No.

**PCT/JP2021/048992**

| Patent document cited in search report | | | Publication date (day/month/year) | Patent family member(s) | | | Publication date (day/month/year) |
|---|---|---|---|---|---|---|---|
| US | 6368651 | B1 | 09 April 2002 | WO | 2000/069283 | A1 | |
| | | | | AU | 5127800 | A | |
| JP | 2016-529893 | A | 29 September 2016 | US<br>claims, paragraph [0043], examples | 2016/0198749 | A1 | |
| | | | | WO | 2015/015210 | A1 | |
| | | | | EP | 3032966 | A | |
| JP | 2001-346555 | A | 18 December 2001 | (Family: none) | | | |
| CN | 103689741 | A | 02 April 2014 | (Family: none) | | | |
| WO | 2018/225817 | A1 | 13 December 2018 | US<br>claims | 2020/0205451 | A1 | |
| | | | | EP | 3636080 | A1 | |
| JP | 2003-210147 | A | 29 July 2003 | (Family: none) | | | |

Form PCT/ISA/210 (patent family annex) (January 2015)

## REFERENCES CITED IN THE DESCRIPTION

**Patent documents cited in the description**

- WO 2018225817 A
- WO 2020116624 A
- WO 2020116626 A
- WO 2020116627 A
- WO 2020116628 A
- WO 2020116633 A
- WO 2020116634 A
- WO 2020116637 A
- WO 2020116638 A
- WO 2020116639 A
- WO 2020116641 A
- JP 2020218723 A
- JP 2021144349 A

**Non-patent literature cited in the description**

- **ZHAO G. Q. ; ZHANG Y. ; HOON M. A. ; CHANDRASHEKAR J. ; ERLENBACH I. ; RYBA N. J. P. ; ZUKER1 C. S.** *Cell,* 2003, vol. 115, 255-266
- **LI X ; STASZEWSKI L ; XU H ; DURICK K ; ZOLLER M ; ADLER E.** *Proc Natl Acad Sci USA.,* 2002, vol. 99 (7), 4692-4696
- **FERNSTROM J. D. ; MUNGER S. D. ; SCLAFANI A. ; DE ARAUJO 1. E. ; ROBERTS A. ; MOLINARY S.** *J. Nutr.,* 2012, vol. 142, 11345-11415
- **TOYOTA.** Construction of a Screening Test for Gustatory Function in Four Basic Tastes. *The journal of Japanese Society of Stomatognathic Function,* 2014, vol. 20, 115-129
- *Eur J Clin Nutr,* 2004, vol. 58, 629-636
- **YUKI YAMAUCHI et al.** WHOLE MOUTH GUSTATORY TEST (PART1) - BASIC CONSIDERATIONS AND PRINCIPAL COMPONENT ANALYSIS. *Journal of The Oto-Rhino-Laryngological Society of Japan,* 1995, vol. 98 (1), 119-129
- Comparisons of the taste sensitivity between three generations. **REIKO OHMORI.** The bulletin of the Faculty of Education. Utsunomiya University, 2013, vol. 63, 201-210